# EUROPEAN PATENT APPLICATION

(11) **EP 4 827 199 A1**
(43) Date of publication of application: **21.10.2026**
(21) Application number: 24933381.6
(22) Date of filing: 03.04.2024
(51) Int. Cl.: H04W 72/0446

(54) **UPLINK CHANNEL TRANSMISSION METHOD AND APPARATUS, DEVICE, MEDIUM, AND PROGRAM PRODUCT**

(71) Applicant: GUANGDONG OPPO MOBILE TELECOMMUNICATIONS CORP., LTD., Dongguan, Guangdong 523860 (CN)
(72) Inventor: ZHANG, Yi, Dongguan, Guangdong 523860 (CN); LIN, Yanan, Dongguan, Guangdong 523860 (CN)
(74) Representative: Grassi, Stefano
(86) International application number: PCT/CN2024/085884
(87) International publication number: WO 2025/208425

(57) **Abstract**

The present application relates to the technical field of communications, and provides an uplink channel transmission method and apparatus, a device, a medium, and a program product. The method is executed by a terminal device, and the method includes: transmitting an uplink channel according to a target parameter set, wherein the uplink channel is a repeatedly transmitted uplink channel, the target parameter set is a first parameter set and/or a second parameter set, the first parameter set is associated with a first type of time-domain resource, and the second parameter set is associated with a second type of time-domain resource. The method enables a terminal device to use different target parameter sets to transmit an uplink channel when facing different types of time-domain resources.

## Description

### TECHNICAL FIELD

The present disclosure relates to the technical field of communications, and in particular, relates to an uplink channel transmission method and apparatus, device, medium and program product.

### BACKGROUND

A slot may simultaneously include SubBand Full Duplex (SBFD) symbols and non-SBFD symbols. A slot of this type is referred to as a mixed-symbol slot.

However, if uplink channel resources are respectively configured on SBFD symbols and non-SBFD symbols, for an uplink channel repeatedly transmitted in a plurality of slots, how to determine parameters such as time-frequency resources corresponding to the uplink channel is a technical problem to be urgently solved.

### SUMMARY

The present disclosure provides an uplink channel transmission method and apparatus, device, medium, and program product. The technical solution includes at least the following contents.

In one aspect of embodiments of the present disclosure, an uplink channel transmission method is provided. The method is performed by a terminal device and includes: transmitting an uplink channel according to a target parameter set, wherein the uplink channel is a repeatedly transmitted uplink channel, the target parameter set is a first parameter set and/or a second parameter set, the first parameter set is associated with a first type of time-domain resource, and the second parameter set is associated with a second type of time-domain resource.

In another aspect of embodiments of the present disclosure, an uplink channel resource determining method is provided. The method is performed by a terminal device and includes: determining a target uplink channel resource among uplink channel resources determined through a first parameter set and/or a second parameter set, wherein the first parameter set corresponds to a first type of time-domain resource, and the second parameter set corresponds to a second type of time-domain resource.

In another aspect of embodiments of the present disclosure, an uplink channel receiving method is provided. The method is performed by a network device and includes: receiving an uplink channel according to a target parameter set, wherein the uplink channel is an uplink channel repeatedly transmitted by a terminal device, the target parameter set is a first parameter set and/or a second parameter set, the first parameter set is associated with a first type of time-domain resource, and the second parameter set is associated with a second type of time-domain resource.

In another aspect of embodiments of the present disclosure, an uplink channel resource indicating method is provided. The method is performed by a network device and includes: sending an uplink channel resource IDentification (ID), wherein the uplink channel resource ID is used to indicate a target uplink channel resource among uplink channel resources determined through a first parameter set and/or a second parameter set, wherein the first parameter set corresponds to a first type of time-domain resource, and the second parameter set corresponds to a second type of time-domain resource.

In another aspect of embodiments of the present disclosure, an uplink channel transmission apparatus is provided, which includes: a transmission module configured to transmit an uplink channel according to a target parameter set; wherein the uplink channel is a repeatedly transmitted uplink channel, the target parameter set is a first parameter set and/or a second parameter set, the first parameter set is associated with a first type of time-domain resource, and the second parameter set is associated with a second type of time-domain resource.

In another aspect of embodiments of the present disclosure, an uplink channel resource determining apparatus is provided, which includes: a determining module configured to determine a target uplink channel resource among uplink channel resources determined through a first parameter set and/or a second parameter set, wherein the first parameter set corresponds to a first type of time-domain resource, and the second parameter set corresponds to a second type of time-domain resource.

In another aspect of embodiments of the present disclosure, an uplink channel receiving apparatus is provided, which includes: a receiving module configured to receive an uplink channel according to a target parameter set, wherein the uplink channel is an uplink channel repeatedly transmitted by a terminal device, the target parameter set is a first parameter set and/or a second parameter set, the first parameter set is associated with a first type of time-domain resource, and the second parameter set is associated with a second type of time-domain resource.

In another aspect of embodiments of the present disclosure, an uplink channel resource indicating apparatus is provided, which includes: a sending module configured to send an uplink channel resource ID, wherein the uplink channel resource ID is used to indicate a target uplink channel resource among uplink channel resources determined through a first parameter set and/or a second parameter set, wherein the first parameter set corresponds to a first type of time-domain resource, and the second parameter set corresponds to a second type of time-domain resource.

In another aspect of embodiments of the present disclosure, a terminal device is provided. The terminal device includes: a processor; a transceiver connected to the processor; and a memory storing executable instructions of the processor. The processor is configured to load and execute the executable instructions to implement the uplink channel transmission method or the uplink channel resource determining method of any of the above aspects.

In another aspect of embodiments of the present disclosure, a network device is provided. The network device includes: a processor; a transceiver connected to the processor; and a memory storing executable instructions of the processor. The processor is configured to load and execute the executable instructions to implement the uplink channel receiving method or the uplink channel resource indicating method of any of the above aspects.

In another aspect of embodiments of the present disclosure, a computer-readable storage medium is provided. The computer-readable storage medium has stored at least one program, and the at least one program may be loaded and executed by a processor to implement the uplink channel transmission method, the uplink channel resource determining method, the uplink channel receiving method, or the uplink channel resource indicating method of any of the above aspects.

In another aspect of embodiments of the present disclosure, a chip is provided. The chip includes a programmable logic circuit and/or program instructions, and when the chip runs on a terminal device or a network device, is configured to implement the uplink channel transmission method, the uplink channel resource determining method, the uplink channel receiving method, or the uplink channel resource indicating method of any of the above aspects.

In another aspect of embodiments of the present disclosure, a computer program product or computer program is provided. The computer program product or computer program includes computer instructions, the computer instructions are stored in a computer-readable storage medium, a processor may obtain the computer instructions from the computer-readable storage medium and execute the computer instructions to implement the uplink channel transmission method, the uplink channel resource determining method, the uplink channel receiving method, or the uplink channel resource indicating method of any of the above aspects.

The technical solutions provided by the embodiments of the present disclosure may include the following beneficial effects: an uplink channel is transmitted according to a target parameter set, wherein the uplink channel is a repeatedly transmitted uplink channel, the target parameter set is a first parameter set and/or a second parameter set, the first parameter set is associated with a first type of time-domain resource, and the second parameter set is associated with a second type of time-domain resource, so that a terminal device may use different target parameter sets to transmit the uplink channel when facing different types of time-domain resources.

### BRIEF DESCRIPTION OF THE DRAWINGS

To describe the technical solutions in the embodiments of the present disclosure more clearly, the following briefly introduces the accompanying drawings required for describing the embodiments. The accompanying drawings in the following description are merely some embodiments of the present disclosure, and a person of ordinary skill in the art may obtain other drawings according to these accompanying drawings without creative efforts.
FIG. 1 illustrates a schematic diagram of SBFD provided in the related art;
FIG. 2 illustrates a schematic diagram of a frame structure provided in the related art;
FIG. 3 illustrates a schematic diagram of Physical Uplink Control CHannel (PUCCH) repetition transmission provided in the related art;
FIG. 4 illustrates a schematic diagram of a PUCCH resource determination manner provided in the related art;
FIG. 5 illustrates a schematic diagram of a mobile communication system according to an exemplary embodiment of the present disclosure;
FIG. 6 illustrates a schematic diagram of PUCCH resource offset according to an exemplary embodiment of the present disclosure;
FIG. 7 illustrates a schematic diagram of PUCCH resources according to an exemplary embodiment of the present disclosure;
FIG. 8 illustrates a schematic diagram of PUCCH resources according to an exemplary embodiment of the present disclosure;
FIG. 9 illustrates a schematic diagram of determining PUCCH resources according to an exemplary embodiment of the present disclosure;
FIG. 10 illustrates a flowchart of an uplink channel resource determining method according to an exemplary embodiment of the present disclosure;
FIG. 11 illustrates a schematic diagram of determining a target PUCCH resource according to an exemplary embodiment of the present disclosure;
FIG. 12 illustrates a schematic diagram of determining a target PUCCH resource according to an exemplary embodiment of the present disclosure;
FIG. 13 illustrates a schematic diagram of determining a target PUCCH resource according to an exemplary embodiment of the present disclosure;
FIG. 14 illustrates a flowchart of an uplink channel transmission method according to an exemplary embodiment of the present disclosure;
FIG. 15 illustrates a schematic diagram of an uplink channel transmission method according to an exemplary embodiment of the present disclosure;
FIG. 16 illustrates a schematic diagram of an uplink channel transmission method according to an exemplary embodiment of the present disclosure;
FIG. 17 illustrates a schematic diagram of an uplink channel transmission method according to an exemplary embodiment of the present disclosure;
FIG. 18 illustrates a flowchart of an uplink channel transmission method according to an exemplary embodiment of the present disclosure;
FIG. 19 illustrates a schematic diagram of determining PUCCH resources according to an exemplary embodiment of the present disclosure;
FIG. 20 illustrates a schematic diagram of determining PUCCH resources according to an exemplary embodiment of the present disclosure;
FIG. 21 illustrates a flowchart of an uplink channel receiving method according to an exemplary embodiment of the present disclosure;
FIG. 22 illustrates a flowchart of an uplink channel resource indicating method according to an exemplary embodiment of the present disclosure;
FIG. 23 is a block diagram of an uplink channel transmission apparatus according to an exemplary embodiment of the present disclosure;
FIG. 24 is a block diagram of an uplink channel resource determining apparatus according to an exemplary embodiment of the present disclosure;
FIG. 25 is a block diagram of an uplink channel receiving apparatus according to an exemplary embodiment of the present disclosure;
FIG. 26 is a block diagram of an uplink channel resource indicating apparatus according to an exemplary embodiment of the present disclosure;
FIG. 27 is a structural schematic diagram of a terminal device according to an exemplary embodiment of the present disclosure; and
FIG. 28 is a structural schematic diagram of a network device according to an exemplary embodiment of the present disclosure.

### DETAILED DESCRIPTION

To make the objectives, technical solutions, and advantages of the present disclosure clearer, the implementations of the present disclosure is to be further described in detail below with reference to the accompanying drawings. Exemplary embodiments are described in detail herein, and examples of the embodiments are shown in the accompanying drawings. When the following description refers to the accompanying drawings, unless otherwise indicated, same numerals in different drawings denote same or similar elements. The implementations described in the exemplary embodiments below do not represent all implementations consistent with the present disclosure. Instead, they are merely examples of apparatuses and methods consistent with some aspects of the present disclosure as detailed in the appended claims.

The terms used in the present disclosure are merely for the purpose of describing specific embodiments, and are not intended to limit the present disclosure. The singular forms "a," "an," "the," and "said" used in the present disclosure and the appended claims are also intended to include plural forms unless the context clearly indicates otherwise. It should also be understood that the term "and/or" as used herein means and encompasses any and all possible combinations of one or more associated listed items.

It should be understood that although the terms first, second, third, etc. may be used in the present disclosure to describe various types of information, the information should not be limited by these terms. These terms are only used to distinguish information of the same type. For example, without departing from the scope of the present disclosure, first information may also be referred to as second information, and similarly, second information may also be referred to as first information. Depending on the context, the word "if" as used herein may be interpreted as "when," "upon," "in response to determining."

The technical solutions described in some embodiments of the present disclosure may be applicable to various communication systems, for example: a Long Term Evolution (LTE) system, an Advanced Long Term Evolution (LTE-A) system, a New Radio (NR) system, an evolved system of the NR system, an LTE-based access to unlicensed spectrum (LTE-U) system, an NR-based access to unlicensed spectrum (NR-U) system, a Non-Terrestrial Networks (NTN) system, a Universal Mobile Telecommunication System (UMTS), Wireless Local Area Networks (WLAN), Wireless Fidelity (Wi-Fi), a 5th-Generation (5G) system, a cellular Internet of Things system, a cellular passive Internet of Things system, and may also be applicable to an evolved system subsequent to the 5G NR system, and may also be applicable to a 6G and subsequent evolved system.

It should be understood that in some embodiments of the present disclosure, "5G" may also be referred to as "5G NR" or "NR."

It should be understood that in the description of the embodiments of the present disclosure, the term "correspond" may indicate a direct correspondence or an indirect correspondence between two parties, or may indicate an association relationship between two parties, or may indicate an indicating/indicated, configuring/configured, or other relationship.

In the embodiments of the present disclosure, "predefined" may be implemented by pre-saving corresponding codes, tables, or other manners usable for indicating relevant information in a device (for example, including a terminal device and a network device). The present disclosure does not limit a specific implementation thereof. For example, the term "predefined" may be understood as being defined in a protocol.

In the embodiments of the present disclosure, "protocol" may refer to a standard protocol in the field of communications, which for example, may include an LTE protocol, an NR protocol, and a related protocol applied in a future communication system. This is not limited in the present disclosure.

Next, SubBand Full Duplex (SBFD) is introduced.

To overcome problems in Time Division Duplexing (TDD) technology such as weak uplink coverage, large uplink latency, and insufficient uplink capacity caused by limited uplink (UL) resource allocation, SBFD technology is proposed. SBFD technology refers to a technology in which data may be transmitted and received simultaneously on different subbands in a same subframe or a same slot or a same symbol. SBFD technology is mainly used on a network device side, and a terminal device (User Equipment, UE) side maintains a current state, that is, only transmits data or only receives data in a same subframe or a same slot or a same symbol. SBFD technology may also be referred to as Cross Division Duplex (XDD) technology.

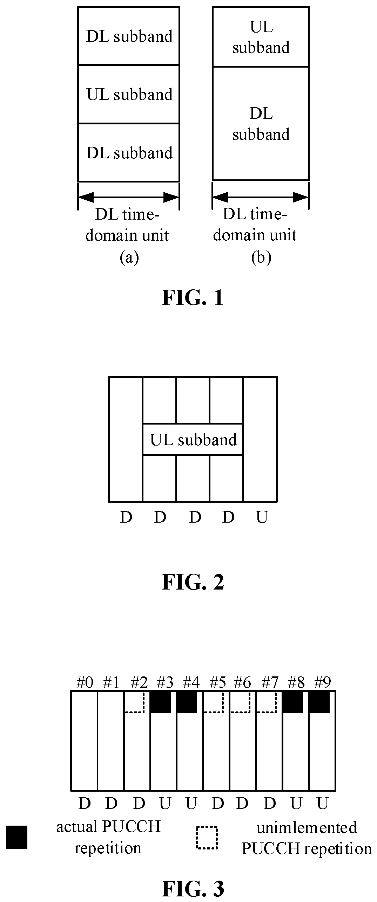

Exemplarily, as shown in FIG. 1, SBFD technology configures a part of frequency-domain resources corresponding to a downlink (DL) time-domain unit as an uplink subband. As shown in FIG. 1(a), a middle subband of frequency-domain resources corresponding to a downlink time-domain unit is configured as an uplink subband. Alternatively, as shown in FIG. 1(b), an upper subband of frequency-domain resources corresponding to a downlink time-domain unit is configured as an uplink subband.

According to relevant standard provisions, an SBFD subband (uplink subband and/or downlink subband) can only be configured on downlink symbols and/or flexible symbols configured in TDD-UL-DL-ConfigCommon. FIG. 2 shows a schematic diagram of a frame structure provided in the related art. The middle subband from the second downlink symbol (denoted as D) to the fourth downlink symbol shown in FIG. 2 is configured as an uplink subband, and no SBFD subband is configured on an uplink symbol (denoted as U).

PUCCH resources are generally configured at upper and lower edges of a channel bandwidth, so as to avoid fragmentation of uplink resources and allow other resources to be used for PUSCH transmission. Therefore, if the above configuration rule is still followed, PUCCH resources will be configured at different positions for an SBFD slot (a slot including only SBFD symbols) and a non-SBFD slot (a slot including only non-SBFD symbols). In addition, for SBFD symbols and non-SBFD symbols, interference encountered by uplink links differs, resulting in different uplink link qualities. Moreover, the number and direction of transmit/receive antennas or panels may also differ, which necessitates different parameters such as resources and power control for PUCCH transmission on SBFD symbols and non-SBFD symbols. Therefore, whether and how to separately configure resources, frequency hopping parameters, power control parameters, and spatial beam parameters for SBFD symbols and non-SBFD symbols remains an open issue.

Next, the Physical Uplink Control CHannel (PUCCH) is introduced.

PUCCH-related parameters are configured through a PUCCH configuration (PUCCH-Config). The PUCCH-related parameters include at least one of the following:
- a PUCCH resource set and PUCCH resources, including: time-domain resources (startingSymbolIndex, nrofSymbols), a number of repetitions (nrofSlots or pucch-RepetitionNrofSlots-r17), frequency-domain resources (startingPRB, secondHopPRB), a maximum code rate (maxCodeRate), Orthogonal Cover Code (OCC) parameters, and the like;
- a configuration of time-domain offset from Physical Downlink Shared CHannel (PDSCH) to Hybrid Automatic Repeat reQuest ACKnowledgment (HARQ-ACK): dl-DataToUL-ACK;
- a scheduling request configuration: SchedulingRequestResourceConfig;
- a PUCCH spatial parameter configuration: PUCCH-SpatialRelationInfo; or
- a PUCCH power control configuration: PUCCH-PowerControl.

For a PUCCH repetition procedure, a terminal device may be indicated to transmit a PUCCH in ${N}_{PUCCH}^{repeat}$ slots. If a corresponding PUCCH resource is indicated by Downlink Control Information (DCI), and a corresponding PUCCH resource configuration includes a parameter pucch-RepetitionNrofSlots, then ${N}_{PUCCH}^{repeat}$ is provided by the parameter pucch-RepetitionNrofSlots; otherwise, ${N}_{PUCCH}^{repeat}$ is provided by the parameter nrofSlots.

When ${N}_{PUCCH}^{repeat} > 1$:
- the terminal device repeats PUCCH transmission in ${N}_{PUCCH}^{repeat}$ slots;
- each slot in the ${N}_{PUCCH}^{repeat}$ slots has a same number of symbols for PUCCH transmission, the number of symbols being provided by the parameter nrofsymbols; and has a same first symbol position (first symbol), which is provided by the parameter startingSymbolIndex;
- a first Physical Resource Block (PRB) position (first PRB) of a first hop and a second hop of the PUCCH transmission is provided by the parameter startingPRB and the parameter secondHopPRB.

For unpaired spectrum, the UE determines the ${N}_{PUCCH}^{repeat}$ slots for a PUCCH transmission starting from a slot indicated to the UE as described in clause 9.2.3 for HARQ-ACK reporting, or a slot determined as described in clause 9.2.4 for Scheduling Request (SR) reporting or in clause 5.2.1.4 of [6, TS 38.214] for Channel-State Information (CSI) reporting and having
- an UL symbol, as described in clause 11.1, or a flexible symbol that is not an SS/PBCH block symbol provided by *startingSymbolIndex* as a first symbol, and
- consecutive UL symbols, as described in clause 11.1, or flexible symbols that are not SS/PBCH block symbols, starting from the first symbol, equal to or larger than a number of symbols provided by nrofSymbols.

FIG. 3 illustrates a schematic diagram of PUCCH repetition provided in the related art. Under a legacy TDD frame structure (without support of SBFD), a PUCCH repetition process is as shown in FIG. 3. Assume ${N}_{PUCCH}^{repeat} = 4$, and a first repetition of the PUCCH is configured to start from slot #2. Since slot #2 is a downlink slot (DL slot, denoted by D), symbols therein are downlink symbols, which do not meet the above requirement that the first symbol is an uplink symbol or a flexible symbol and there are sufficient consecutive uplink symbols or flexible symbols. Therefore, the first repetition of the PUCCH in slot #2 is postponed to a subsequent slot. That is, starting from slot #2, transmission is completed through ${N}_{PUCCH}^{repeat} = 4$ slots with PUCCH repetition capability. Eventually, four PUCCH repetitions are completed in slot #3, slot #4, slot #8, and slot #9, respectively.

A manner of determining a PUCCH time-domain position is: determining a time-domain position where a PUCCH is located according to a time-domain position of a PDSCH and a time-domain offset from the PDSCH to HARQ-ACK. In a case of multiple PUCCH repetitions, a time-domain position for a first repetition of the PUCCH is determined according to the time-domain position of the PDSCH and the time-domain offset from the PDSCH to HARQ-ACK.

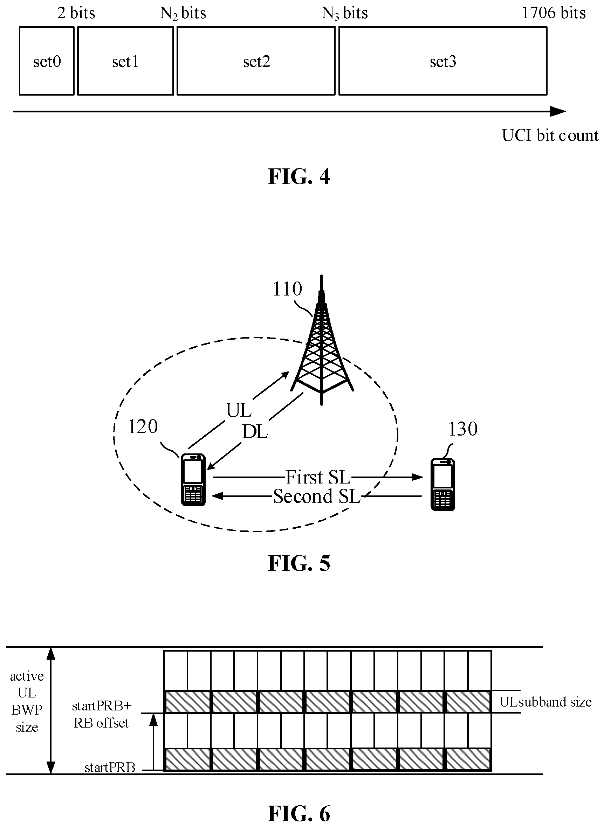

FIG. 4 illustrates a schematic diagram of a PUCCH resource determination manner provided in the related art. A network device pre-configures K PUCCH resource sets for a terminal device, where K is a positive integer, and each PUCCH resource set supports a different range of Uplink Control Information (UCI) bit counts. Taking K=4 as an example, 4 PUCCH resource sets are configured: set 0, set 1, set 2, and set 3. Each set may include a same or different PUCCH format. As shown in FIG. 4, set 0 carries 2 UCI bits, set 1 carries N2-2 UCI bits, the UCI bit count carried by Set 2 is N3-N2 bits, and set 3 carries 1706-N3 UCI bits, where N2 and N3 are pre-configured values. The terminal device determines a PUCCH resource set from the K PUCCH resource sets according to the UCI bit count to be transmitted, and then determines a PUCCH resource from the PUCCH resource set according to a PUCCH Resource Indicator (PRI) indicated in DCI.

FIG. 5 illustrates a schematic diagram of a mobile communication system according to an exemplary embodiment of the present disclosure. The mobile communication system includes a network device 110 and a terminal device 120, and may or may not further include a terminal device 130. The present disclosure does not limit this.

The network device 110 in the present disclosure provides a wireless communication function. The network device 110 includes but is not limited to: an Evolved Node B (eNB), a Radio Network Controller (RNC), a Node B (NB), a Base Station Controller (BSC), a Base Transceiver Station (BTS), a home base station (for example, a Home Evolved Node B or a Home Node B, HNB), a BaseBand Unit (BBU), an Access Point (AP) in a Wireless Fidelity (Wi-Fi) system, a wireless relay node, a wireless backhaul node, a Transmission Point (TP) or a Transmission and Reception Point (TRP), or may be a Next Generation Node B (gNB) or a transmission point (TRP or TP) in a 5th Generation (5G) mobile communication system, or one or a group (including a plurality of antenna panels) of antenna panels of a base station in a 5G system, or a network node constituting a gNB or a transmission point, such as a BaseBand Unit (BBU) or a Distributed Unit (DU), or a base station in a Beyond Fifth Generation (B5G) or 6th Generation (6G) mobile communication system, or a Core Network (CN), Fronthaul, Backhaul, a Radio Access Network (RAN), a network slice, or a serving cell, a Primary Cell (PCell), a Primary Secondary Cell (PSCell), a Special Cell (SpCell), a Secondary Cell (SCell), a neighboring cell, or the like of the terminal device.

The terminal device 120 in the present disclosure is also referred to as User Equipment (UE), an access terminal, a subscriber unit, a subscriber station, a mobile station, a mobile console, a remote station, a remote terminal, a mobile device, a user terminal, a terminal, a wireless communication device, a user agent, or a user apparatus. The terminal includes but is not limited to: a handheld device, a wearable device, a vehicle-mounted device, and an Internet of Things device, for example: a mobile phone, a tablet computer, an e-book reader, a laptop portable computer, a desktop computer, a television, a game console, a Mobile Internet Device (MID), an Augmented Reality (AR) terminal, a Virtual Reality (VR) terminal, a Mixed Reality (MR) terminal, an Extended Reality (XR) terminal, a Baffle Reality (BR) terminal, a Cinematic Reality (CR) terminal, a Deceive Reality (DR) terminal, a wearable device, a handle, an electronic tag, a controller, a wireless terminal in Industrial Control, a wireless terminal in Self Driving, a wireless terminal in Remote Medical, a wireless terminal in a Smart Grid, a wireless terminal in Transportation Safety, a wireless terminal in a Smart City, a wireless terminal in a Smart Home, a wireless terminal in Remote Medical Surgery, a cellular phone, a cordless phone, a Session Initiation Protocol (SIP) phone, a Wireless Local Loop (WLL) station, a Personal Digital Assistant (PDA), a Set Top Box (STB), a Customer Premise Equipment (CPE), or the like.

In some embodiments, the network device 110 and the terminal device 120 may communicate with each other through an air interface technology, for example, a Uu interface.

Exemplarily, there are two communication scenarios between the network device 110 and the terminal device 120: an uplink communication scenario and a downlink communication scenario. Uplink communication, or referred to as uplink transmission, means sending a signal or data to the network device 110; and downlink communication, or referred to as downlink transmission, means sending a signal or data to the terminal device 120.

In some embodiments, the terminal device 120 and the terminal device 130 may communicate with each other through an air interface technology, for example, a PC5 interface.

Exemplarily, there are two communication scenarios between the terminal device 120 and the terminal device 130: a first sidelink (SL) communication scenario and a second sidelink communication scenario. The first sidelink communication means the terminal device 120 sends a signal to the terminal device 130; and the second sidelink communication means the terminal device 130 sends a signal to the terminal device 120.

In some embodiments, both the terminal device 120 and the terminal device 130 are within network coverage and located in a same cell, or both are within network coverage but located in different cells, or the terminal device 120 is within network coverage but the terminal device 130 is outside network coverage.

In some embodiments of the present disclosure, "NR" may also be referred to as a 5G NR system or a 5G system. The 5G mobile communication system may include Non-StandAlone (NSA) and/or StandAlone (SA).

The technical solutions provided by the embodiments of the present disclosure may also be applied to Machine Type Communication (MTC), Long Term Evolution-Machine (LTE-M), a Device to Device (D2D) network, a Machine to Machine (M2M) network, an Internet of Things (IoT) network, or other networks. The IoT network may include, for example, an Internet of Vehicles. Communication manners in the Internet of Vehicles system are collectively referred to as Vehicle to X (V2X, where X may represent anything), and may include, for example: Vehicle to Vehicle (V2V) communication, Vehicle to Infrastructure (V2I) communication, Vehicle to Pedestrian (V2P) communication, or Vehicle to Network (V2N) communication.

The mobile communication system provided by the embodiments of the present disclosure may be applied to at least one of but not limited to the following communication scenarios: an uplink communication scenario, a downlink communication scenario, or a sidelink communication scenario.

Taking an uplink channel being a PUCCH as an example, when SBFD technology is supported, for a slot including SBFD symbols and non-SBFD symbols, configuration information of a first parameter set and a second parameter set are required for a terminal device to determine a PUCCH resource therein. The first parameter set is associated with a first type of time-domain resource (SBFD symbols), and the second parameter set is associated with a second type of time-domain resource (non-SBFD symbols).

For the terminal device, in some embodiments, the terminal device may receive configuration information for determining the first parameter set and the second parameter set.

In some embodiments, receiving the configuration information for determining the first parameter set and the second parameter set includes: receiving the first parameter set and the second parameter set; or receiving the first parameter set and an offset value, where configuration parameters of the first parameter set, after being offset based on the offset value, correspond to the second parameter set; or receiving a set of configuration parameters, where the set of configuration parameters includes the first parameter set and the second parameter set.

For the network device, in some embodiments, configuration manners of the configuration information include at least one of the following three manners:
Configuration manner 1: the network device respectively configures the first parameter set and the second parameter set;
Configuration manner 2: the network device configures the first parameter set, and configuration parameters corresponding to the second parameter set are obtained by offsetting the first parameter set based on an offset value; or
Configuration manner 3: the network device configures a set of configuration parameters, where the set of configuration parameters includes two parts, where a first part of configuration parameters corresponds to the first parameter set, and a second part of configuration parameters corresponds to the second parameter set.

In some embodiments, the offset value is an RB offset or an RB offset list. Taking the uplink channel being a PUCCH as an example, the RB offset is used to adjust a frequency-domain resource of a PUCCH resource. Taking the first parameter set corresponding to SBFD symbols and the second parameter set corresponding to non-SBFD symbols as an example, the RB offset is a frequency domain offset of a PUCCH resource located on SBFD symbols relative to a PUCCH resource located on non-SBFD symbols, or a frequency domain offset of a PUCCH resource located on non-SBFD symbols relative to a PUCCH resource located on SBFD symbols.

Taking the uplink channel being a PUCCH as an example, FIG. 6 illustrates a schematic diagram of PUCCH resource offset according to an exemplary embodiment of the present disclosure. In some embodiments, a starting position of a PUCCH resource corresponding to non-SBFD symbols is a configured startingRB, and a starting position of a PUCCH resource corresponding to SBFD symbols is (startingPRB+RB_offset) mod (UL_subband size ∩ active UL BWP size), where startingPRB is a starting physical resource block (PRB), RB_offset is an RB offset, UL_subband size is a size of an uplink subband, active UL BWP size is a size of an active uplink bandwidth part (BWP), ∩ is an intersection operation, and mod is a modulo operation. The PUCCH resource located on SBFD symbols occupies 1 RB or n RBs starting from the starting position, where n is a value of the parameter nrofPRBs indicating the number of PRBs.

In some embodiments, uplink channel resources corresponding to different parameter sets occupy a same number of time-domain resources.

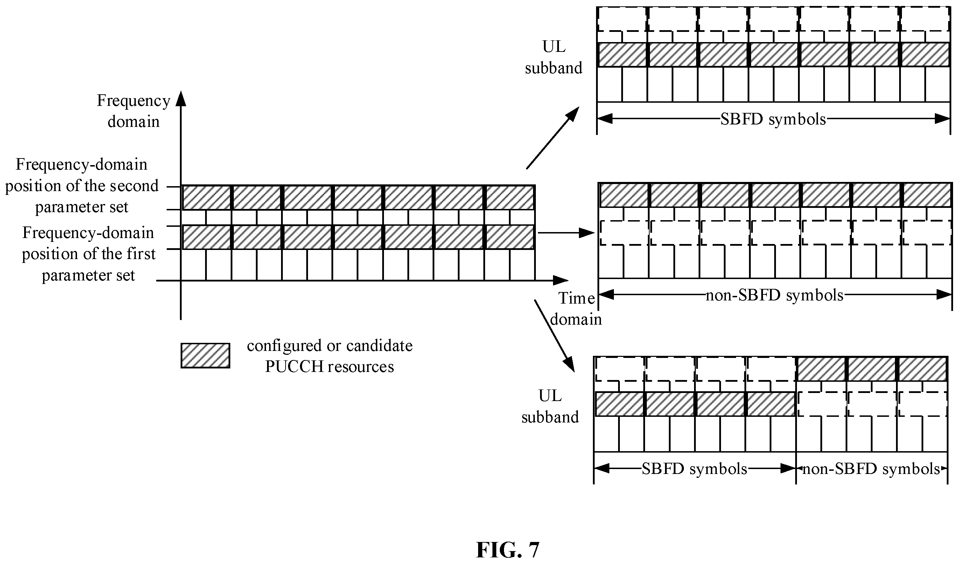

Taking the uplink channel resource being a PUCCH resource and the time-domain resource being a symbol as an example, FIG. 7 illustrates a schematic diagram of PUCCH resources according to an exemplary embodiment of the present disclosure. Taking PUCCH resources in one slot as an example, at a frequency-domain position of the first parameter set, seven PUCCH resources are configured, each PUCCH resource occupying two symbols; at a frequency-domain position of the second parameter set, seven PUCCH resources are configured, each PUCCH resource occupying two symbols. The first parameter set and the second parameter set share a same time-domain resource parameter, and meanwhile the first parameter set and the second parameter set may be applicable to slots having different symbol types. For example, when a slot includes only SBFD symbols, a target PUCCH resource is determined among seven PUCCH resources configured at a middle position by the first parameter set; when a slot includes only non-SBFD symbols, a target PUCCH resource is determined among seven PUCCH resources configured at an upper position by the second parameter set; when a slot includes SBFD symbols and non-SBFD symbols, taking SBFD symbols occupying eight symbols and non-SBFD symbols occupying six symbols as an example, the first parameter set is adopted to determine a target PUCCH resource (one of the first fourt shaded blocks in the figure) for SBFD symbols, and the second parameter set is adopted to determine a target PUCCH resource (one of the last three shaded blocks in the figure) for non-SBFD symbols.

In some embodiments, uplink channel resources corresponding to different parameter sets occupy different numbers of time-domain resources.

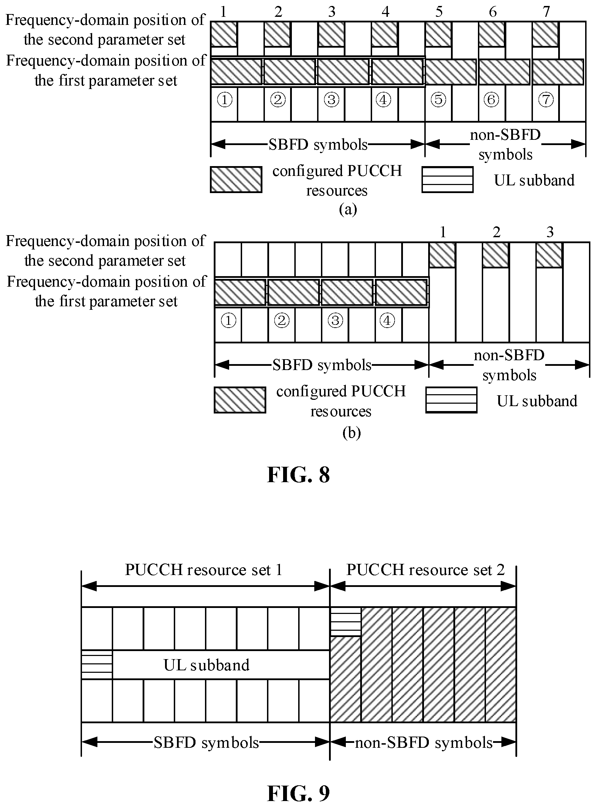

Taking the uplink channel resource being a PUCCH resource and the time-domain resource being a symbol as an example, FIG. 8 illustrates a schematic diagram of PUCCH resources according to an exemplary embodiment of the present disclosure. In the part (a) of FIG. 8, at a frequency-domain position of the first parameter set, there are seven PUCCH resources (shaded blocks ①②③④⑤⑥⑦), each PUCCH resource occupying two symbols; at a frequency-domain position of the second parameter set, there are seven PUCCH resources (shaded blocks 1234567), each PUCCH resource occupying one symbol. The shaded blocks ⑤⑥⑦ and the shaded blocks 1234 are configured PUCCH resources but are not available PUCCH resources.

In the part (b) of FIG. 8, at a frequency-domain position of the first parameter set, there are four PUCCH resources (shaded blocks ①②③④), each PUCCH resource occupying two symbols; at a frequency-domain position of the second parameter set, there are three PUCCH resources (shaded blocks 123), each PUCCH resource occupying one symbol. Each shaded block represents an available PUCCH resource configured by the network device.

A PUCCH resource determination manner is: first determining a slot where HARQ-ACK is located according to a PDSCH-to-HARQ-ACK time-domain offset configuration in DCI sent from a network device, and then indicating a PUCCH resource in the slot through a PRI in the DCI, therefore, when a slot includes both SBFD symbols and non-SBFD symbols, before reading the PRI in the DCI, it is not known whether the indicated PUCCH resource is located on SBFD symbols or non-SBFD symbols. FIG. 9 illustrates a schematic diagram of determining PUCCH resources according to an exemplary embodiment of the present disclosure. Assume that a PUCCH resource set 1 is configured for SBFD symbols, and a PUCCH resource set 2 is configured for non-SBFD symbols. The first horizontally-filled square in FIG. 9 is a first PUCCH resource in the PUCCH resource set 1, and the second horizontally-filled square is a first PUCCH resource in the PUCCH resource set 2. For the terminal device, assume that a PRI value in received DCI is 000, and the 000 is used to indicate a first PUCCH resource, then the terminal device cannot determine whether the first PUCCH resource is a PUCCH resource in the PUCCH resource set 1 or the PUCCH resource set 2. That is, both the PUCCH resource located on SBFD symbols and the PUCCH resource located on non-SBFD symbols may be the PUCCH resource that the network device intends to indicate.

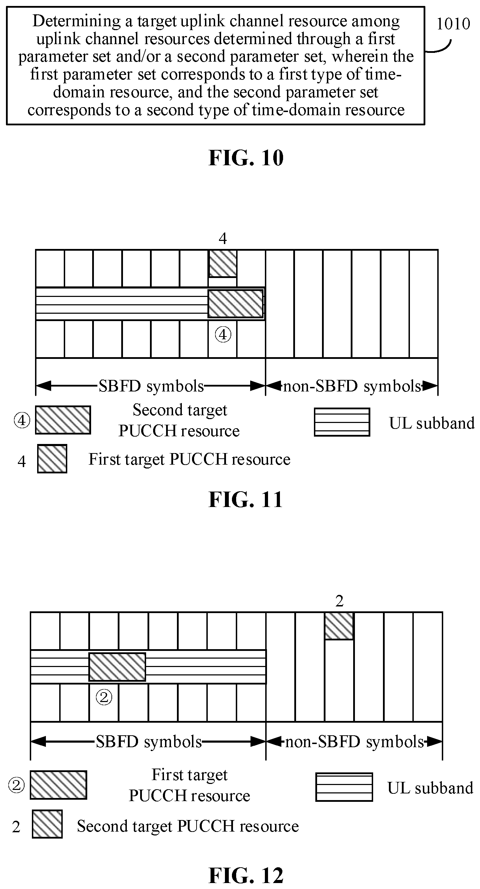

To solve the above problem, the embodiments of the present disclosure provide an uplink channel resource determining method. FIG. 10 illustrates a flowchart of an uplink channel resource determining method according to an exemplary embodiment of the present disclosure. The method is performed by a terminal device and includes:
**Step 1010:** determining a target uplink channel resource among uplink channel resources determined through a first parameter set and/or a second parameter set, wherein the first parameter set corresponds to a first type of time-domain resource, and the second parameter set corresponds to a second type of time-domain resource.

In some embodiments, the uplink channel is a repeatedly transmitted uplink channel, and the target uplink channel resource is a resource for a first repetition of the uplink channel.

In some embodiments, the uplink channel is not a repeatedly transmitted uplink channel, and the target uplink channel resource is an only resource for transmission of the uplink channel. In this embodiment, an example in which the uplink channel is not a repeatedly transmitted uplink channel is used for illustration.

As an example and not a limitation, the uplink channel includes at least one of: a PUCCH, a Physical Uplink Shared CHannel (PUSCH), or a Physical Random Access CHannel (PRACH). This is not limited in the embodiments of the present disclosure. An example in which the uplink channel is a PUCCH is used for illustration, and the PUCCH in the embodiments of the present disclosure is an exemplary example and may be generalized to an uplink channel.

In some embodiments, the first type of time-domain resource is an SBFD-type time-domain resource, and the second type of time-domain resource is a non-SBFD-type time-domain resource.

For example, the SBFD-type time-domain resource is a symbol or slot including a first subband, where the first subband is configured for the network device to perform an SBFD operation, for example, the first subband is an uplink subband or a downlink subband.

For example, the time-domain resource includes at least one of: a symbol, a symbol group, a slot, a sub-slot, a frame, or a subframe. The embodiments of the present disclosure do not limit a specific type of the time-domain resource. Usually, as an example for illustration, the first parameter set is associated with the first type of symbol and the second parameter set is associated with the second type of symbol. For example, the first parameter set is associated with SBFD symbols, and the second parameter set is associated with non-SBFD symbols. The SBFD symbols are symbols including at least one of an uplink subband, a downlink subband, or a guard band; and the non-SBFD symbols are symbols not including the above subbands.

In some embodiments, the target uplink channel resource may be determined in the following three manners.
**Manner 1:** A first target uplink channel resource is determined according to an uplink channel resource ID among the uplink channel resources determined through the first parameter set.

In some embodiments, the uplink channel resource ID may be configured or indicated by the network device.

Exemplarily, in the embodiment shown in the part (a) or (b) of FIG. 8, assume that a value of the uplink channel resource ID is 3. Among the uplink channel resources determined through the first parameter set, a resource corresponding to the shaded block ③ is determined as the first target uplink channel resource.

In some embodiments, when the first target uplink channel resource satisfies a second condition, the first target uplink channel resource is determined as the target uplink channel resource; and/or, when the first target uplink channel resource does not satisfy the second condition, a second target uplink channel resource is determined according to the uplink channel resource ID among the uplink channel resources determined through the second parameter set, and the second target uplink channel resource is determined as the target uplink channel resource.

In some embodiments, the first type of time-domain resource includes SBFD symbols; the second type of time-domain resource includes non-SBFD symbols; and the second condition includes: the first target uplink channel resource entirely occupies SBFD symbols and a corresponding frequency-domain resource is completely within an uplink subband, or the first target uplink channel resource entirely occupies non-SBFD symbols.

Taking the uplink channel being a PUCCH as an example, the second condition includes: the first target PUCCH resource entirely occupies SBFD symbols and a corresponding frequency-domain resource is completely within an uplink subband, or the first target PUCCH resource entirely occupies non-SBFD symbols.

As shown in FIG. 11, assume that a fourth PUCCH resource is selected as a target PUCCH resource according to the uplink channel resource ID. The shaded block ④ is the first target PUCCH resource. The first target PUCCH resource entirely occupies SBFD symbols, and a corresponding frequency-domain resource is completely within an uplink subband. Therefore, the first target PUCCH resource satisfies the second condition, and the first target PUCCH resource is determined as the target uplink channel resource.

**Manner** 2: A second target uplink channel resource is determined according to an uplink channel resource ID among the uplink channel resources determined through the second parameter set.

In some embodiments, when the second target uplink channel resource satisfies a third condition, the second target uplink channel resource is determined as the target uplink channel resource; and/or, when the second target uplink channel resource does not satisfy the third condition, a first target uplink channel resource is determined according to the uplink channel resource ID among the uplink channel resources determined through the first parameter set, and the first target uplink channel resource is determined as the target uplink channel resource.

In some embodiments, the first type of time-domain resource includes SBFD symbols; the second type of time-domain resource includes non-SBFD symbols; and the third condition includes: the second target uplink channel resource entirely occupies SBFD symbols and a corresponding frequency-domain resource is completely within an uplink subband, or the second target uplink channel resource entirely occupies non-SBFD symbols.

Taking the uplink channel being a PUCCH as an example, the third condition includes: the second target PUCCH resource entirely occupies SBFD symbols and a corresponding frequency-domain resource is completely within an uplink subband, or the second target PUCCH resource entirely occupies non-SBFD symbols.

As shown in FIG. 11, assume that a fourth PUCCH resource is selected as a target PUCCH resource according to the uplink channel resource ID. The shaded block 4 is the second target PUCCH resource. The second target PUCCH resource entirely occupies SBFD symbols, but a corresponding frequency-domain resource is not within an uplink subband, therefore, the second target PUCCH resource does not satisfy the third condition. While a first target PUCCH resource (shaded block ④) determined by the terminal device 120 according to the uplink channel resource ID entirely occupies SBFD symbols and a corresponding frequency-domain resource is completely within an uplink subband, the first target PUCCH resource is an available resource. The first target PUCCH resource is determined as the target uplink channel resource.

**Manner 3:** A first target uplink channel resource is determined according to an uplink channel resource ID among the uplink channel resources determined through the first parameter set; a second target uplink channel resource is determined according to the uplink channel resource ID among the uplink channel resources determined through the second parameter set; and the target uplink channel resource is determined from the first target uplink channel resource and the second target uplink channel resource according to a third determination manner.

In some embodiments, the third determination manner includes at least one of: determining an uplink channel resource having an earlier time-domain resource as the target uplink channel resource; determining an uplink channel resource occupying a largest or smallest number of time-domain resources as the target uplink channel resource; or determining an uplink channel resource overlapping with another uplink channel resource as the target uplink channel resource.

In some embodiments, the earlier time-domain resource includes at least one of: an earlier start time, or an earlier end time.

The uplink channel resource is a valid resource configured by the network device. When one of the first target uplink channel resource and the second target uplink channel resource is an invalid resource, the other valid resource is determined as the target uplink channel resource. When both the first target uplink channel resource and the second target uplink channel resource are valid resources, the target uplink channel resource is determined from the first target uplink channel resource and the second target uplink channel resource according to the third determination manner.

Exemplarily, taking the uplink channel being a PUCCH as an example, in FIG. 12, a value of the uplink channel resource ID is 2, the shaded block ② is the first target PUCCH resource, and the shaded block 2 is the second target PUCCH resource. Since the first target PUCCH resource has an earlier time-domain resource, the first target PUCCH resource is determined as the target PUCCH resource.

Determining an uplink channel resource having an earlier time-domain resource as the target uplink channel resource allows for selecting an uplink channel with lowest latency.

In FIG. 12, the value of the uplink channel resource ID is 2, the shaded block ② is the first target PUCCH resource, and the shaded block 2 is the second target PUCCH resource. The first target PUCCH resource occupies a larger number of time-domain resources than the second target PUCCH resource. Therefore, the first target PUCCH resource is determined as the target PUCCH resource.

Determining an uplink channel resource occupying a largest number of time-domain resources as the target uplink channel resource may increase a coverage range of data transmission and improve reliability of data transmission.

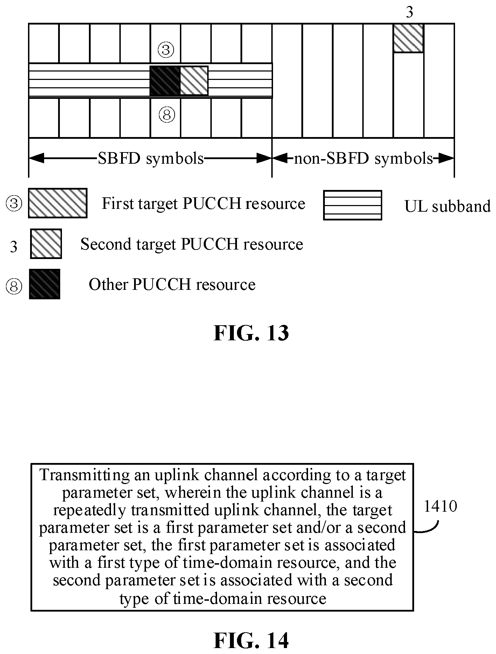

The overlapping includes partial overlapping and complete overlapping. Taking partial overlapping as an example, in FIG. 13, the shaded block ③ is the first target PUCCH resource, and the shaded block 3 is the second target PUCCH resource. The first target PUCCH resource partially overlaps another uplink channel resource (shaded block ⑧), while the second target PUCCH resource does not overlap with another uplink channel resource. Therefore, the first target PUCCH resource is determined as the target PUCCH resource.

Determining an uplink channel resource overlapping with another uplink channel resource as the target uplink channel resource enables resource multiplexing for transmission and reduces power consumption of the terminal device.

In some embodiments, a plurality of third determination manners may be used in any combination. This is not limited in the embodiments of the present disclosure.

Exemplarily, a target uplink channel is first determined according to a first third determination manner (i.e., determining an uplink channel resource having an earlier time-domain resource as the target uplink channel resource). Taking the time-domain resource being a symbol as an example, as shown in FIG. 11, starting symbols of the shaded block ④ and the shaded block 4 are the same. When starting symbols of two uplink channel resources are the same, a target uplink channel is determined according to a second third determination manner (i.e., determining an uplink channel resource occupying a largest or smallest number of time-domain resources as the target uplink channel resource). As shown in FIG. 11, the shaded block ④ occupies two symbols, and the shaded block 4 occupies one symbol. The shaded block ④ occupies a larger number of symbols. Therefore, the shaded block ④ is determined as the target uplink channel resource.

In summary, the method provided by this embodiment includes determining a target uplink channel resource among uplink channel resources determined through a first parameter set and/or a second parameter set, enabling the terminal device to determine an appropriate target uplink channel resource according to different requirements.

The above embodiment shows a method for determining a target uplink channel resource when the uplink channel is not a repeatedly transmitted uplink channel. For a repeatedly transmitted uplink channel, a principle of a method for determining a resource for a first repetition of the uplink channel is the same and is not repeated herein. However, resources for subsequent repetitions of the uplink channel further need to be determined. FIG. 14 illustrates a flowchart of an uplink channel transmission method according to an exemplary embodiment of the present disclosure. The method is performed by a terminal device and includes:
**Step 1410:** transmitting an uplink channel according to a target parameter set, wherein the uplink channel is a repeatedly transmitted uplink channel, the target parameter set is a first parameter set and/or a second parameter set, the first parameter set is associated with a first type of time-domain resource, and the second parameter set is associated with a second type of time-domain resource.

As an example and not a limitation, the uplink channel includes at least one of: a PUCCH, a PUSCH, or a PRACH. This is not limited in the embodiments of the present disclosure. An example in which the uplink channel is a PUCCH is used for illustration, and the PUCCH in the embodiments of the present disclosure is an exemplary example and may be generalized to an uplink channel.

In some embodiments, the first type of time-domain resource is an SBFD-type time-domain resource, and the second type of time-domain resource is a non-SBFD-type time-domain resource.

For example, the SBFD-type time-domain resource is a symbol or slot including a first subband, where the first subband is configured for the network device to perform an SBFD operation, for example, the first subband is an uplink subband or a downlink subband.

For example, the time-domain resource includes at least one of: a symbol, a symbol group, a slot, a sub-slot, a frame, or a subframe. The embodiments of the present disclosure do not limit a specific type of the time-domain resource. Usually, as an example for illustration, the first parameter set is associated with a first type of symbol and the second parameter set is associated with a second type of symbol. For example, the first parameter set is associated with SBFD symbols, and the second parameter set is associated with non-SBFD symbols. The SBFD symbols are symbols including at least one of an uplink subband, a downlink subband, or a guard band; and the non-SBFD symbols are symbols not including the above subbands.

In some embodiments, the first parameter set is applicable to a slot in which all symbols are SBFD symbols, and is also applicable to a slot in which some symbols are SBFD symbols; the second parameter set is applicable to a slot in which all symbols are non-SBFD symbols, and is also applicable to a slot in which some symbols are non-SBFD symbols.

In some embodiments, a repetition of the uplink channel, a repeated transmission of the uplink channel, a transmission of the uplink channel, and other expressions have a same meaning. For example, a first transmission of the uplink channel means a first repetition of the uplink channel.

As an example and not a limitation, the target parameter set includes at least one of the following parameters: an uplink channel resource set; an uplink channel resource; an uplink channel format; a time-domain parameter set; a frequency-domain parameter set; a repetition parameter set; or a code rate parameter.

Taking the uplink channel being a PUCCH as an example, the uplink channel resource set is a PUCCH resource set (PUCCH-ResourceSet), the uplink channel resource is a PUCCH resource (PUCCH-Resource), and the uplink channel format is a PUCCH format (PUCCH-FormatConfig); the time-domain parameter set includes at least one of a starting symbol (startingSymbolIndex) or a number of symbols (nrofSymbols); the frequency-domain parameter set includes at least one of frequency domain starting positions before and after frequency hopping: a starting Physical Resource Block (startingPRB) or a second hop Physical Resource Block (secondHopPRB); the repetition parameter set includes at least one of a number of slots (nrofSlots) or a number of slots for PUCCH repetition (pucch-RepetitionNrofSlots-r17); and the code rate parameter includes a maximum code rate (maxCodeRate).

In some embodiments, the target parameter set may be determined in at least one of the following manners.

**Manner 1:** The target parameter set is determined based on a first repetition of the uplink channel.

In some embodiments, the target parameter set may be determined based on a type of a time-domain resource for the first repetition.

The type of the time-domain resource includes a first type of time-domain resource and a second type of time-domain resource. When the type of the time-domain resource for the first repetition is the first type of time-domain resource, the target parameter set is determined as the first parameter set; when the type of the time-domain resource for the first repetition is the second type of time-domain resource, the target parameter set is determined as the second parameter set.

In some embodiments, the first repetition is: a configured or indicated first repetition of the uplink channel by a network device; or a first actual repetition of the uplink channel.

The first repetition configured or indicated by the network device for the uplink channel may occur on a downlink symbol, resulting in no corresponding uplink channel resource being configured and transmission being unachievable. Therefore, the first actual transmission of the uplink channel may be selected as the first repetition.

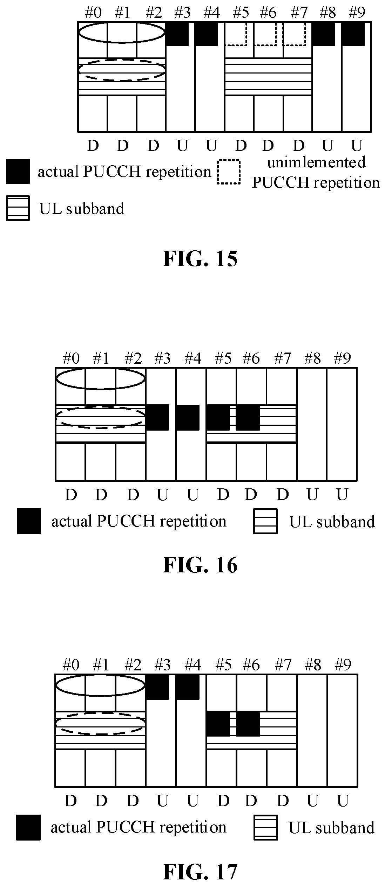

FIG. 15 illustrates a schematic diagram of an uplink channel transmission method according to an exemplary embodiment of the present disclosure. Taking an uplink channel being a PUCCH as an example, assume that a number of PUCCH repetitions is configured or indicated by the network device as ${N}_{PUCCH}^{repeat} = 4$, and a first repetition of the PUCCH is configured or indicated by the network device to start from slot #3. Assume that SBFD symbols and non-SBFD symbols correspond to two sets of PUCCH resource configurations. For the PUCCH resource configuration corresponding to SBFD symbols, PUCCH resources (resource sets) are configured within the uplink subband (e.g., inside the dashed ellipse). For the PUCCH resource configuration corresponding to non-SBFD symbols, PUCCH resources (resource sets) are arranged at the top of the uplink Bandwidth Part (BWP) (e.g., inside the solid ellipse).

According to Manner 1, target parameter sets corresponding to four PUCCH repetitions are determined according to the first repetition of the PUCCH, that is, the first repetition of the PUCCH corresponding to slot #3. PUCCH repetitions are transmitted through resources represented by black squares, and parameter sets of subsequent PUCCH repetitions are all determined according to the parameter set of the first repetition of the PUCCH. That is, black squares corresponding to slot #3, slot #4, slot #8, and slot #9 are resources for four actual PUCCH repetitions, while resources indicated by the dashed blocks corresponding to slot #5, slot #6 and slot #7 are located within downlink symbols and are thus unavailable, meaning PUCCH repetitions cannot be transmitted thereon.

Taking the uplink channel being a PUCCH as an example, this manner is the simplest, consistent with a legacy design logic, and can minimize an impact of uplink resource fragmentation and preserve more consecutive uplink resources for PUSCH transmission.

**Manner 2:** The target parameter set is determined based on the first parameter set.

In some embodiments, the first parameter set is associated with a first type of time-domain resource, the first type of time-domain resource is an SBFD-type time-domain resource, and the second type of time-domain resource is a non-SBFD-type time-domain resource.

For example, the SBFD-type time-domain resource is a symbol or slot including a first subband, where the first subband is configured for the network device to perform an SBFD operation, for example, the first subband is an uplink subband or a downlink subband.

FIG. 16 illustrates a schematic diagram of an uplink channel transmission method according to an exemplary embodiment of the present disclosure. Taking an uplink channel being a PUCCH as an example, assume that a number of PUCCH repetitions is configured or indicated by the network device as ${N}_{PUCCH}^{repeat} = 4$, and a first repetition of the PUCCH is configured or indicated by the network device to start from slot #3. Assume that SBFD symbols and non-SBFD symbols correspond to two sets of PUCCH resource configurations. For the PUCCH resource configuration corresponding to SBFD symbols, PUCCH resources (resource sets) are configured within the uplink subband (e.g., inside the dashed ellipse). For the PUCCH resource configuration corresponding to non-SBFD symbols, PUCCH resources (resource sets) are arranged at the top of the uplink Bandwidth Part (BWP) (e.g., inside the solid ellipse).

According to Manner 2, target parameter sets corresponding to four PUCCH repetitions are determined according to parameter sets corresponding to SBFD symbols. PUCCH repetitions are transmitted using the resources denoted by black blocks, and this scheme applies to all PUCCH repetitions. That is, black squares corresponding to slot #3, slot #4, slot #5, and slot #6 are resources for four actual PUCCH repetitions.

Taking the uplink channel being a PUCCH as an example, this manner can complete PUCCH repetition at a fastest speed with low latency.

**Manner 3:** A determination manner of the target parameter set is selected from at least two determination manners based on first information or a first condition.

The at least two determination manners include a first determination manner and a second determination manner. The first determination manner is based on a first transmission of the uplink channel (Manner 1); and the second determination manner is based on the first parameter set (Manner 2).

In some embodiments, the first information may be configured or indicated by the network device, or the first information may be agreed in a communication protocol.

In some embodiments, the first information may be configured or indicated by the network device based on a type of UCI carried by the uplink channel; or the first information may be agreed in the communication protocol based on the type of the UCI carried by the uplink channel; wherein the type of the UCI includes at least one of CSI, SR, or HARQ-ACK.

In some embodiments, the operation of determining the target parameter set based on the first information according to one of the at least two determination manners may include:
determining the target parameter set according to the first determination manner when the type of the UCI is CSI or SR; or determining the target parameter set according to the second determination manner when the type of the UCI is HARQ-ACK.

Since CSI and SR are not latency-sensitive, the first determination manner (Manner 1) is adopted to mitigate the impact of uplink channel resource fragmentation. HARQ-ACK is latency-sensitive, the second determination manner (Manner 2) enables faster completion of repetitive transmission.

In some embodiments, the first condition relates to at least one of a first quantity and a second quantity; the first quantity is a number of time-domain units included in a first time-domain resource range, the second quantity is a number of time-domain units included in a second time-domain resource range, the first time-domain resource range is a time-domain resource range occupied for repetitions of the uplink channel determined using the first determination manner, the second time-domain resource range is a time-domain resource range occupied for repetitions of the uplink channel determined using the second determination manner, and the time-domain resource range is a range from a starting time-domain resource corresponding to the first repetition of the uplink channel to an ending time-domain resource corresponding to a last repetition of the uplink channel.

Exemplarily, taking the time-domain resource being a slot as an example, a range of slots occupied for transmitting repetitions of the uplink channel according to the first determination manner is N1 (the first quantity), and a range of slots occupied for transmitting repetitions of the uplink channel according to the second determination manner is N2 (the second quantity).

In some embodiments, when the first quantity is greater than or equal to the second quantity, the second determination manner is adopted; when the first quantity is less than or equal to the second quantity, the first determination manner is adopted.

Exemplarily, when N1 is 4 and N2 is 2, N1 is greater than N2, the second determination manner is adopted; when N1 is 2 and N2 is 4, N1 is less than N2, the first determination manner is adopted; when N1 and N2 are equal, the first determination manner or the second determination manner is adopted.

In some embodiments, when the first quantity is greater than a first threshold, the second determination manner is adopted; when the first quantity is less than the first threshold, the first determination manner is adopted; wherein the first threshold is a preset value.

Exemplarily, the first threshold is 4. When N1 is 6, the second determination manner is adopted; when N1 is 2, the first determination manner is adopted; when N1 is 4, the first determination manner or the second determination manner is adopted.

In some embodiments, when a first range includes a first type of time-domain resource, the second determination manner is adopted; when the first range does not include the first type of time-domain resource, the first determination manner is adopted; wherein the first range is between a first time-domain resource and a last time-domain resource of the first quantity of time-domain resources.

Exemplarily, when N1 is 4, the time-domain resource is a slot and the first type of time-domain resource is an SBFD symbol, the first slot is slot #3, the second slot is slot #4, the third slot is slot #8, and the fourth slot is slot #9. When an SBFD symbol is included between slot #3 and slot #9, the second determination manner is adopted.

When it cannot be determined which determination manner to use, the determination is performed according to the first information or the first condition, which combines advantages of the two determination manners.

**Manner 4:** The target parameter set is determined based on a type of a time-domain resource corresponding to each repetition of the uplink channel.

In some embodiments, when a type of a time-domain resource corresponding to an i-th repetition of the uplink channel is a first type of time-domain resource, the target parameter set is determined as the first parameter set; and/or, when the type of the time-domain resource corresponding to the i-th repetition of the uplink channel is a second type of time-domain resource, the target parameter set is determined as the second parameter set, where i is a positive integer.

In some embodiments, the first type of time-domain resource is an SBFD-type time-domain resource, and the second type of time-domain resource is a non-SBFD-type time-domain resource.

For example, the SBFD-type time-domain resource is a symbol or slot including a first subband, where the first subband is configured for the network device to perform an SBFD operation, for example, the first subband is an uplink subband or a downlink subband; the non-SBFD-type time-domain resource is a non-SBFD symbol or slot, for example, an uplink symbol or an uplink slot.

Exemplarily, when the time-domain resource is a symbol, the uplink channel is a PUCCH, and the number of repetitions is 4, when a symbol type corresponding to a first repetition of the PUCCH is an SBFD-type symbol, the target parameter set is determined as the first parameter set; when a symbol type corresponding to a second repetition of the PUCCH is an SBFD-type symbol, the target parameter set is determined as the first parameter set; when a symbol type corresponding to a third repetition of the PUCCH is a non-SBFD-type symbol, the target parameter set is determined as the second parameter set; and when a symbol type corresponding to a fourth repetition of the PUCCH is a non-SBFD-type symbol, the target parameter set is determined as the second parameter set.

FIG. 17 illustrates a schematic diagram of an uplink channel transmission method according to an exemplary embodiment of the present disclosure. Taking an uplink channel being a PUCCH as an example, assume that a number of PUCCH repetitions is configured or indicated by the network device as ${N}_{PUCCH}^{repeat} = 4$, and a first repetition of the PUCCH is configured or indicated by the network device to start from slot #3. Assume that SBFD symbols and non-SBFD symbols correspond to two sets of PUCCH resource configurations. For the PUCCH resource configuration corresponding to SBFD symbols, PUCCH resources (resource sets) are configured within the uplink subband (e.g., inside the dashed ellipse). For the PUCCH resource configuration corresponding to non-SBFD symbols, PUCCH resources (resource sets) are arranged at the top of the uplink BWP (e.g., inside the solid ellipse).

According to Manner 4, a first repetition and a second repetition of the PUCCH are within uplink symbols, that is, non-SBFD symbols. Therefore, target parameter sets corresponding to the first repetition and the second repetition of the PUCCH are determined according to parameter sets corresponding to non-SBFD symbols. A third repetition and a fourth repetition of the PUCCH are within SBFD symbols, therefore, target parameter sets corresponding to the third repetition and the fourth repetition of the PUCCH are determined according to parameter sets corresponding to SBFD symbols. Due to the limitation of soft combining for polar coding, different PUCCH repetitions are required to occupy an equal number of RBs or Resource Elements (REs). Therefore, black squares corresponding to slot #3, slot #4, slot #5, and slot #6 are required to have the same total number of RBs or REs, or correspond to the same parameters such as the number of symbols, code rate, PUCCH format and the number of repetitions.

Taking the uplink channel being a PUCCH as an example, this manner can complete PUCCH repetition at a fastest speed with low latency, and can minimize an impact of uplink resource fragmentation and preserve more consecutive uplink resources for PUSCH transmission.

In some embodiments, under Manner 4, the terminal device may expect at least one of the following: a first uplink channel resource and a second uplink channel resource occupy an equal number of resource units; a number of repetitions corresponding to the first uplink channel resource and a number of repetitions corresponding to the second uplink channel resource are the same; part of parameters in the first parameter set and the second parameter set are the same; the part of parameters in the first parameter set and the second parameter set come from a same uplink channel configuration; wherein the first uplink channel resource is determined according to the first parameter set, and the second uplink channel resource is determined according to the second parameter set.

In some embodiments, under Manner 4, the terminal device may not expect at least one of the following: a first uplink channel resource and a second uplink channel resource occupy unan equal number of resource units; a number of repetitions corresponding to the first uplink channel resource and a number of repetitions corresponding to the second uplink channel resource are not the same; part of parameters in the first parameter set and the second parameter set are not the same; the part of parameters in the first parameter set and the second parameter set come from different uplink channel configurations; wherein the first uplink channel resource is determined according to the first parameter set, and the second uplink channel resource is determined according to the second parameter set.

The network device endeavors to perform configuration in compliance with the expectations of the terminal device as much as possible, but may not fully follow such expectations. In some cases, the network device may send configuration information in a manner not expected by the terminal device. How the terminal device handles unexpected configuration information is not limited in the present disclosure, and may be implemented autonomously by the terminal device, for example.

Exemplarily, in a case where the terminal device expects that the first uplink channel resource and the second uplink channel resource occupy an equal number of resource units, the terminal device expects equal total number of RBs or REs across all symbols.

In some embodiments, the part of parameters include at least one of: a number of time-domain resources; a number of RBs; a code rate; an uplink channel format; or a number of repetitions. Exemplarily, when the uplink channel is a PUCCH and the time-domain resource is a symbol, the number of time-domain resources is a number of symbols (nrofSymbols); the number of RBs is nrofPRBs; the code rate is maxCodeRate; the uplink channel format is a PUCCH format; and the number of repetitions includes at least one of a number of slots (nrofSlots) or a number of slots for PUCCH repetition (pucch-RepetitionNrofSlots-r17).

In summary, the method provided by this embodiment includes transmitting an uplink channel according to a target parameter set, wherein the uplink channel is a repeatedly transmitted uplink channel, the target parameter set is a first parameter set and/or a second parameter set, the first parameter set is associated with a first type of time-domain resource, and the second parameter set is associated with a second type of time-domain resource, enabling a terminal device to adopt different target parameter sets to transmit the uplink channel when facing different types of time-domain resources.

Taking the uplink channel being a PUCCH as an example, when SBFD technology is supported, PUCCH transmission may also be performed in an uplink subband of SBFD symbols (downlink symbols or flexible symbols), so that latency of PUCCH repeated transmission can be shortened. If PUCCH resources can be configured separately for SBFD symbols and non-SBFD symbols, for a PUCCH repeatedly transmitted in ${N}_{PUCCH}^{repeat}$ slots, how to determine corresponding time-frequency resources and the like is a problem to be solved.

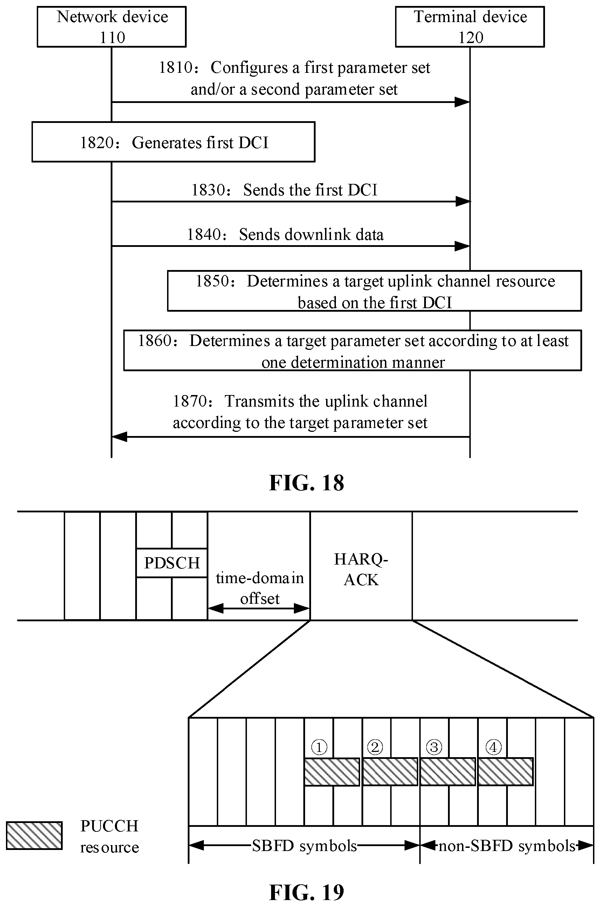

To solve the above problem, the embodiments of the present disclosure provide an uplink channel transmission method. FIG. 18 illustrates a flowchart of an uplink channel transmission method according to an exemplary embodiment of the present disclosure. The method is performed by a network device 110 and a terminal device 120, and includes:
**Step 1810:** The network device 110 configures a first parameter set and/or a second parameter set.

In some embodiments, the first parameter set and/or the second parameter set includes a related parameter set of a repetition of an uplink channel.

As an example and not a limitation, the uplink channel includes at least one of: a PUCCH, a PUSCH, or a PRACH. This is not limited in the embodiments of the present disclosure. An example in which the uplink channel is a PUCCH is used for illustration, and the PUCCH in the embodiments of the present disclosure is an exemplary example and may be generalized to an uplink channel.

In some embodiments, a repetition of the uplink channel, a repeated transmission of the uplink channel, a transmission of the uplink channel, and other expressions have a same meaning. For example, a first transmission of the uplink channel means a first repetition of the uplink channel.

In some embodiments, the network device 110 may configure the first parameter set and/or the second parameter set through Radio Resource Control (RRC) signaling.

In other embodiments, the network device 110 may configure the first parameter set and/or the second parameter set through other signaling including a Medium Access Control Control Element (MAC CE). The embodiments of the present disclosure do not limit a configuration manner of the network device 110.

In some embodiments, the first parameter set is associated with a first type of time-domain resource, and the second parameter set is associated with a second type of time-domain resource.

In some embodiments, the time-domain resource includes at least one of: a symbol, a symbol group, a slot, a sub-slot, a frame, or a subframe. The embodiments of the present disclosure do not limit a specific type of the time-domain resource. Usually, as an example for illustration, the first parameter set is associated with the first type of symbol and the second parameter set is associated with the second type of symbol. For example, the first parameter set is associated with SBFD symbols, and the second parameter set is associated with non-SBFD symbols. The SBFD symbols are symbols including at least one of an uplink subband, a downlink subband, or a guard band; and the non-SBFD symbols are symbols not including the above subbands.

In some embodiments, uplink channel resources corresponding to different parameter sets occupy a same number of time-domain resources.

Taking the uplink channel resource being a PUCCH resource and the time-domain resource being a symbol as an example, as shown in FIG. 7, taking PUCCH resources in one slot as an example, at a frequency-domain position of the first parameter set, seven PUCCH resources are configured, each PUCCH resource occupying two symbols; at a frequency-domain position of the second parameter set, seven PUCCH resources are configured, each PUCCH resource occupying two symbols. The first parameter set and the second parameter set share a same time-domain resource parameter, and meanwhile the first parameter set and the second parameter set may be applicable to slots having different symbol types. For example, when a slot includes only SBFD symbols, a target PUCCH resource is determined among seven PUCCH resources configured at a middle position by the first parameter set; when a slot includes only non-SBFD symbols, a target PUCCH resource is determined among seven PUCCH resources configured at an upper position by the second parameter set; when a slot includes SBFD symbols and non-SBFD symbols, taking SBFD symbols occupying eight symbols and non-SBFD symbols occupying six symbols as an example, the first parameter set is adopted to determine a target PUCCH resource (one of the first fourt shaded blocks in the figure) for SBFD symbols, , and the second parameter set is adopted to determine a target PUCCH resource (one of the last three shaded blocks in the figure) for non-SBFD symbols.

In some embodiments, uplink channel resources corresponding to different parameter sets occupy different numbers of time-domain resources.

Taking the uplink channel resource being a PUCCH resource and the time-domain resource being a symbol as an example, in the part (a) of FIG. 8, at a frequency-domain position of the first parameter set, there are seven PUCCH resources (shaded blocks ①②③④⑤⑥⑦), each PUCCH resource occupying two symbols; at a frequency-domain position of the second parameter set, there are seven PUCCH resources (shaded blocks 1234567), each PUCCH resource occupying one symbol. The shaded blocks ⑤⑥⑦ and the shaded blocks 1234 are configured PUCCH resources but are not available PUCCH resources.

In the part (b) of FIG. 8, at a frequency-domain position of the first parameter set, there are four PUCCH resources (shaded blocks ①②③④), each PUCCH resource occupying two symbols; at a frequency-domain position of the second parameter set, there are three PUCCH resources (shaded blocks 123), each PUCCH resource occupying one symbol. Each shaded block represents an available PUCCH resource configured by the network device.

**Step 1820:** The network device 110 generates first DCI.

Taking the uplink channel carrying HARQ-ACK, the uplink channel being a PUCCH, and a repetition of the uplink channel being a PUCCH repetition as an example, the network device 110 may determine a PDSCH resource according to downlink data to be transmitted. FIG. 19 illustrates a schematic diagram of determining PUCCH resources according to an exemplary embodiment of the present disclosure. After determining the PDSCH resource, as shown in FIG. 19, the network device 110 determines a slot for a first repetition of the PUCCH based on a time-domain offset from the PDSCH to HARQ-ACK.

In the slot for the first repetition of the PUCCH, a PUCCH resource (① in FIG. 19, equivalent to ③ in FIG. 8) is selected from a plurality of pre-configured PUCCH resources as a resource for the first repetition of the PUCCH.

In some embodiments, after determining the resource for the first repetition of the PUCCH, the network device 110 may determine resources for subsequent repetitions of the PUCCH based on the resource for the first repetition of the PUCCH, or based on the first type of time-domain resource.

In some embodiments, when the resource for the first repetition of the PUCCH falls on the first type of time-domain resource, the network device 110 may determine resources for subsequent repetitions of the PUCCH based on the first type of time-domain resource.

In some embodiments, when the resource for the first repetition of the PUCCH falls on the first type of time-domain resource or the second type of time-domain resource, the network device 110 may determine resources for subsequent repetitions of the PUCCH based on the resource for the first repetition of the PUCCH.

Exemplarily, taking the uplink channel being a PUCCH as an example, when the number of PUCCH repetitions is four, the network device 110 determines a resource for a second repetition of the PUCCH (② in FIG. 19), a resource for a third repetition of the PUCCH (③ in FIG. 19), and a resource for a fourth repetition of the PUCCH (④ in FIG. 19) based on the resource for the first repetition of the PUCCH.

In some embodiments, the network device 110 may check whether the selected resource satisfies a service requirement. For example, whether each resource can accommodate more bits than the pending HARQ-ACK feedback bits, and whether a last resource satisfies a latency requirement. Satisfying the latency requirement means that latency between a last repetition of the uplink channel and a PDSCH resource is less than a preset latency threshold.

In some embodiments, the network device 110 may determine a PUSCH resource according to first data information, where the PUSCH resource is configured to transmit uplink data. The first data information includes: uplink channel quality, transmission data size, network device load, and other information.

In some embodiments, the network device 110 may generate first DCI, where the first DCI includes at least one of: time-domain resource information; frequency-domain resource information; time-domain offset information; number of repetitions information; or a PRI.

The network device 110 may generate the time-domain resource information according to a time-domain resource of the PUSCH; generate the frequency-domain resource information according to a frequency-domain resource of the PUSCH; generate the time-domain offset information according to a time-domain offset from PDSCH to HARQ-ACK; generate the number of repetitions information according to the number of repetitions of the uplink channel; and generate the PRI according to a resource position of a first repetition of the uplink channel.

In some embodiments, a value of the PRI is used to indicate which resource in a pre-configured PUCCH resource set is occupied for a first repetition of the uplink channel.

Exemplarily, the value of the PRI is represented by a preset number of bits. For example, the value of the PRI is represented by three bits. A first bit is used to indicate whether a first repetition of the uplink channel is located in a first type of time-domain resource or a second type of time-domain resource, and a second bit and a third bit are used to indicate a sequence number of an uplink channel resource occupied for the first repetition of the uplink channel.

Exemplarily, when the PRI value is 010, "0" is used to indicate that a first repetition of the uplink channel is located in a first type of time-domain resource, for example, in SBFD symbols; "10" is used to indicate that the first repetition of the uplink channel occupies a third uplink channel resource; and "010" is used to indicate that the first repetition of the uplink channel occupies a third uplink channel resource in SBFD symbols.

**Step 1830:** The network device 110 sends the first DCI.

In some embodiments, the first DCI is used to indicate a resource for a first repetition of the uplink channel used by the terminal device 120. Taking the uplink channel being a PUCCH as an example, the first DCI is used to indicate a resource for a first repetition of the PUCCH used by the terminal device 120.

In some embodiments, the first DCI may carry an uplink channel resource ID, where the uplink channel resource ID is used to indicate a resource for a first repetition of the uplink channel used by the terminal device 120.

For example, the uplink channel resource ID is represented by a PRI. Exemplarily, when the PRI value is 010, "0" is used to indicate that a first repetition of the uplink channel is located in a first type of time-domain resource, for example, in SBFD symbols; "10" is used to indicate that the first repetition of the uplink channel occupies a third uplink channel resource; and "010" is used to indicate that the first repetition of the uplink channel occupies a third uplink channel resource in SBFD symbols.

In some embodiments, the first DCI may carry time-domain offset information, where the time-domain offset information is used to indicate a time-domain offset from PDSCH to HARQ-ACK.

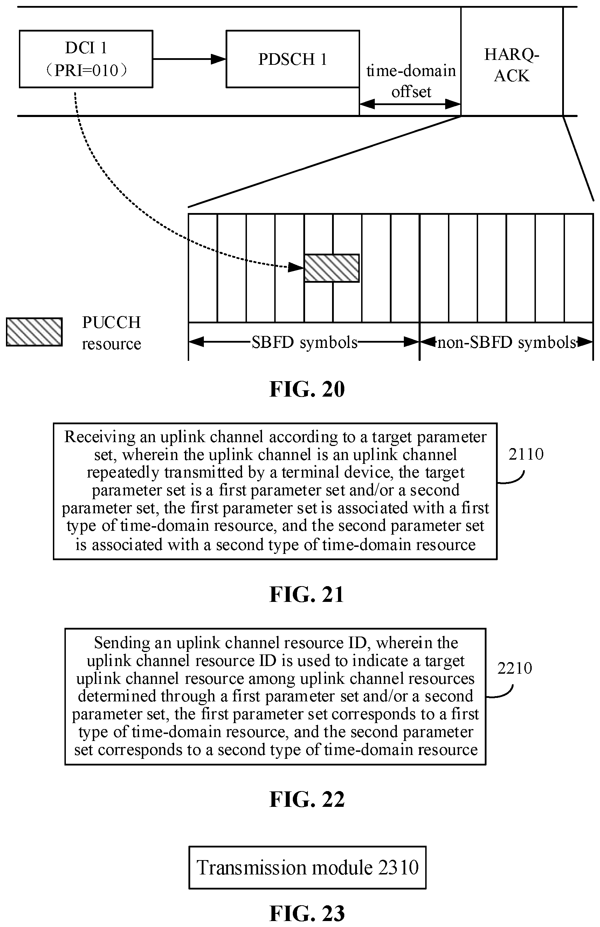

FIG. 20 illustrates a schematic diagram of determining PUCCH resources according to an exemplary embodiment of the present disclosure. In some embodiments, taking an uplink channel being a PUCCH as an example, since the PUCCH resource determination manner is to first determine a slot where a HARQ-ACK is located according to a PDSCH-to-HARQ-ACK time-domain offset configuration indicated in DCI, and then indicate a PUCCH resource in the slot through a PRI in the DCI, as shown in FIG. 20, if the terminal device receives DCI 1 (first DCI) from the network device, the DCI 1 schedules transmission of PDSCH 1. Based on the PDSCH-to-HARQ-ACK time-domain offset, slot 1 is determined after PDSCH 1. Assuming that the PRI value in DCI 1 is 010, which is used to indicate the third PUCCH resource in SBFD symbols, the PUCCH resource is configured for the first repetition of the PUCCH.

In some embodiments, the terminal device 110 may receive the first DCI, and determine a first repetition of the uplink channel according to the first DCI.

**Step 1840:** The network device 110 sends downlink data.

The network device 110 may send the downlink data through a PDSCH, and the terminal device 120 may receive the downlink data.

**Step 1850:** The terminal device 120 determines a target uplink channel resource based on the first DCI, where the target uplink channel resource is a resource corresponding to a first repetition of the uplink channel.

In some embodiments, the terminal device 120 may determine the target uplink channel resource among uplink channel resources determined through a first parameter set and/or a second parameter set.

In some embodiments, the terminal device 120 may determine a PDSCH and time-domain offset information according to the received first DCI; determine a slot for the first repetition of the PUCCH according to the PDSCH and the time-domain offset information; and then determine the target uplink channel resource according to the uplink channel resource ID (PRI), where the target uplink channel resource is a resource corresponding to the first repetition of the uplink channel.

In some embodiments, the terminal device 120 may determine a first target uplink channel resource according to the uplink channel resource ID among the uplink channel resources determined through the first parameter set.

In some embodiments, when the first target uplink channel resource satisfies a second condition, the first target uplink channel resource is determined as the target uplink channel resource; and/or, when the first target uplink channel resource does not satisfy the second condition, a second target uplink channel resource is determined according to the uplink channel resource ID among the uplink channel resources determined through the second parameter set, and the second target uplink channel resource is determined as the target uplink channel resource.

In some embodiments, taking the uplink channel being a PUCCH as an example, the first type of time-domain resource includes SBFD symbols, the second type of time-domain resource includes non-SBFD symbols, and the second condition includes: the first target PUCCH resource entirely occupies SBFD symbols and a corresponding frequency-domain resource is completely within an uplink subband, or the first target PUCCH resource entirely occupies non-SBFD symbols.

As shown in FIG. 11, assume that a fourth PUCCH resource is selected as a target PUCCH resource according to the uplink channel resource ID. The shaded block ④ is the first target PUCCH resource. The first target PUCCH resource entirely occupies SBFD symbols, and a corresponding frequency-domain resource is completely within an uplink subband. Therefore, the first target PUCCH resource satisfies the second condition, and the first target PUCCH resource is determined as the target uplink channel resource.

In some embodiments, when the second target uplink channel resource satisfies a third condition, the second target uplink channel resource is determined as the target uplink channel resource; and/or, when the second target uplink channel resource does not satisfy the third condition, a first target uplink channel resource is determined according to the uplink channel resource ID among the uplink channel resources determined through the first parameter set, and the first target uplink channel resource is determined as the target uplink channel resource.

In some embodiments, the first type of time-domain resource includes SBFD symbols; the second type of time-domain resource includes non-SBFD symbols; and the third condition includes: the second target uplink channel resource entirely occupies SBFD symbols and a corresponding frequency-domain resource is completely within an uplink subband, or the second target uplink channel resource entirely occupies non-SBFD symbols.

Taking the uplink channel being a PUCCH as an example, the third condition includes: the second target PUCCH resource entirely occupies SBFD symbols and a corresponding frequency-domain resource is completely within an uplink subband, or the second target PUCCH resource entirely occupies non-SBFD symbols.

As shown in FIG. 11, assume that a fourth PUCCH resource is selected as a target PUCCH resource according to the uplink channel resource ID. The shaded block 4 is the second target PUCCH resource. The second target PUCCH resource entirely occupies SBFD symbols, but a corresponding frequency-domain resource is not within an uplink subband, therefore, the second target PUCCH resource does not satisfy the third condition. While a first target PUCCH resource (shaded block ④) determined by the terminal device 120 according to the uplink channel resource ID entirely occupies SBFD symbols and a corresponding frequency-domain resource is completely within an uplink subband, the first target PUCCH resource is an available resource. The first target PUCCH resource is determined as the target uplink channel resource.

In some embodiments, the terminal device 120 may determine a first target uplink channel resource according to an uplink channel resource ID among the uplink channel resources determined through the first parameter set; determine a second target uplink channel resource according to the uplink channel resource ID among the uplink channel resources determined through the second parameter set; and determine the target uplink channel resource from the first target uplink channel resource and the second target uplink channel resource according to a third determination manner.

In some embodiments, the third determination manner includes at least one of: determining an uplink channel resource having an earlier time-domain resource as the target uplink channel resource; determining an uplink channel resource occupying a largest or smallest number of time-domain resources as the target uplink channel resource; or determining an uplink channel resource overlapping with another uplink channel resource as the target uplink channel resource.

For example, the earlier time-domain resource includes at least one of: an earlier start time, or an earlier end time.

In some embodiments, the uplink channel resource is a valid resource configured by the network device. When one of the first target uplink channel resource and the second target uplink channel resource is an invalid resource, the other valid resource is determined as the target uplink channel resource. When both the first target uplink channel resource and the second target uplink channel resource are valid resources, the target uplink channel resource is determined from the first target uplink channel resource and the second target uplink channel resource according to the third determination manner.

Exemplarily, taking the uplink channel being a PUCCH as an example, in FIG. 12, a value of the uplink channel resource ID is 2, the shaded block ② is the first target PUCCH resource, and the shaded block 2 is the second target PUCCH resource. Since the first target PUCCH resource has an earlier time-domain resource, the first target PUCCH resource is determined as the target PUCCH resource.

Determining an uplink channel resource having an earlier time-domain resource as the target uplink channel resource allows for selecting an uplink channel with lowest latency.

In FIG. 12, the value of the uplink channel resource ID is 2, the shaded block ② is the first target PUCCH resource, and the shaded block 2 is the second target PUCCH resource. The first target PUCCH resource occupies a larger number of time-domain resources than the second target PUCCH resource. Therefore, the first target PUCCH resource is determined as the target PUCCH resource.

Determining an uplink channel resource occupying a largest number of time-domain resources as the target uplink channel resource may increase a coverage range of data transmission and improve reliability of data transmission.

The overlapping includes partial overlapping and complete overlapping. Taking partial overlapping as an example, in FIG. 13, the shaded block ③ is the first target PUCCH resource, and the shaded block 3 is the second target PUCCH resource. The first target PUCCH resource partially overlaps another uplink channel resource (shaded block ⑧), while the second target PUCCH resource does not overlap with another uplink channel resource. Therefore, the first target PUCCH resource is determined as the target PUCCH resource.

Determining an uplink channel resource overlapping with another uplink channel resource as the target uplink channel resource enables resource multiplexing for transmission and reduces power consumption of the terminal device.

In some embodiments, a plurality of third determination manners may be used in any combination. This is not limited in the embodiments of the present disclosure.

Exemplarily, a target uplink channel is first determined according to a first third determination manner (i.e., determining an uplink channel resource having an earlier time-domain resource as the target uplink channel resource). Taking the time-domain resource being a symbol as an example, as shown in FIG. 11, starting symbols of the shaded block ④ and the shaded block 4 are the same. When starting symbols of two uplink channel resources are the same, a target uplink channel is determined according to a second third determination manner (i.e., determining an uplink channel resource occupying a largest or smallest number of time-domain resources as the target uplink channel resource). As shown in FIG. 11, the shaded block ④ occupies two symbols, and the shaded block 4 occupies one symbol. The shaded block ④ occupies a larger number of symbols. Therefore, the shaded block ④ is determined as the target uplink channel resource.

**Step 1860:** The terminal device 120 determines a target parameter set according to at least one determination manner.

In some embodiments, the target parameter set includes at least one of the following parameters: an uplink channel resource set; an uplink channel resource; an uplink channel format; a time-domain parameter set; a frequency-domain parameter set; a repetition parameter set; or a code rate parameter.

Taking the uplink channel being a PUCCH as an example, the uplink channel resource set is a PUCCH resource set (PUCCH-ResourceSet), the uplink channel resource is a PUCCH resource (PUCCH-Resource), and the uplink channel format is a PUCCH format (PUCCH-FormatConfig); the time-domain parameter set includes at least one of a starting symbol (startingSymbolIndex) or a number of symbols (nrofSymbols); the frequency-domain parameter set includes at least one of frequency domain starting positions before and after frequency hopping: a starting Physical Resource Block (startingPRB) or a second hop Physical Resource Block (secondHopPRB); the repetition parameter set includes at least one of a number of slots (nrofSlots) or a number of slots for PUCCH repetition (pucch-RepetitionNrofSlots-r17); and the code rate parameter includes a maximum code rate (maxCodeRate).

In some embodiments, the target parameter set may be determined in at least one of the following manners:
**Manner 1:** The target parameter set is determined based on a first repetition of the uplink channel.

The type of the time-domain resource includes a first type of time-domain resource and a second type of time-domain resource. When the type of the time-domain resource for the first repetition is the first type of time-domain resource, the target parameter set is determined as the first parameter set; when the type of the time-domain resource for the first repetition is the second type of time-domain resource, the target parameter set is determined as the second parameter set.

In some embodiments, the target parameter set may be determined based on the type of the time-domain resource for the first repetition.

In some embodiments, the first repetition is: a configured or indicated first repetition of the uplink channel by a network device; or a first actual repetition of the uplink channel.

The first repetition configured or indicated by the network device for the uplink channel may occur on a downlink symbol, resulting in no corresponding uplink channel resource being configured and transmission being unachievable. Therefore, the first actual transmission of the uplink channel may be selected as the first repetition.

FIG. 15 illustrates a schematic diagram of an uplink channel transmission method according to an exemplary embodiment of the present disclosure. Taking an uplink channel being a PUCCH as an example, assume that a number of PUCCH repetitions is configured or indicated by the network device as N^{repeat}_{PUCCH}=4, and a first repetition of the PUCCH is configured or indicated by the network device to start from slot #3. Assume that SBFD symbols and non-SBFD symbols correspond to two sets of PUCCH resource configurations. For the PUCCH resource configuration corresponding to SBFD symbols, PUCCH resources (resource sets) are configured within the uplink subband (e.g., inside the dashed ellipse). For the PUCCH resource configuration corresponding to non-SBFD symbols, PUCCH resources (resource sets) are arranged at the top of the uplink BWP (e.g., inside the solid ellipse).

According to Manner 1, target parameter sets corresponding to four PUCCH repetitions are determined according to the first repetition of the PUCCH, that is, the first repetition of the PUCCH corresponding to slot #3. PUCCH repetitions are transmitted through resources represented by black squares, and parameter sets of subsequent PUCCH repetitions are all determined according to the parameter set of the first repetition of the PUCCH. That is, black squares corresponding to slot #3, slot #4, slot #8, and slot #9 are resources for four actual PUCCH repetitions, while resources indicated by the dashed blocks corresponding to slot #5, slot #6 and slot #7 are located within downlink symbols and are thus unavailable, meaning PUCCH repetitions cannot be transmitted thereon.

**Manner 2:** The target parameter set is determined based on the first parameter set.

In some embodiments, the first parameter set is associated with a first type of time-domain resource, the first type of time-domain resource is an SBFD-type time-domain resource, and the second type of time-domain resource is a non-SBFD-type time-domain resource.

For example, the SBFD-type time-domain resource is a time-domain resource including a first subband, where the first subband is configured for the network device to perform an SBFD operation, for example, the first subband is an uplink subband or a downlink subband.

FIG. 16 illustrates a schematic diagram of an uplink channel transmission method according to an exemplary embodiment of the present disclosure. Taking an uplink channel being a PUCCH as an example, assume that a number of PUCCH repetitions is configured or indicated by the network device as ${N}_{PUCCH}^{repeat} = 4$, and a first repetition of the PUCCH is configured or indicated by the network device to start from slot #3. Assume that SBFD symbols and non-SBFD symbols correspond to two sets of PUCCH resource configurations. For the PUCCH resource configuration corresponding to SBFD symbols, PUCCH resources (resource sets) are configured within the uplink subband (e.g., inside the dashed ellipse). For the PUCCH resource configuration corresponding to non-SBFD symbols, PUCCH resources (resource sets) are arranged at the top of the uplink Bandwidth Part (BWP) (e.g., inside the solid ellipse).

According to Manner 2, target parameter sets corresponding to four PUCCH repetitions are determined according to parameter sets corresponding to SBFD symbols. PUCCH repetitions are transmitted using the resources denoted by black blocks, and this scheme applies to all PUCCH repetitions. That is, black squares corresponding to slot #3, slot #4, slot #5, and slot #6 are resources for four actual PUCCH repetitions.

**Manner 3: A** determination manner of the target parameter set is selected from at least two determination manners based on first information or a first condition.

The at least two determination manners include a first determination manner and a second determination manner. The first determination manner is based on a first repetition of the uplink channel (Manner 1); and the second determination manner is based on the first parameter set (Manner 2).

In some embodiments, the first information may be configured or indicated by the network device, or the first information may be agreed in a communication protocol.

In some embodiments, the first information may be configured or indicated by the network device based on a type of UCI carried by the uplink channel; or the first information may be agreed in the communication protocol based on the type of the UCI carried by the uplink channel.

In some embodiments, the operation of determining the target parameter set based on the first information according to one of the at least two determination manners may include: determining the target parameter set according to the first determination manner when the type of the UCI is CSI or SR; or determining the target parameter set according to the second determination manner when the type of the UCI is HARQ-ACK.

In some embodiments, the first condition relates to at least one of a first quantity or a second quantity; the first quantity is a number of time-domain units included in a first time-domain resource range, the second quantity is a number of time-domain units included in a second time-domain resource range, the first time-domain resource range is a time-domain resource range occupied for repetitions of the uplink channel determined using the first determination manner, the second time-domain resource range is a time-domain resource range occupied for repetitions of the uplink channel determined using the second determination manner, and the time-domain resource range is a range from a starting time-domain resource corresponding to the first repetition of the uplink channel to an ending time-domain resource corresponding to a last repetition of the uplink channel.

For example, when the first quantity is greater than or equal to the second quantity, the second determination manner is adopted; when the first quantity is less than or equal to the second quantity, the first determination manner is adopted.

For example, when the first quantity is greater than a first threshold, the second determination manner is adopted; when the first quantity is less than the first threshold, the first determination manner is adopted; wherein the first threshold is a preset value.

For example, when a first range includes a first type of time-domain resource, the second determination manner is adopted; when the first range does not include the first type of time-domain resource, the first determination manner is adopted; wherein the first range is between a first time-domain resource and a last time-domain resource of the first quantity of time-domain resources.

**Manner 4:** The target parameter set is determined based on a type of a time-domain resource corresponding to each repetition of the uplink channel.

In some embodiments, when a type of a time-domain resource corresponding to an i-th repetition of the uplink channel is a first type of time-domain resource, the target parameter set is determined as the first parameter set; and/or, when the type of the time-domain resource corresponding to the i-th repetition of the uplink channel is a second type of time-domain resource, the target parameter set is determined as the second parameter set, where i is a positive integer.

FIG. 17 illustrates a schematic diagram of an uplink channel transmission method according to an exemplary embodiment of the present disclosure. Taking an uplink channel being a PUCCH as an example, assume that a number of PUCCH repetitions is configured or indicated by the network device as N^{repeat}_{PUCCH}=4, and a first repetition of the PUCCH is configured or indicated by the network device to start from slot #3. Assume that SBFD symbols and non-SBFD symbols correspond to two sets of PUCCH resource configurations. For the PUCCH resource configuration corresponding to SBFD symbols, PUCCH resources (resource sets) are configured within the uplink subband (e.g., inside the dashed ellipse). For the PUCCH resource configuration corresponding to non-SBFD symbols, PUCCH resources (resource sets) are arranged at the top of the uplink BWP (e.g., inside the solid ellipse).

According to Manner 4, a first repetition and a second repetition of the PUCCH are within uplink symbols, that is, non-SBFD symbols. Therefore, target parameter sets corresponding to the first repetition and the second repetition of the PUCCH are determined according to parameter sets corresponding to non-SBFD symbols. A third repetition and a fourth repetition of the PUCCH are within SBFD symbols, therefore, target parameter sets corresponding to the third repetition and the fourth repetition of the PUCCH are determined according to parameter sets corresponding to SBFD symbols. Due to the limitation of soft combining for polar coding, different PUCCH repetitions need to occupy an equal number of RBs or REs. Therefore, black squares corresponding to slot #3, slot #4, slot #5, and slot #6 are required to have the same total number of RBs or REs, or correspond to the same parameters such as the number of symbols, code rate, PUCCH format and the number of repetitions.

**Step 1870:** The terminal device 120 transmits the uplink channel according to the target parameter set.

The uplink channel is a repeatedly transmitted uplink channel, the target parameter set is a first parameter set and/or a second parameter set, the first parameter set is associated with a first type of time-domain resource, and the second parameter set is associated with a second type of time-domain resource.

In some embodiments, the network device 110 may receive the uplink channel from the terminal device 120 based on the first parameter set and/or the second parameter set.

In summary, the method provided by this embodiment includes transmitting an uplink channel by a terminal device according to the target parameter set, wherein the uplink channel is a repeatedly transmitted uplink channel, the target parameter set is a first parameter set and/or a second parameter set, the first parameter set is associated with a first type of time-domain resource, and the second parameter set is associated with a second type of time-domain resource, enabling the terminal device to use different target parameter sets to transmit the uplink channel when facing different types of time-domain resources.

FIG. 21 illustrates a flowchart of an uplink channel receiving method according to an exemplary embodiment of the present disclosure. The method is performed by a network device and includes:
**Step 2110:** receiving an uplink channel according to a target parameter set, wherein the uplink channel is an uplink channel repeatedly transmitted by a terminal device, the target parameter set is a first parameter set and/or a second parameter set, the first parameter set is associated with a first type of time-domain resource, and the second parameter set is associated with a second type of time-domain resource.

As an example and not a limitation, the uplink channel includes at least one of: a PUCCH, a PUSCH, or a PRACH. This is not limited in the embodiments of the present disclosure. An example in which the uplink channel is a PUCCH is used for illustration, and the PUCCH in the embodiments of the present disclosure is an exemplary example and may be generalized to an uplink channel.

In some embodiments, the first type of time-domain resource is an SBFD-type time-domain resource, and the second type of time-domain resource is a non-SBFD-type time-domain resource.

For example, the SBFD-type time-domain resource is a symbol or slot including a first subband, where the first subband is configured for the network device to perform an SBFD operation, for example, the first subband is an uplink subband or a downlink subband.

For example, the time-domain resource includes at least one of: a symbol, a symbol group, a slot, a sub-slot, a frame, or a subframe. The embodiments of the present disclosure do not limit a specific type of the time-domain resource. Usually, as an example for illustration, the first parameter set is associated with a first type of symbol and the second parameter set is associated with a corresponding second type of symbol. For example, the first parameter set is associated with SBFD symbols, and the second parameter set is associated with non-SBFD symbols. The SBFD symbols are symbols including at least one of an uplink subband, a downlink subband, or a guard band; and the non-SBFD symbols are symbols not including the above subbands.

In some embodiments, the first parameter set is applicable to a slot in which all symbols are SBFD symbols, and is also applicable to a slot in which some symbols are SBFD symbols; the second parameter set is applicable to a slot in which all symbols are non-SBFD symbols, and is also applicable to a slot in which some symbols are non-SBFD symbols.

In some embodiments, a repetition of the uplink channel, a repeated transmission of the uplink channel, a transmission of the uplink channel, and other expressions have a same meaning. For example, a first transmission of the uplink channel means a first repetition of the uplink channel, and a second transmission of the uplink channel is not used to represent a first repetition of the uplink channel.

As an example and not a limitation, the target parameter set includes at least one of the following parameters: an uplink channel resource set; an uplink channel resource; an uplink channel format; a time-domain parameter set; a frequency-domain parameter set; a repetition parameter set; or a code rate parameter.

Taking the uplink channel being a PUCCH as an example, the uplink channel resource set is a PUCCH resource set (PUCCH-ResourceSet), the uplink channel resource is a PUCCH resource (PUCCH-Resource), and the uplink channel format is a PUCCH format (PUCCH-FormatConfig); the time-domain parameter set includes at least one of a starting symbol (startingSymbolIndex) or a number of symbols (nrofSymbols); the frequency-domain parameter set includes at least one of frequency domain starting positions before and after frequency hopping: a starting Physical Resource Block (startingPRB) or a second hop Physical Resource Block (secondHopPRB); the repetition parameter set includes at least one of a number of slots (nrofslots) or a number of slots for PUCCH repetition (pucch-RepetitionNrofSlots-r17); and the code rate parameter includes a maximum code rate (maxCodeRate).

In some embodiments, the target parameter set may be determined in at least one of the following manners.

**Manner 1:** The target parameter set is determined based on a first repetition of the uplink channel.

In some embodiments, the target parameter set may be determined based on a type of a time-domain resource for the first repetition.

The type of the time-domain resource includes a first type of time-domain resource and a second type of time-domain resource. When the type of the time-domain resource for the first repetition is the first type of time-domain resource, the target parameter set is determined as the first parameter set; when the type of the time-domain resource for the first repetition is the second type of time-domain resource, the target parameter set is determined as the second parameter set.

In some embodiments, the first repetition is: a configured or indicated first repetition of the uplink channel by a network device; or a first actual repetition of the uplink channel.

The first repetition configured or indicated by the network device for the uplink channel may occur on a downlink symbol, resulting in no corresponding uplink channel resource being configured and transmission being unachievable. Therefore, the first actual transmission of the uplink channel may be selected as the first repetition.

FIG. 15 illustrates a schematic diagram of an uplink channel transmission method according to an exemplary embodiment of the present disclosure. Taking an uplink channel being a PUCCH as an example, assume that a number of PUCCH repetitions is configured or indicated by the network device as ${N}_{PUCCH}^{repeat} = 4$, and a first repetition of the PUCCH is configured or indicated by the network device to start from slot #3. Assume that SBFD symbols and non-SBFD symbols correspond to two sets of PUCCH resource configurations. For the PUCCH resource configuration corresponding to SBFD symbols, PUCCH resources (resource sets) are configured within the uplink subband (e.g., inside the dashed ellipse). For the PUCCH resource configuration corresponding to non-SBFD symbols, PUCCH resources (resource sets) are arranged at the top of the uplink Bandwidth Part (BWP) (e.g., inside the solid ellipse).

According to Manner 1, target parameter sets corresponding to four PUCCH repetitions are determined according to the first repetition of the PUCCH, that is, the first repetition of the PUCCH corresponding to slot #3. PUCCH repetitions are transmitted through resources represented by black squares, and parameter sets of subsequent PUCCH repetitions are all determined according to the parameter set of the first repetition of the PUCCH. That is, black squares corresponding to slot #3, slot #4, slot #8, and slot #9 are resources for four actual PUCCH repetitions, while resources indicated by the dashed blocks corresponding to slot #5, slot #6 and slot #7 are located within downlink symbols and are thus unavailable, meaning PUCCH repetitions cannot be transmitted thereon.

Taking the uplink channel being a PUCCH as an example, this manner is the simplest, consistent with a legacy design logic, and can minimize an impact of uplink resource fragmentation and preserve more consecutive uplink resources for PUSCH transmission.

**Manner 2:** The target parameter set is determined based on the first parameter set.

In some embodiments, the first parameter set is associated with a first type of time-domain resource, the first type of time-domain resource is an SBFD-type time-domain resource, and the second type of time-domain resource is a non-SBFD-type time-domain resource.

For example, the SBFD-type time-domain resource is a time-domain resource including a first subband, where the first subband is configured for the network device to perform an SBFD operation, for example, the first subband is an uplink subband or a downlink subband.

FIG. 16 illustrates a schematic diagram of an uplink channel transmission method according to an exemplary embodiment of the present disclosure. Taking an uplink channel being a PUCCH as an example, assume that a number of PUCCH repetitions is configured or indicated by the network device as ${N}_{PUCCH}^{repeat} = 4$, and a first repetition of the PUCCH is configured or indicated by the network device to start from slot #3. Assume that SBFD symbols and non-SBFD symbols correspond to two sets of PUCCH resource configurations. For the PUCCH resource configuration corresponding to SBFD symbols, PUCCH resources (resource sets) are configured within the uplink subband (e.g., inside the dashed ellipse). For the PUCCH resource configuration corresponding to non-SBFD symbols, PUCCH resources (resource sets) are arranged at the top of the uplink Bandwidth Part (BWP) (e.g., inside the solid ellipse).

According to Manner 2, target parameter sets corresponding to four PUCCH repetitions are determined according to parameter sets corresponding to SBFD symbols. PUCCH repetitions are transmitted using the resources denoted by black blocks, and this scheme applies to all PUCCH repetitions. That is, black squares corresponding to slot #3, slot #4, slot #5, and slot #6 are resources for four actual PUCCH repetitions.

Taking the uplink channel being a PUCCH as an example, this manner can complete PUCCH repetition at a fastest speed with low latency.

**Manner 3:** A determination manner of the target parameter set is selected from at least two determination manners based on first information or a first condition.

The at least two determination manners include a first determination manner and a second determination manner. The first determination manner is based on a first repetition of the uplink channel (Manner 1); and the second determination manner is based on the first parameter set (Manner 2).

In some embodiments, the first information may be configured or indicated by the network device, or the first information may be agreed in a communication protocol.

In some embodiments, the first information may be configured or indicated by the network device based on a type of UCI carried by the uplink channel; or the first information may be agreed in the communication protocol based on the type of the UCI carried by the uplink channel; wherein the type of the UCI includes at least one of CSI, SR, or HARQ-ACK.

In some embodiments, the operation of determining the target parameter set based on the first information according to one of the at least two determination manners may include: determining the target parameter set according to the first determination manner when the type of the UCI is CSI or SR; or determining the target parameter set according to the second determination manner when the type of the UCI is HARQ-ACK.

Since CSI and SR are not latency-sensitive, the first determination manner (Manner 1) is adopted to mitigate the impact of uplink channel resource fragmentation. HARQ-ACK is latency-sensitive, the second determination manner (Manner 2) enables faster completion of repetitive transmission.

In some embodiments, the first condition relates to at least one of a first quantity and a second quantity; the first quantity is a number of time-domain units included in a first time-domain resource range, the second quantity is a number of time-domain units included in a second time-domain resource range, the first time-domain resource range is a time-domain resource range occupied for repetitions of the uplink channel determined using the first determination manner, the second time-domain resource range is a time-domain resource range occupied for repetitions of the uplink channel determined using the second determination manner, and the time-domain resource range is a range from a starting time-domain resource corresponding to the first repetition of the uplink channel to an ending time-domain resource corresponding to a last repetition of the uplink channel.

Exemplarily, taking the time-domain resource being a slot as an example, a range of slots occupied for transmitting repetitions of the uplink channel according to the first determination manner is N1 (the first quantity), and a range of slots occupied for transmitting repetitions of the uplink channel according to the second determination manner is N2 (the second quantity).

In some embodiments, when the first quantity is greater than or equal to the second quantity, the second determination manner is adopted; when the first quantity is less than or equal to the second quantity, the first determination manner is adopted.

Exemplarily, when N1 is 4 and N2 is 2, N1 is greater than N2, the second determination manner is adopted; when N1 is 2 and N2 is 4, N1 is less than N2, the first determination manner is adopted; when N1 and N2 are equal, the first determination manner or the second determination manner is adopted.

In some embodiments, when the first quantity is greater than a first threshold, the second determination manner is adopted; when the first quantity is less than the first threshold, the first determination manner is adopted; wherein the first threshold is a preset value.

Exemplarily, the first threshold is 4. When N1 is 6, the second determination manner is adopted; when N1 is 2, the first determination manner is adopted; when N1 is 4, the first determination manner or the second determination manner is adopted.

In some embodiments, when a first range includes a first type of time-domain resource, the second determination manner is adopted; when the first range does not include the first type of time-domain resource, the first determination manner is adopted; wherein the first range is between a first time-domain resource and a last time-domain resource of the first quantity of time-domain resources.

Exemplarily, when N1 is 4, the time-domain resource is a slot and the first type of time-domain resource is an SBFD symbol, the first slot is slot #3, the second slot is slot #4, the third slot is slot #8, and the fourth slot is slot #9. When an SBFD symbol is included between slot #3 and slot #9, the second determination manner is adopted.

When it cannot be determined which determination manner to use, the determination is performed according to the first information or the first condition, which combines advantages of the two determination manners.

**Manner 4:** The target parameter set is determined based on a type of a time-domain resource corresponding to each repetition of the uplink channel.

In some embodiments, when a type of a time-domain resource corresponding to an i-th repetition of the uplink channel is a first type of time-domain resource, the target parameter set is determined as the first parameter set; and/or, when the type of the time-domain resource corresponding to the i-th repetition of the uplink channel is a second type of time-domain resource, the target parameter set is determined as the second parameter set, where i is a positive integer.

In some embodiments, the first type of time-domain resource is an SBFD-type time-domain resource, and the second type of time-domain resource is a non-SBFD-type time-domain resource.

For example, the SBFD-type time-domain resource is a symbol or slot including a first subband, where the first subband is configured for the network device to perform an SBFD operation, for example, the first subband is an uplink subband or a downlink subband; the non-SBFD-type time-domain resource is a non-SBFD symbol or slot, for example, an uplink symbol or an uplink slot.

Exemplarily, when the time-domain resource is a symbol, the uplink channel is a PUCCH, and the number of repetitions is 4, when a symbol type corresponding to a first repetition of the PUCCH is an SBFD-type symbol, the target parameter set is determined as the first parameter set; when a symbol type corresponding to a second repetition of the PUCCH is an SBFD-type symbol, the target parameter set is determined as the first parameter set; when a symbol type corresponding to a third repetition of the PUCCH is a non-SBFD-type symbol, the target parameter set is determined as the second parameter set; and when a symbol type corresponding to a fourth repetition of the PUCCH is a non-SBFD-type symbol, the target parameter set is determined as the second parameter set.

FIG. 17 illustrates a schematic diagram of an uplink channel transmission method according to an exemplary embodiment of the present disclosure. Taking an uplink channel being a PUCCH as an example, assume that a number of PUCCH repetitions is configured or indicated by the network device as ${N}_{PUCCH}^{repeat} = 4$, and a first repetition of the PUCCH is configured or indicated by the network device to start from slot #3. Assume that SBFD symbols and non-SBFD symbols correspond to two sets of PUCCH resource configurations. For the PUCCH resource configuration corresponding to SBFD symbols, PUCCH resources (resource sets) are configured within the uplink subband (e.g., inside the dashed ellipse). For the PUCCH resource configuration corresponding to non-SBFD symbols, PUCCH resources (resource sets) are arranged at the top of the uplink BWP (e.g., inside the solid ellipse).

According to Manner 4, a first repetition and a second repetition of the PUCCH are within uplink symbols, that is, non-SBFD symbols. Therefore, target parameter sets corresponding to the first repetition and the second repetition of the PUCCH are determined according to parameter sets corresponding to non-SBFD symbols. A third repetition and a fourth repetition of the PUCCH are within SBFD symbols, therefore, target parameter sets corresponding to the third repetition and the fourth repetition of the PUCCH are determined according to parameter sets corresponding to SBFD symbols. Due to the limitation of soft combining for polar coding, different PUCCH repetitions need to occupy an equal number of RBs or REs. Therefore, black squares corresponding to slot #3, slot #4, slot #5, and slot #6 are required to have the same total number of RBs or REs, or correspond to the same parameters such as the number of symbols, code rate, PUCCH format and the number of repetitions.

Taking the uplink channel being a PUCCH as an example, this manner can complete PUCCH repetition at a fastest speed with low latency, and can minimize an impact of uplink resource fragmentation and preserve more consecutive uplink resources for PUSCH transmission.

In summary, the method provided by this embodiment includes receiving an uplink channel by a network device according to a target parameter set, wherein the uplink channel is an uplink channel repeatedly transmitted by a terminal device, the target parameter set is a first parameter set and/or a second parameter set, the first parameter set is associated with a first type of time-domain resource, and the second parameter set is associated with a second type of time-domain resource, enabling the network device to use different target parameter sets to receive the uplink channel when facing different types of time-domain resources.

FIG. 22 illustrates a flowchart of an uplink channel resource indicating method according to an exemplary embodiment of the present disclosure. The method is performed by a network device and includes:
**Step 2210:** sending an uplink channel resource ID, wherein the uplink channel resource ID is used to indicate a target uplink channel resource among uplink channel resources determined through a first parameter set and/or a second parameter set, the first parameter set corresponds to a first type of time-domain resource, and the second parameter set corresponds to a second type of time-domain resource.

In some embodiments, before step 2210, the method may further include: configuring the first parameter set and/or the second parameter set.

In some embodiments, the first parameter set and/or the second parameter set includes a related parameter set of a repetition of the uplink channel.

As an example and not a limitation, the uplink channel includes at least one of: a PUCCH, a PUSCH, or a PRACH. This is not limited in the embodiments of the present disclosure. An example in which the uplink channel is a PUCCH is used for illustration, and the PUCCH in the embodiments of the present disclosure is an exemplary example and may be generalized to an uplink channel.

In some embodiments, a repetition of the uplink channel, a repeated transmission of the uplink channel, a transmission of the uplink channel, and other expressions have a same meaning. For example, a first transmission of the uplink channel means a first repetition of the uplink channel.

In some embodiments, the network device may configure the first parameter set and/or the second parameter set through RRC signaling.

In other embodiments, the network device may configure the first parameter set and/or the second parameter set through other signaling including a MAC CE. This is not limited in the embodiments of the present disclosure.

In some embodiments, the first parameter set is associated with a first type of time-domain resource, and the second parameter set is associated with a second type of time-domain resource.

For example, the time-domain resource includes at least one of: a symbol, a symbol group, a slot, a sub-slot, a frame, or a subframe. The embodiments of the present disclosure do not limit a specific type of the time-domain resource. Usually, an example in which the first parameter set is associated with the first type of symbol and the second parameter set is associated with the second type of symbol is configured for illustration. For example, the first parameter set is associated with SBFD symbols, and the second parameter set is associated with non-SBFD symbols. The SBFD symbols are symbols including at least one of an uplink subband, a downlink subband, or a guard band; and the non-SBFD symbols are symbols not including the above subbands.

In some embodiments, after configuring the first parameter set and/or the second parameter set, the method may further include: the network device generates first DCI.

Taking the uplink channel carrying HARQ-ACK, the uplink channel being a PUCCH, and a repetition of the uplink channel being a PUCCH repetition as an example, the network device determines a PDSCH resource according to downlink data to be transmitted. FIG. 19 illustrates a schematic diagram of determining PUCCH resources according to an exemplary embodiment of the present disclosure. After determining the PDSCH resource, as shown in FIG. 19, the network device determines a slot for a first repetition of the PUCCH based on a time-domain offset from the PDSCH to HARQ-ACK.

In the slot for the first repetition of the PUCCH, a PUCCH resource (① in FIG. 19, equivalent to ③ in FIG. 8) is selected from a plurality of pre-configured PUCCH resources as a resource for the first repetition of the PUCCH.

In some embodiments, after determining the resource for the first repetition of the PUCCH, the network device may determine resources for subsequent repetitions of the PUCCH based on the resource for the first repetition of the PUCCH, or based on the first type of time-domain resource.

In some embodiments, when the resource for the first repetition of the PUCCH falls on the first type of time-domain resource, the network device may determine resources for subsequent repetitions of the PUCCH based on the first type of time-domain resource.

In some embodiments, when the resource for the first repetition of the PUCCH falls on the first type of time-domain resource or the second type of time-domain resource, the network device may determine resources for subsequent repetitions of the PUCCH based on the resource for the first repetition of the PUCCH.

Exemplarily, taking the uplink channel being a PUCCH as an example, when the number of PUCCH repetitions is four, the network device determines a resource for a second repetition of the PUCCH (② in FIG. 19), a resource for a third repetition of the PUCCH (③ in FIG. 19), and a resource for a fourth repetition of the PUCCH (④ in FIG. 19) based on the resource for the first repetition of the PUCCH.

In some embodiments, the network device may check whether the selected resource satisfies a service requirement. For example, whether each resource can accommodate more bits than the pending HARQ-ACK feedback bits, and whether a last resource satisfies a latency requirement. Satisfying the latency requirement means that latency between a last repetition of the uplink channel and a PDSCH resource is less than a preset latency threshold.

In some embodiments, the network device may determine a PUSCH resource according to first data information, where the PUSCH resource is configured to transmit uplink data. The first data information includes: uplink channel quality, transmission data size, network device load, and other information.

In some embodiments, the network device may generate first DCI, where the first DCI includes at least one of: time-domain resource information; frequency-domain resource information; time-domain offset information; number of repetitions information; or a PRI.

In some embodiments, the network device may generate the time-domain resource information according to a time-domain resource of a PUSCH; generate the frequency-domain resource information according to a frequency-domain resource of the PUSCH; generate the time-domain offset information according to a time-domain offset from PDSCH to HARQ-ACK; generate the number of repetitions information according to the number of repetitions of the uplink channel; and generate the PRI according to a resource position of a first repetition of the uplink channel.

In some embodiments, a value of the PRI is used to indicate which resource in a pre-configured PUCCH resource set is occupied for a first repetition of the uplink channel.

Exemplarily, the value of the PRI is represented by a preset number of bits. For example, the value of the PRI is represented by three bits. A first bit is used to indicate whether a first repetition of the uplink channel is located in a first type of time-domain resource or a second type of time-domain resource, and a second bit and a third bit are used to indicate a sequence number of an uplink channel resource occupied for the first repetition of the uplink channel.

Exemplarily, when the PRI value is 010, "0" is used to indicate that a first repetition of the uplink channel is located in a first type of time-domain resource, for example, in SBFD symbols; "10" is used to indicate that a first repetition of the uplink channel occupies a third uplink channel resource; and "010" is used to indicate that the first repetition of the uplink channel occupies a third uplink channel resource in SBFD symbols.

In some embodiments, after generating the first DCI, the method may further include: the network device sends the first DCI.

In some embodiments, the first DCI is used to indicate a resource for a first repetition of the uplink channel used by the terminal device. Taking the uplink channel being a PUCCH as an example, the first DCI is used to indicate a resource for a first repetition of the PUCCH used by the terminal device.

In some embodiments, the first DCI may carry an uplink channel resource ID, where the uplink channel resource ID is used to indicate a resource for a first repetition of the uplink channel used by the terminal device.

For example, the uplink channel resource ID is represented by a PRI. Exemplarily, when the PRI value is 010, "0" is used to indicate that a first repetition of the uplink channel is located in a first type of time-domain resource, for example, in SBFD symbols; "10" is used to indicate that the first repetition of the uplink channel occupies a third uplink channel resource; and "010" is used to indicate that the first repetition of the uplink channel occupies a third uplink channel resource in SBFD symbols.

In some embodiments, the first DCI may carry time-domain offset information, where the time-domain offset information is used to indicate a time-domain offset from PDSCH to HARQ-ACK.

FIG. 20 illustrates a schematic diagram of determining PUCCH resources according to an exemplary embodiment of the present disclosure. In some embodiments, taking an uplink channel being a PUCCH as an example, since the PUCCH resource determination manner is to first determine a slot where a HARQ-ACK is located according to a PDSCH-to-HARQ-ACK time-domain offset configuration indicated in DCI, and then indicate a PUCCH resource in the slot through a PRI in the DCI, as shown in FIG. 20, if the terminal device receives DCI 1 (first DCI) from the network device, the DCI 1 schedules transmission of PDSCH 1. Based on the PDSCH-to-HARQ-ACK time-domain offset, slot 1 is determined after PDSCH 1. Assuming that the PRI value in DCI 1 is 010, which is used to indicate the third PUCCH resource in SBFD symbols, the PUCCH resource is configured for the first repetition of the PUCCH.

In some embodiments, the uplink channel resource ID is used to indicate a first target uplink channel resource among the uplink channel resources determined through the first parameter set.

In some embodiments, the uplink channel resource ID is used to indicate the first target uplink channel resource as a target uplink channel resource when the first target uplink channel resource satisfies a second condition; and/or, when the first target uplink channel resource does not satisfy the second condition, indicate a second target uplink channel resource among the uplink channel resources determined through the second parameter set as the target uplink channel resource.

In some embodiments, the first type of time-domain resource includes SBFD symbols, the second type of time-domain resource includes non-SBFD symbols, and the second condition includes: the first target uplink channel resource entirely occupies SBFD symbols and a corresponding frequency-domain resource is completely within an uplink subband, or the first target uplink channel resource entirely occupies non-SBFD symbols.

Taking the uplink channel being a PUCCH as an example, the second condition includes: the first target PUCCH resource entirely occupies SBFD symbols and a corresponding frequency-domain resource is completely within an uplink subband, or the first target PUCCH resource entirely occupies non-SBFD symbols.

In some embodiments, the uplink channel resource ID is used to indicate the second target uplink channel resource as a target uplink channel resource when the second target uplink channel resource satisfies a third condition; and/or, when the second target uplink channel resource does not satisfy the third condition, indicate a first target uplink channel resource among the uplink channel resources determined through the first parameter set as the target uplink channel resource.

In some embodiments, the first type of time-domain resource includes SBFD symbols, the second type of time-domain resource includes non-SBFD symbols, and the third condition includes: the second target uplink channel resource entirely occupies SBFD symbols and a corresponding frequency-domain resource is completely within an uplink subband, or the second target uplink channel resource entirely occupies non-SBFD symbols.

Taking the uplink channel being a PUCCH as an example, the third condition includes: the second target PUCCH resource entirely occupies SBFD symbols and a corresponding frequency-domain resource is completely within an uplink subband, or the second target PUCCH resource entirely occupies non-SBFD symbols.

In some embodiments, the uplink channel resource ID is used to indicate a first target uplink channel resource among the uplink channel resources determined through the first parameter set, and the uplink channel resource ID is also used to indicate a second target uplink channel resource among the uplink channel resources determined through the second parameter set. The method may further include: indicating the target uplink channel resource from the first target uplink channel resource and the second target uplink channel resource through a first indication manner.

In some embodiments, the first indication manner includes at least one of: indicating an uplink channel resource having an earlier time-domain resource as the target uplink channel resource; indicating an uplink channel resource occupying a largest or smallest number of time-domain resources as the target uplink channel resource; or indicating an uplink channel resource overlapping with another uplink channel resource as the target uplink channel resource.

For example, the earlier time-domain resource includes at least one of: an earlier start time, or an earlier end time.

Exemplarily, taking the uplink channel being a PUCCH as an example, in FIG. 12, a value of the uplink channel resource ID is 2, the shaded block (2) is the first target PUCCH resource, and the shaded block 2 is the second target PUCCH resource. Since the first target PUCCH resource has an earlier time-domain resource, the first target PUCCH resource is indicated as the target PUCCH resource.

Indicating an uplink channel resource having an earlier time-domain resource as the target uplink channel resource allows for selecting an uplink channel with lowest latency.

In FIG. 12, the value of the uplink channel resource ID is 2, the shaded block ② is the first target PUCCH resource, and the shaded block 2 is the second target PUCCH resource. The first target PUCCH resource occupies a larger number of time-domain resources than the second target PUCCH resource. Therefore, the first target PUCCH resource is indicated as the target PUCCH resource.

Indicating an uplink channel resource occupying a largest number of time-domain resources as the target uplink channel resource may increase a coverage range of data transmission and improve reliability of data transmission.

The overlapping includes partial overlapping and complete overlapping. Taking partial overlapping as an example, in FIG. 13, the shaded block ③ is the first target PUCCH resource, and the shaded block 3 is the second target PUCCH resource. The first target PUCCH resource partially overlaps another uplink channel resource (shaded block ⑧), while the second target PUCCH resource does not overlap with another uplink channel resource. Therefore, the first target PUCCH resource is indicated as the target PUCCH resource.

Indicating an uplink channel resource overlapping with another uplink channel resource as the target uplink channel resource enables resource multiplexing for transmission and reduces power consumption of the terminal device.

In some embodiments, a plurality of first indication manners may be used in any combination. This is not limited in the embodiments of the present disclosure.

Exemplarily, a target uplink channel is first indicated according to a first first indication manner (i.e., indicating an uplink channel resource having an earlier time-domain resource as the target uplink channel resource). Taking the time-domain resource being a symbol as an example, as shown in FIG. 11, starting symbols of the shaded block ④ and the shaded block 4 are the same. When starting symbols of two uplink channel resources are the same, a target uplink channel is indicated according to a second first indication manner (i.e., indicating an uplink channel resource occupying a largest or smallest number of time-domain resources as the target uplink channel resource). As shown in FIG. 11, the shaded block ④ occupies two symbols, and the shaded block 4 occupies one symbol. The shaded block ③ occupies a larger number of symbols. Therefore, the shaded block ④ is indicated as the target uplink channel resource.

In summary, the method provided by this embodiment includes sending an uplink channel resource ID which is used to indicate a target uplink channel resource among uplink channel resources determined through a first parameter set and/or a second parameter set, the first parameter set corresponding to a first type of time-domain resource and the second parameter set corresponding to a second type of time-domain resource, enabling the network device to indicate an appropriate target uplink channel resource according to different requirements.

In the above embodiments, the embodiment corresponding to FIG. 10, the embodiment corresponding to FIG. 14, the embodiment corresponding to FIG. 18, the embodiment corresponding to FIG. 21, and the embodiment corresponding to FIG. 22 may be implemented separately or in combination. This is not limited in the present disclosure.

FIG. 23 is a block diagram of an uplink channel transmission apparatus according to an exemplary embodiment of the present disclosure. The uplink channel transmission apparatus may be implemented as a terminal device through software or hardware or a combination thereof, or implemented as a part of a terminal device. The uplink channel transmission apparatus includes:
A transmission module 2310, configured to: transmit an uplink channel according to a target parameter set, wherein the uplink channel is a repeatedly transmitted uplink channel, the target parameter set is a first parameter set and/or a second parameter set, the first parameter set is associated with a first type of time-domain resource, and the second parameter set is associated with a second type of time-domain resource.

As an example and not a limitation, the uplink channel includes at least one of: a PUCCH, a PUSCH, or a PRACH. This is not limited in the embodiments of the present disclosure. An example in which the uplink channel is a PUCCH is used for illustration, and the PUCCH in the embodiments of the present disclosure is an exemplary example and may be generalized to an uplink channel.

In a possible design of this embodiment, the first type of time-domain resource is an SBFD-type time-domain resource, and the second type of time-domain resource is a non-SBFD-type time-domain resource.

For example, the SBFD-type time-domain resource is a symbol or slot including a first subband, where the first subband is configured for the network device to perform an SBFD operation, for example, the first subband is an uplink subband or a downlink subband.

For example, the time-domain resource includes at least one of: a symbol, a symbol group, a slot, a sub-slot, a frame, or a subframe. The embodiments of the present disclosure do not limit a specific type of the time-domain resource. Usually, as an example for illustration, the first parameter set is associated with a first type of symbol and the second parameter set is associated with a corresponding second type of symbol. For example, the first parameter set is associated with SBFD symbols, and the second parameter set is associated with non-SBFD symbols. The SBFD symbols are symbols including at least one of an uplink subband, a downlink subband, or a guard band; and the non-SBFD symbols are symbols not including the above subbands.

In a possible design of this embodiment, the first parameter set is applicable to a slot in which all symbols are SBFD symbols, and is also applicable to a slot in which some symbols are SBFD symbols; the second parameter set is applicable to a slot in which all symbols are non-SBFD symbols, and is also applicable to a slot in which some symbols are non-SBFD symbols.

In a possible design of this embodiment, a repetition of the uplink channel, a repeated transmission of the uplink channel, a transmission of the uplink channel, and other expressions have a same meaning. For example, a first transmission of the uplink channel means a first repetition of the uplink channel.

As an example and not a limitation, the target parameter set includes at least one of the following parameters: an uplink channel resource set; an uplink channel resource; an uplink channel format; a time-domain parameter set; a frequency-domain parameter set; a repetition parameter set; or a code rate parameter.

Taking the uplink channel being a PUCCH as an example, the uplink channel resource set is a PUCCH resource set (PUCCH-ResourceSet), the uplink channel resource is a PUCCH resource (PUCCH-Resource), and the uplink channel format is a PUCCH format (PUCCH-FormatConfig); the time-domain parameter set includes at least one of a starting symbol (startingSymbolIndex) or a number of symbols (nrofSymbols); the frequency-domain parameter set includes at least one of frequency domain starting positions before and after frequency hopping: a starting Physical Resource Block (startingPRB) or a second hop Physical Resource Block (secondHopPRB); the repetition parameter set includes at least one of a number of slots (nrofSlots) or a number of slots for PUCCH repetition (pucch-RepetitionNrofSlots-r17); and the code rate parameter includes a maximum code rate (maxCodeRate).

In a possible design of this embodiment, the target parameter set may be determined in at least one of the following manners.

**Manner** 1: The target parameter set is determined based on a first repetition of the uplink channel.

In a possible design of this embodiment, the target parameter set may be determined based on a type of a time-domain resource for the first repetition.

The type of the time-domain resource includes a first type of time-domain resource and a second type of time-domain resource. When the type of the time-domain resource for the first repetition is the first type of time-domain resource, the target parameter set is determined as the first parameter set; when the type of the time-domain resource for the first repetition is the second type of time-domain resource, the target parameter set is determined as the second parameter set.

In a possible design of this embodiment, the first repetition is: a configured or indicated first repetition of the uplink channel by a network device; or a first actual repetition of the uplink channel.

The first repetition configured or indicated by the network device for the uplink channel may occur on a downlink symbol, resulting in no corresponding uplink channel resource being configured and transmission being unachievable. Therefore, the first actual transmission of the uplink channel may be selected as the first repetition.

FIG. 15 illustrates a schematic diagram of an uplink channel transmission method according to an exemplary embodiment of the present disclosure. Taking an uplink channel being a PUCCH as an example, assume that a number of PUCCH repetitions is configured or indicated by the network device as ${N}_{PUCCH}^{repeat} = 4$, and a first repetition of the PUCCH is configured or indicated by the network device to start from slot #3. Assume that SBFD symbols and non-SBFD symbols correspond to two sets of PUCCH resource configurations. For the PUCCH resource configuration corresponding to SBFD symbols, PUCCH resources (resource sets) are configured within the uplink subband (e.g., inside the dashed ellipse). For the PUCCH resource configuration corresponding to non-SBFD symbols, PUCCH resources (resource sets) are arranged at the top of the uplink BWP (e.g., inside the solid ellipse).

According to Manner 1, target parameter sets corresponding to four PUCCH repetitions are determined according to the first repetition of the PUCCH, that is, the first repetition of the PUCCH corresponding to slot #3. PUCCH repetitions are transmitted through resources represented by black squares, and parameter sets of subsequent PUCCH repetitions are all determined according to the parameter set of the first repetition of the PUCCH. That is, black squares corresponding to slot #3, slot #4, slot #8, and slot #9 are resources for four actual PUCCH repetitions, while resources indicated by the dashed blocks corresponding to slot #5, slot #6 and slot #7 are located within downlink symbols and are thus unavailable, meaning PUCCH repetitions cannot be transmitted thereon.

aking the uplink channel being a PUCCH as an example, this manner is the simplest, consistent with a legacy design logic, and can minimize an impact of uplink resource fragmentation and preserve more consecutive uplink resources for PUSCH transmission.

**Manner** 2: The target parameter set is determined based on the first parameter set.

In a possible design of this embodiment, the first parameter set is associated with a first type of time-domain resource, the first type of time-domain resource is an SBFD-type time-domain resource, and the second type of time-domain resource is a non-SBFD-type time-domain resource.

For example, the SBFD-type time-domain resource is a time-domain resource including a first subband, where the first subband is configured for the network device to perform an SBFD operation, for example, the first subband is an uplink subband or a downlink subband.

FIG. 16 illustrates a schematic diagram of an uplink channel transmission method according to an exemplary embodiment of the present disclosure. Taking an uplink channel being a PUCCH as an example, assume that a number of PUCCH repetitions is configured or indicated by the network device as ${N}_{PUCCH}^{repeat} = 4$, and a first repetition of the PUCCH is configured or indicated by the network device to start from slot #3. Assume that SBFD symbols and non-SBFD symbols correspond to two sets of PUCCH resource configurations. For the PUCCH resource configuration corresponding to SBFD symbols, PUCCH resources (resource sets) are configured within the uplink subband (e.g., inside the dashed ellipse). For the PUCCH resource configuration corresponding to non-SBFD symbols, PUCCH resources (resource sets) are arranged at the top of the uplink Bandwidth Part (BWP) (e.g., inside the solid ellipse).

According to Manner 2, target parameter sets corresponding to four PUCCH repetitions are determined according to parameter sets corresponding to SBFD symbols. PUCCH repetitions are transmitted using the resources denoted by black blocks, and this scheme applies to all PUCCH repetitions. That is, black squares corresponding to slot #3, slot #4, slot #5, and slot #6 are resources for four actual PUCCH repetitions.

Taking the uplink channel being a PUCCH as an example, this manner can complete PUCCH repetition at a fastest speed with low latency.

**Manner** 3: A determination manner of the target parameter set is selected from at least two determination manners based on first information or a first condition.

The at least two determination manners include a first determination manner and a second determination manner. The first determination manner is based on a first repetition of the uplink channel (Manner 1); the second determination manner is based on the first parameter set (Manner 2).

In a possible design of this embodiment, the first information may be configured or indicated by the network device, or the first information may be agreed in a communication protocol.

In a possible design of this embodiment, the first information may be configured or indicated by the network device based on a type of UCI carried by the uplink channel; or the first information is agreed in the communication protocol based on the type of the UCI carried by the uplink channel; wherein the type of the UCI includes at least one of CSI, SR, or HARQ-ACK.

In a possible design of this embodiment, the operation of determining the target parameter set based on the first information according to one of the at least two determination manners may include:
determining the target parameter set according to the first determination manner when the type of the UCI is CSI or SR; or determining the target parameter set according to the second determination manner when the type of the UCI is HARQ-ACK.

Since CSI and SR are not latency-sensitive, the first determination manner (Manner 1) is adopted to mitigate the impact of uplink channel resource fragmentation. HARQ-ACK is latency-sensitive, the second determination manner (Manner 2) enables faster completion of repetitive transmission.

In a possible design of this embodiment, the first condition relates to at least one of a first quantity and a second quantity; the first quantity is a number of time-domain units included in a first time-domain resource range, the second quantity is a number of time-domain units included in a second time-domain resource range, the first time-domain resource range is a time-domain resource range occupied for repetitions of the uplink channel determined using the first determination manner, the second time-domain resource range is a time-domain resource range occupied for repetitions of the uplink channel determined using the second determination manner, and the time-domain resource range is a range from a starting time-domain resource corresponding to the first repetition of the uplink channel to an ending time-domain resource corresponding to a last repetition of the uplink channel.

Exemplarily, taking the time-domain resource being a slot as an example, a range of slots occupied for transmitting repetitions of the uplink channel according to the first determination manner is N1 (the first quantity), and a range of slots occupied for transmitting repetitions of the uplink channel according to the second determination manner is N2 (the second quantity).

In a possible design of this embodiment, when the first quantity is greater than or equal to the second quantity, the second determination manner is adopted; when the first quantity is less than or equal to the second quantity, the first determination manner is adopted.

Exemplarily, when N1 is 4 and N2 is 2, N1 is greater than N2, the second determination manner is adopted; when N1 is 2 and N2 is 4, N1 is less than N2, the first determination manner is adopted; when N1 and N2 are equal, the first determination manner or the second determination manner is adopted.

In a possible design of this embodiment, when the first quantity is greater than a first threshold, the second determination manner is adopted; when the first quantity is less than the first threshold, the first determination manner is adopted; wherein the first threshold is a preset value.

Exemplarily, the first threshold is 4. When N1 is 6, the second determination manner is adopted; when N1 is 2, the first determination manner is adopted; when N1 is 4, the first determination manner or the second determination manner is adopted.

In a possible design of this embodiment, when a first range includes a first type of time-domain resource, the second determination manner is adopted; when the first range does not include the first type of time-domain resource, the first determination manner is adopted; wherein the first range is between a first time-domain resource and a last time-domain resource of the first quantity of time-domain resources.

Exemplarily, when N1 is 4, the time-domain resource is a slot and the first type of time-domain resource is an SBFD symbol, the first slot is slot #3, the second slot is slot #4, the third slot is slot #8, and the fourth slot is slot #9. When an SBFD symbol is included between slot #3 and slot #9, the second determination manner is adopted.

When it cannot be determined which determination manner to use, the determination is performed according to the first information or the first condition, which combines advantages of the two determination manners.

**Manner 4:** The target parameter set is determined based on a type of a time-domain resource corresponding to each repetition of the uplink channel.

In a possible design of this embodiment, when a type of a time-domain resource corresponding to an i-th repetition of the uplink channel is a first type of time-domain resource, the target parameter set is determined as the first parameter set; and/or, when the type of the time-domain resource corresponding to the i-th repetition of the uplink channel is a second type of time-domain resource, the target parameter set is determined as the second parameter set, where i is a positive integer.

In a possible design of this embodiment, the first type of time-domain resource is an SBFD-type time-domain resource, and the second type of time-domain resource is a non-SBFD-type time-domain resource.

For example, the SBFD-type time-domain resource is a symbol or slot including a first subband, where the first subband is configured for the network device to perform an SBFD operation, for example, the first subband is an uplink subband or a downlink subband; the non-SBFD-type time-domain resource is a non-SBFD symbol or slot, for example, an uplink symbol or an uplink slot.

Exemplarily, when the time-domain resource is a symbol, the uplink channel is a PUCCH, and the number of repetitions is 4, when a symbol type corresponding to a first repetition of the PUCCH is an SBFD-type symbol, the target parameter set is determined as the first parameter set; when a symbol type corresponding to a second repetition of the PUCCH is an SBFD-type symbol, the target parameter set is determined as the first parameter set; when a symbol type corresponding to a third repetition of the PUCCH is a non-SBFD-type symbol, the target parameter set is determined as the second parameter set; and when a symbol type corresponding to a fourth repetition of the PUCCH is a non-SBFD-type symbol, the target parameter set is determined as the second parameter set.

FIG. 17 illustrates a schematic diagram of an uplink channel transmission method according to an exemplary embodiment of the present disclosure. Taking an uplink channel being a PUCCH as an example, assume that a number of PUCCH repetitions is configured or indicated by the network device as ${N}_{PUCCH}^{repeat} = 4$, and a first repetition of the PUCCH is configured or indicated by the network device to start from slot #3. Assume that SBFD symbols and non-SBFD symbols correspond to two sets of PUCCH resource configurations. For the PUCCH resource configuration corresponding to SBFD symbols, PUCCH resources (resource sets) are configured within the uplink subband (e.g., inside the dashed ellipse). For the PUCCH resource configuration corresponding to non-SBFD symbols, PUCCH resources (resource sets) are arranged at the top of the uplink BWP (e.g., inside the solid ellipse).

According to Manner 4, a first repetition and a second repetition of the PUCCH are within uplink symbols, that is, non-SBFD symbols. Therefore, target parameter sets corresponding to the first repetition and the second repetition of the PUCCH are determined according to parameter sets corresponding to non-SBFD symbols. A third repetition and a fourth repetition of the PUCCH are within SBFD symbols, therefore, target parameter sets corresponding to the third repetition and the fourth repetition of the PUCCH are determined according to parameter sets corresponding to SBFD symbols. Due to the limitation of soft combining for polar coding, different PUCCH repetitions need to occupy an equal number of RBs or Resource Elements (REs). Therefore, black squares corresponding to slot #3, slot #4, slot #5, and slot #6 are required to have the same total number of RBs or REs, or correspond to the same parameters such as the number of symbols, code rate, PUCCH format and the number of repetitions.

Taking the uplink channel being a PUCCH as an example, this manner can complete PUCCH repetition at a fastest speed with low latency, and can minimize an impact of uplink resource fragmentation and preserve more consecutive uplink resources for PUSCH transmission.

In a possible design of this embodiment, under Manner 4, the uplink channel transmission apparatus may expect at least one of the following: a first uplink channel resource and a second uplink channel resource occupy an equal number of resource units; a number of repetitions corresponding to the first uplink channel resource and a number of repetitions corresponding to the second uplink channel resource are the same; part of parameters in the first parameter set and the second parameter set are the same; the part of parameters in the first parameter set and the second parameter set come from a same uplink channel configuration; wherein the first uplink channel resource is determined according to the first parameter set, and the second uplink channel resource is determined according to the second parameter set.

In a possible design of this embodiment, under Manner 4, the uplink channel transmission apparatus may not expect at least one of the following: a first uplink channel resource and a second uplink channel resource occupy unan equal number of resource units; a number of repetitions corresponding to the first uplink channel resource and a number of repetitions corresponding to the second uplink channel resource are not the same; part of parameters in the first parameter set and the second parameter set are not the same; the part of parameters in the first parameter set and the second parameter set come from different uplink channel configurations; wherein the first uplink channel resource is determined according to the first parameter set, and the second uplink channel resource is determined according to the second parameter set.

The network device endeavors to perform configuration in compliance with the expectations of the uplink channel transmission apparatus as much as possible, but may not fully follow such expectations. In some cases, the network device may send configuration information in a manner not expected by the uplink channel transmission apparatus. How the uplink channel transmission apparatus handles unexpected configuration information is not limited in the present disclosure, and may be implemented autonomously by the uplink channel transmission apparatus, for example.

Exemplarily, in a case where the uplink channel transmission apparatus expects that the first uplink channel resource and the second uplink channel resource occupy an equal number of resource units, the uplink channel transmission apparatus expects that total number of RBs or REs included on all symbols are equal.

In a possible design of this embodiment, the part of parameters include at least one of: a number of time-domain resources; a number of RBs; a code rate; an uplink channel format; or a number of repetitions. Exemplarily, when the uplink channel is a PUCCH and the time-domain resource is a symbol, the number of time-domain resources is a number of symbols (nrofSymbols); the number of RBs is nrofPRBs; the code rate is maxCodeRate; the uplink channel format is a PUCCH format; and the number of repetitions includes at least one of a number of slots (nrofSlots) or a number of slots for PUCCH repetition (pucch-RepetitionNrofSlots-r17).

This embodiment uses one transmission module 2310 as an example for illustration, and does not limit the number of transmission modules 2310.

For a function description of the transmission module 2310, reference may be made to the content of step 1410 in the embodiment of FIG. 14.

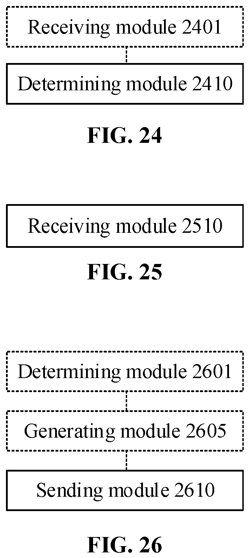

FIG. 24 is a block diagram of an uplink channel resource determining apparatus according to an exemplary embodiment of the present disclosure. The uplink channel resource determining apparatus may be implemented as a terminal device through software or hardware or a combination thereof, or implemented as a part of a terminal device. The uplink channel resource determining apparatus includes:
A determining module 2410, configured to: determine a target uplink channel resource among uplink channel resources determined through a first parameter set and/or a second parameter set, wherein the first parameter set corresponds to a first type of time-domain resource, and the second parameter set corresponds to a second type of time-domain resource.

In a possible design of this embodiment, the uplink channel is a repeatedly transmitted uplink channel, and the target uplink channel resource is a resource for a first repetition of the uplink channel.

In a possible design of this embodiment, the uplink channel is not a repeatedly transmitted uplink channel, and the target uplink channel resource is an only resource for transmission of the uplink channel. In this embodiment, an example in which the uplink channel is not a repeatedly transmitted uplink channel is used for illustration.

As an example and not a limitation, the uplink channel includes at least one of: a PUCCH, a PUSCH, or a PRACH. This is not limited in the embodiments of the present disclosure. An example in which the uplink channel is a PUCCH is used for illustration, and the PUCCH in the embodiments of the present disclosure is an exemplary example and may be generalized to an uplink channel.

In a possible design of this embodiment, the first type of time-domain resource is an SBFD-type time-domain resource, and the second type of time-domain resource is a non-SBFD-type time-domain resource.

For example, the SBFD-type time-domain resource is a symbol or slot including a first subband, where the first subband is configured for the network device to perform an SBFD operation, for example, the first subband is an uplink subband or a downlink subband.

For example, the time-domain resource includes at least one of: a symbol, a symbol group, a slot, a sub-slot, a frame, or a subframe. The embodiments of the present disclosure do not limit a specific type of the time-domain resource. Usually, as an example for illustration, the first parameter set is associated with the first type of symbol and the second parameter set is associated with the second type of symbol. For example, the first parameter set is associated with SBFD symbols, and the second parameter set is associated with non-SBFD symbols. The SBFD symbols are symbols including at least one of an uplink subband, a downlink subband, or a guard band; and the non-SBFD symbols are symbols not including the above subbands.

In a possible design of this embodiment, the determining module 2410 may determine the target uplink channel resource in the following three manners.

**Manner** 1: A first target uplink channel resource is determined according to an uplink channel resource ID among the uplink channel resources determined through the first parameter set.

In a possible design of this embodiment, the uplink channel resource ID may be configured or indicated by the network device.

Exemplarily, in the embodiment shown in the part (a) of FIG. 8 or (b), assume that a value of the uplink channel resource ID is 3. Among the uplink channel resources determined through the first parameter set, a resource corresponding to the shaded block ③ is determined as the first target uplink channel resource.

In a possible design of this embodiment, the uplink channel resource ID may be carried in first DCI sent by the network device.

In a possible design of this embodiment, a receiving module 2401 is configured to receive the first DCI sent by the network device.

In a possible design of this embodiment, the receiving module 2401 is further configured to receive downlink data sent by the network device.

In a possible design of this embodiment, when the first target uplink channel resource satisfies a second condition, the first target uplink channel resource is determined as the target uplink channel resource; and/or, when the first target uplink channel resource does not satisfy the second condition, a second target uplink channel resource is determined according to the uplink channel resource ID among the uplink channel resources determined through the second parameter set, and the second target uplink channel resource is determined as the target uplink channel resource.

In a possible design of this embodiment, the first type of time-domain resource includes SBFD symbols, the second type of time-domain resource includes non-SBFD symbols, and the second condition includes: the first target uplink channel resource entirely occupies SBFD symbols and a corresponding frequency-domain resource is completely within an uplink subband, or the first target uplink channel resource entirely occupies non-SBFD symbols.

Taking the uplink channel being a PUCCH as an example, the second condition includes: the first target PUCCH resource entirely occupies SBFD symbols and a corresponding frequency-domain resource is completely within an uplink subband, or the first target PUCCH resource entirely occupies non-SBFD symbols.

As shown in FIG. 11, assume that a fourth PUCCH resource is selected as a target PUCCH resource according to the uplink channel resource ID. The shaded block ④ is the first target PUCCH resource. The first target PUCCH resource entirely occupies SBFD symbols, and a corresponding frequency-domain resource is completely within an uplink subband. Therefore, the first target PUCCH resource satisfies the second condition, and the first target PUCCH resource is determined as the target uplink channel resource.

**Manner 2:** A second target uplink channel resource is determined according to an uplink channel resource ID among the uplink channel resources determined through the second parameter set.

In a possible design of this embodiment, when the second target uplink channel resource satisfies a third condition, the second target uplink channel resource is determined as the target uplink channel resource; and/or, when the second target uplink channel resource does not satisfy the third condition, a first target uplink channel resource is determined according to the uplink channel resource ID among the uplink channel resources determined through the first parameter set, and the first target uplink channel resource is determined as the target uplink channel resource.

In a possible design of this embodiment, the first type of time-domain resource includes SBFD symbols, the second type of time-domain resource includes non-SBFD symbols, and the third condition includes: the second target uplink channel resource entirely occupies SBFD symbols and a corresponding frequency-domain resource is completely within an uplink subband, or the second target uplink channel resource entirely occupies non-SBFD symbols.

Taking the uplink channel being a PUCCH as an example, the third condition includes: the second target PUCCH resource entirely occupies SBFD symbols and a corresponding frequency-domain resource is completely within an uplink subband, or the second target PUCCH resource entirely occupies non-SBFD symbols.

As shown in FIG. 11, assume that a fourth PUCCH resource is selected as a target PUCCH resource according to the uplink channel resource ID. The shaded block 4 is the second target PUCCH resource. The second target PUCCH resource entirely occupies SBFD symbols, but a corresponding frequency-domain resource is not within an uplink subband, therefore, the second target PUCCH resource does not satisfy the third condition. While a first target PUCCH resource (shaded block ④) determined by the uplink channel resource determining apparatus 120 according to the uplink channel resource ID entirely occupies SBFD symbols and a corresponding frequency-domain resource is completely within an uplink subband, the first target PUCCH resource is an available resource. The first target PUCCH resource is determined as the target uplink channel resource.

**Manner** 3: A first target uplink channel resource is determined according to an uplink channel resource ID among the uplink channel resources determined through the first parameter set; a second target uplink channel resource is determined according to the uplink channel resource ID among the uplink channel resources determined through the second parameter set; and the target uplink channel resource is determined from the first target uplink channel resource and the second target uplink channel resource according to a third determination manner.

In a possible design of this embodiment, the third determination manner includes at least one of: determining an uplink channel resource having an earlier time-domain resource as the target uplink channel resource; determining an uplink channel resource occupying a largest or smallest number of time-domain resources as the target uplink channel resource; or determining an uplink channel resource overlapping with another uplink channel resource as the target uplink channel resource.

In a possible design of this embodiment, the earlier time-domain resource includes at least one of: an earlier start time, or an earlier end time.

The uplink channel resource is a valid resource configured by the network device. When one of the first target uplink channel resource and the second target uplink channel resource is an invalid resource, the other valid resource is determined as the target uplink channel resource. When both the first target uplink channel resource and the second target uplink channel resource are valid resources, the target uplink channel resource is determined from the first target uplink channel resource and the second target uplink channel resource according to the third determination manner.

Exemplarily, taking the uplink channel being a PUCCH as an example, in FIG. 12, a value of the uplink channel resource ID is 2, the shaded block ② is the first target PUCCH resource, and the shaded block 2 is the second target PUCCH resource. Since the first target PUCCH resource has an earlier time-domain resource, the first target PUCCH resource is determined as the target PUCCH resource.

Determining an uplink channel resource having an earlier time-domain resource as the target uplink channel resource allows for selecting an uplink channel with lowest latency.

In FIG. 12, the value of the uplink channel resource ID is 2, the shaded block ② is the first target PUCCH resource, and the shaded block 2 is the second target PUCCH resource. The first target PUCCH resource occupies a larger number of time-domain resources than the second target PUCCH resource. Therefore, the first target PUCCH resource is determined as the target PUCCH resource.

Determining an uplink channel resource occupying a largest number of time-domain resources as the target uplink channel resource may increase a coverage range of data transmission and improve reliability of data transmission.

The overlapping includes partial overlapping and complete overlapping. In FIG. 13, the shaded block ③ is the first target PUCCH resource, and the shaded block 3 is the second target PUCCH resource. The first target PUCCH resource partially overlaps another uplink channel resource (shaded block ⑧), while the second target PUCCH resource does not overlap with another uplink channel resource. Therefore, the first target PUCCH resource is determined as the target PUCCH resource.

Determining an uplink channel resource overlapping with another uplink channel resource as the target uplink channel resource enables resource multiplexing for transmission and reduces power consumption of the terminal device.

In a possible design of this embodiment, a plurality of third determination manners may be used in any combination. This is not limited in the embodiments of the present disclosure.

Exemplarily, a target uplink channel is first determined according to a first third determination manner (i.e., determining an uplink channel resource having an earlier time-domain resource as the target uplink channel resource). Taking the time-domain resource being a symbol as an example, as shown in FIG. 11, starting symbols of the shaded block ④ and the shaded block 4 are the same. When starting symbols of two uplink channel resources are the same, a target uplink channel is determined according to a second third determination manner (i.e., determining an uplink channel resource occupying a largest or smallest number of time-domain resources as the target uplink channel resource). As shown in FIG. 11, the shaded block ④ occupies two symbols, and the shaded block 4 occupies one symbol. The shaded block ④ occupies a larger number of symbols. Therefore, the shaded block ④ is determined as the target uplink channel resource.

In this embodiment, the receiving module 2401 may be split into at least one receiving sub-module, each receiving sub-module being configured to perform at least one above receiving step, for example, a first receiving sub-module and a second receiving sub-module. The first receiving sub-module is configured to receive the first DCI sent by the network device, and the second receiving sub-module is configured to receive the downlink data sent by the network device; or the first receiving sub-module is configured to receive the downlink data sent by the network device, and the second receiving sub-module is configured to receive the first DCI sent by the network device. The embodiments of the present disclosure do not limit functions of different receiving sub-modules.

This embodiment uses one determining module 2410 and one receiving module 2401 as an example for illustration, and does not limit the numbers of the determining module 2410 and the receiving module 2401. For a function description of the receiving module 2401, reference may be made to the content of step 1830 and step 1840 in the embodiment of FIG. 18. For a function description of the determining module 2410, reference may be made to the content of step 1010 in the embodiment of FIG. 10.

FIG. 25 is a block diagram of an uplink channel receiving apparatus according to an exemplary embodiment of the present disclosure. The uplink channel receiving apparatus may be implemented through software or hardware or a combination thereof as a network device, or implemented as a part of a network device. The uplink channel receiving apparatus includes:

A receiving module 2510, configured to: receive an uplink channel according to a target parameter set, wherein the uplink channel is an uplink channel repeatedly transmitted by a terminal device, the target parameter set is a first parameter set and/or a second parameter set, the first parameter set is associated with a first type of time-domain resource, and the second parameter set is associated with a second type of time-domain resource.

As an example and not a limitation, the uplink channel includes at least one of: a PUCCH, a PUSCH, or a PRACH. This is not limited in the embodiments of the present disclosure. An example in which the uplink channel is a PUCCH is used for illustration, and the PUCCH in the embodiments of the present disclosure is an exemplary example and may be generalized to an uplink channel.

In a possible design of this embodiment, the first type of time-domain resource is an SBFD-type time-domain resource, and the second type of time-domain resource is a non-SBFD-type time-domain resource.

For example, the SBFD-type time-domain resource is a symbol or slot including a first subband, where the first subband is configured for the uplink channel receiving apparatus to perform an SBFD operation, for example, the first subband is an uplink subband or a downlink subband.

For example, the time-domain resource includes at least one of: a symbol, a symbol group, a slot, a sub-slot, a frame, or a subframe. The embodiments of the present disclosure do not limit a specific type of the time-domain resource. Usually, as an example for illustration, the first parameter set is associated with a first type of symbol and the second parameter set is associated with a second type of symbol. For example, the first parameter set is associated with SBFD symbols, and the second parameter set is associated with non-SBFD symbols. The SBFD symbols are symbols including at least one of an uplink subband, a downlink subband, or a guard band; and the non-SBFD symbols are symbols not including the above subbands.

In a possible design of this embodiment, the first parameter set is applicable to a slot in which all symbols are SBFD symbols, and is also applicable to a slot in which some symbols are SBFD symbols; the second parameter set is applicable to a slot in which all symbols are non-SBFD symbols, and is also applicable to a slot in which some symbols are non-SBFD symbols.

In a possible design of this embodiment, a repetition of the uplink channel, a repeated transmission of the uplink channel, a transmission of the uplink channel, and other expressions have a same meaning. For example, a first transmission of the uplink channel means a first repetition of the uplink channel, and a second transmission of the uplink channel is not used to represent a first repetition of the uplink channel.

As an example and not a limitation, the target parameter set includes at least one of the following parameters: an uplink channel resource set; an uplink channel resource; an uplink channel format; a time-domain parameter set; a frequency-domain parameter set; a repetition parameter set; or a code rate parameter.

Taking the uplink channel being a PUCCH as an example, the uplink channel resource set is a PUCCH resource set (PUCCH-ResourceSet), the uplink channel resource is a PUCCH resource (PUCCH-Resource), and the uplink channel format is a PUCCH format (PUCCH-FormatConfig); the time-domain parameter set includes at least one of a starting symbol (startingSymbolIndex) or a number of symbols (nrofSymbols); the frequency-domain parameter set includes at least one of frequency domain starting positions before and after frequency hopping: a starting Physical Resource Block (startingPRB) or a second hop Physical Resource Block (secondHopPRB); the repetition parameter set includes at least one of a number of slots (nrofSlots) or a number of slots for PUCCH repetition (pucch-RepetitionNrofSlots-r17); and the code rate parameter includes a maximum code rate (maxCodeRate).

In a possible design of this embodiment, the target parameter set may be determined in at least one of the following manners.

**Manner 1:** The target parameter set is determined based on a first repetition of the uplink channel.

In a possible design of this embodiment, the target parameter set may be determined based on a type of a time-domain resource for the first repetition.

The type of the time-domain resource includes a first type of time-domain resource and a second type of time-domain resource. When the type of the time-domain resource for the first repetition is the first type of time-domain resource, the target parameter set is determined as the first parameter set; when the type of the time-domain resource for the first repetition is the second type of time-domain resource, the target parameter set is determined as the second parameter set.

In a possible design of this embodiment, the first repetition is: a configured or indicated first repetition of the uplink channel by an uplink channel receiving apparatus; or a first actual repetition of the uplink channel.

The first repetition configured or indicated by the uplink channel receiving apparatus for the uplink channel may occur on a downlink symbol, resulting in no corresponding uplink channel resource being configured and transmission being unachievable. Therefore, the first actual transmission of the uplink channel may be selected as the first repetition.

FIG. 15 illustrates a schematic diagram of an uplink channel transmission method according to an exemplary embodiment of the present disclosure. Taking an uplink channel being a PUCCH as an example, assume that a number of PUCCH repetitions is configured or indicated by the uplink channel receiving apparatus as ${N}_{PUCCH}^{repeat} = 4$, and a first repetition of the PUCCH is configured or indicated by the uplink channel receiving apparatus to start from slot #3. Assume that SBFD symbols and non-SBFD symbols correspond to two sets of PUCCH resource configurations. For the PUCCH resource configuration corresponding to SBFD symbols, PUCCH resources (resource sets) are configured within the uplink subband (e.g., inside the dashed ellipse). For the PUCCH resource configuration corresponding to non-SBFD symbols, PUCCH resources (resource sets) are arranged at the top of the uplink Bandwidth Part (BWP) (e.g., inside the solid ellipse).

According to Manner 1, target parameter sets corresponding to four PUCCH repetitions are determined according to the first repetition of the PUCCH, that is, the first repetition of the PUCCH corresponding to slot #3. PUCCH repetitions are transmitted through resources represented by black squares, and parameter sets of subsequent PUCCH repetitions are all determined according to the parameter set of the first repetition of the PUCCH. That is, black squares corresponding to slot #3, slot #4, slot #8, and slot #9 are resources for four actual PUCCH repetitions, while resources indicated by the dashed blocks corresponding to slot #5, slot #6 and slot #7 are located within downlink symbols and are thus unavailable, meaning PUCCH repetitions cannot be transmitted thereon.

Taking the uplink channel being a PUCCH as an example, this manner is the simplest, consistent with a legacy design logic, and can minimize an impact of uplink resource fragmentation and preserve more consecutive uplink resources for PUSCH transmission.

**Manner 2:** The target parameter set is determined based on the first parameter set.

In a possible design of this embodiment, the first parameter set is associated with a first type of time-domain resource, the first type of time-domain resource is an SBFD-type time-domain resource, and the second type of time-domain resource is a non-SBFD-type time-domain resource.

For example, the SBFD-type time-domain resource is a time-domain resource including a first subband, where the first subband is configured for the uplink channel receiving apparatus to perform an SBFD operation, for example, the first subband is an uplink subband or a downlink subband.

FIG. 16 illustrates a schematic diagram of an uplink channel transmission method according to an exemplary embodiment of the present disclosure. Taking an uplink channel being a PUCCH as an example, assume that a number of PUCCH repetitions is configured or indicated by the uplink channel receiving apparatus as ${N}_{PUCCH}^{repeat} = 4$, and a first repetition of the PUCCH is configured or indicated by the uplink channel receiving apparatus to start from slot #3. Assume that SBFD symbols and non-SBFD symbols correspond to two sets of PUCCH resource configurations. For the PUCCH resource configuration corresponding to SBFD symbols, PUCCH resources (resource sets) are configured within the uplink subband (e.g., inside the dashed ellipse). For the PUCCH resource configuration corresponding to non-SBFD symbols, PUCCH resources (resource sets) are arranged at the top of the uplink Bandwidth Part (BWP) (e.g., inside the solid ellipse).

According to Manner 2, target parameter sets corresponding to four PUCCH repetitions are determined according to parameter sets corresponding to SBFD symbols. PUCCH repetitions are transmitted using the resources denoted by black blocks, and this scheme applies to all PUCCH repetitions. That is, black squares corresponding to slot #3, slot #4, slot #5, and slot #6 are resources for four actual PUCCH repetitions.

Taking the uplink channel being a PUCCH as an example, this manner can complete PUCCH repetition at a fastest speed with low latency.

**Manner 3:** A determination manner of the target parameter set is selected from at least two determination manners based on first information or a first condition.

The at least two determination manners include a first determination manner and a second determination manner. The first determination manner is based on a first repetition of the uplink channel (Manner 1); the second determination manner is based on the first parameter set (Manner 2).

In a possible design of this embodiment, the first information may be configured or indicated by the uplink channel receiving apparatus, or the first information may be agreed in a communication protocol.

In a possible design of this embodiment, the first information may be configured or indicated by the uplink channel receiving apparatus based on a type of UCI carried by the uplink channel; or the first information may be agreed in the communication protocol based on the type of the UCI carried by the uplink channel; wherein the type of the UCI includes at least one of CSI, SR, or HARQ-ACK.

In a possible design of this embodiment, the operation of determining the target parameter set based on the first information according to one of the at least two determination manners may include:
determining the target parameter set according to the first determination manner when the type of the UCI is CSI or SR; or determining the target parameter set according to the second determination manner when the type of the UCI is HARQ-ACK.

Since CSI and SR are not latency-sensitive, the first determination manner (Manner 1) is adopted to mitigate the impact of uplink channel resource fragmentation. HARQ-ACK is latency-sensitive, the second determination manner (Manner 2) enables faster completion of repetitive transmission.

In a possible design of this embodiment, the first condition relates to at least one of a first quantity and a second quantity; the first quantity is a number of time-domain units included in a first time-domain resource range, the second quantity is a number of time-domain units included in a second time-domain resource range, the first time-domain resource range is a time-domain resource range occupied for repetitions of the uplink channel determined using the first determination manner, the second time-domain resource range is a time-domain resource range occupied for repetitions of the uplink channel determined using the second determination manner, and the time-domain resource range is a range from a starting time-domain resource corresponding to the first repetition of the uplink channel to an ending time-domain resource corresponding to a last repetition of the uplink channel.

Exemplarily, taking the time-domain resource being a slot as an example, a range of slots occupied for transmitting repetitions of the uplink channel according to the first determination manner is N1 (the first quantity), and a range of slots occupied for transmitting repetitions of the uplink channel according to the second determination manner is N2 (the second quantity).

In a possible design of this embodiment, when the first quantity is greater than or equal to the second quantity, determining is performed according to the second determination manner; when the first quantity is less than or equal to the second quantity, determining is performed according to the first determination manner.

Exemplarily, when N1 is 4 and N2 is 2, N1 is greater than N2, the second determination manner is adopted; when N1 is 2 and N2 is 4, N1 is less than N2, the first determination manner is adopted; when N1 and N2 are equal, the first determination manner or the second determination manner is adopted.

In a possible design of this embodiment, when the first quantity is greater than a first threshold, determining is performed according to the second determination manner; when the first quantity is less than the first threshold, determining is performed according to the first determination manner; wherein the first threshold is a preset value.

Exemplarily, the first threshold is 4. When N1 is 6, the second determination manner is adopted; when N1 is 2, the first determination manner is adopted; when N1 is 4, the first determination manner or the second determination manner is adopted.

In a possible design of this embodiment, when a first range includes a first type of time-domain resource, the second determination manner is adopted; when the first range does not include the first type of time-domain resource, the first determination manner is adopted; wherein the first range is between a first time-domain resource and a last time-domain resource of the first quantity of time-domain resources.

Exemplarily, when N1 is 4, the time-domain resource is a slot and the first type of time-domain resource is an SBFD symbol, the first slot is slot #3, the second slot is slot #4, the third slot is slot #8, and the fourth slot is slot #9. When an SBFD symbol is included between slot #3 and slot #9, the second determination manner is adopted.

When it cannot be determined which determination manner to use, the determination is performed according to the first information or the first condition, which combines advantages of the two determination manners.

**Manner 4:** The target parameter set is determined based on a type of a time-domain resource corresponding to each repetition of the uplink channel.

In a possible design of this embodiment, when a type of a time-domain resource corresponding to an i-th repetition of the uplink channel is a first type of time-domain resource, the target parameter set is determined as the first parameter set; and/or, when the type of the time-domain resource corresponding to the i-th repetition of the uplink channel is a second type of time-domain resource, the target parameter set is determined as the second parameter set, where i is a positive integer.

In a possible design of this embodiment, the first type of time-domain resource is an SBFD-type time-domain resource, and the second type of time-domain resource is a non-SBFD-type time-domain resource.

For example, the SBFD-type time-domain resource is a symbol or slot including a first subband, where the first subband is configured for the uplink channel receiving apparatus to perform an SBFD operation, for example, the first subband is an uplink subband or a downlink subband; the non-SBFD-type time-domain resource is a non-SBFD symbol or slot, for example, an uplink symbol or an uplink slot.

Exemplarily, when the time-domain resource is a symbol, the uplink channel is a PUCCH, and the number of repetitions is 4, when a symbol type corresponding to a first repetition of the PUCCH is an SBFD-type symbol, the target parameter set is determined as the first parameter set; when a symbol type corresponding to a second repetition of the PUCCH is an SBFD-type symbol, the target parameter set is determined as the first parameter set; when a symbol type corresponding to a third repetition of the PUCCH is a non-SBFD-type symbol, the target parameter set is determined as the second parameter set; and when a symbol type corresponding to a fourth repetition of the PUCCH is a non-SBFD-type symbol, the target parameter set is determined as the second parameter set.

FIG. 17 illustrates a schematic diagram of an uplink channel transmission method according to an exemplary embodiment of the present disclosure. Taking an uplink channel being a PUCCH as an example, assume that a number of PUCCH repetitions is configured or indicated by the uplink channel receiving apparatus as ${N}_{PUCCH}^{repeat} = 4$, and a first repetition of the PUCCH is configured or indicated by the uplink channel receiving apparatus to start from slot #3. Assume that SBFD symbols and non-SBFD symbols correspond to two sets of PUCCH resource configurations. For the PUCCH resource configuration corresponding to SBFD symbols, PUCCH resources (resource sets) are configured within the uplink subband (e.g., inside the dashed ellipse). For the PUCCH resource configuration corresponding to non-SBFD symbols, PUCCH resources (resource sets) are arranged at the top of the uplink BWP (e.g., inside the solid ellipse).

According to Manner 4, a first repetition and a second repetition of the PUCCH are within uplink symbols, that is, non-SBFD symbols. Therefore, target parameter sets corresponding to the first repetition and the second repetition of the PUCCH are determined according to parameter sets corresponding to non-SBFD symbols. A third repetition and a fourth repetition of the PUCCH are within SBFD symbols, therefore, target parameter sets corresponding to the third repetition and the fourth repetition of the PUCCH are determined according to parameter sets corresponding to SBFD symbols. Due to the limitation of soft combining for polar coding, different PUCCH repetitions need to occupy an equal number of RBs or Resource Elements (REs). Therefore, black squares corresponding to slot #3, slot #4, slot #5, and slot #6 are required to have the same total number of RBs or REs, or correspond to the same parameters such as the number of symbols, code rate, PUCCH format and the number of repetitions.

Taking the uplink channel being a PUCCH as an example, this manner can complete PUCCH repetition at a fastest speed with low latency, and can minimize an impact of uplink resource fragmentation and preserve more consecutive uplink resources for PUSCH transmission.

This embodiment uses one receiving module 2510 as an example for illustration, and does not limit the number of receiving modules 2510.

For a function description of the receiving module 2510, reference may be made to the content of step 2110 in the embodiment of FIG. 21.

FIG. 26 is a block diagram of an uplink channel resource indicating apparatus according to an exemplary embodiment of the present disclosure. The uplink channel resource indicating apparatus may be implemented through software or hardware or a combination thereof as a network device, or implemented as a part of a network device. The uplink channel resource indicating apparatus includes:

A sending module 2610, configured to: send an uplink channel resource ID, wherein the uplink channel resource ID is used to indicate a target uplink channel resource among uplink channel resources determined through a first parameter set and/or a second parameter set, wherein the first parameter set corresponds to a first type of time-domain resource, and the second parameter set corresponds to a second type of time-domain resource.

In a possible design of this embodiment, the sending module 2610 is further configured to configure the first parameter set and/or the second parameter set.

In a possible design of this embodiment, the first parameter set and/or the second parameter set includes a related parameter set of a repetition of an uplink channel.

As an example and not a limitation, the uplink channel includes at least one of: a PUCCH, a PUSCH, or a PRACH. This is not limited in the embodiments of the present disclosure. An example in which the uplink channel is a PUCCH is used for illustration, and the PUCCH in the embodiments of the present disclosure is an exemplary example and may be generalized to an uplink channel.

In a possible design of this embodiment, a repetition of the uplink channel, a repeated transmission of the uplink channel, a transmission of the uplink channel, and other expressions have a same meaning. For example, a first transmission of the uplink channel means a first repetition of the uplink channel.

In a possible design of this embodiment, the uplink channel resource indicating apparatus may configure the first parameter set and/or the second parameter set through RRC signaling.

In other embodiments, the uplink channel resource indicating apparatus may configure the first parameter set and/or the second parameter set through other signaling including a MAC CE. This is not limited in the embodiments of the present disclosure.

In a possible design of this embodiment, the first parameter set is associated with a first type of time-domain resource, and the second parameter set is associated with a second type of time-domain resource.

For example, the time-domain resource includes at least one of: a symbol, a symbol group, a slot, a sub-slot, a frame, or a subframe. The embodiments of the present disclosure do not limit a specific type of the time-domain resource. Usually, as an example for illustration, the first parameter set is associated with a first type of symbol and the second parameter set is associated with a corresponding second type of symbol. For example, the first parameter set is associated with SBFD symbols, and the second parameter set is associated with non-SBFD symbols. The SBFD symbols are symbols including at least one of an uplink subband, a downlink subband, or a guard band; and the non-SBFD symbols are symbols not including the above subbands.

In a possible design of this embodiment, a generating module 2605 is configured to generate first DCI.

Taking the uplink channel carrying HARQ-ACK, the uplink channel being a PUCCH, and a repetition of the uplink channel being a PUCCH repetition as an example, the uplink channel resource indicating apparatus may determine a PDSCH resource according to downlink data to be transmitted. FIG. 19 illustrates a schematic diagram of determining PUCCH resources according to an exemplary embodiment of the present disclosure. After determining the PDSCH resource, as shown in FIG. 19, the uplink channel resource indicating apparatus determines a slot for a first repetition of the PUCCH based on a time-domain offset from the PDSCH to HARQ-ACK.

In the slot for the first repetition of the PUCCH, a PUCCH resource (① in FIG. 19, equivalent to ③ in FIG. 8) is selected from a plurality of pre-configured PUCCH resources as a resource for the first repetition of the PUCCH.

In a possible design of this embodiment, a determining module 2601 is configured to: after determining the resource for the first repetition of the PUCCH, determine resources for subsequent repetitions of the PUCCH based on the resource for the first repetition of the PUCCH, or based on the first type of time-domain resource.

In a possible design of this embodiment, the determining module 2601 is configured to: when the resource for the first repetition of the PUCCH falls on the first type of time-domain resource, determine resources for subsequent repetitions of the PUCCH based on the first type of time-domain resource.

In a possible design of this embodiment, the determining module 2601 is configured to: when the resource for the first repetition of the PUCCH falls on the first type of time-domain resource or the second type of time-domain resource, determine resources for subsequent repetitions of the PUCCH based on the resource for the first repetition of the PUCCH.

Exemplarily, taking the uplink channel being a PUCCH as an example, when the number of PUCCH repetitions is four, the uplink channel resource indicating apparatus determines a resource for a second repetition of the PUCCH (② in FIG. 19), a resource for a third repetition of the PUCCH (③ in FIG. 19), and a resource for a fourth repetition of the PUCCH (④ in FIG. 19) based on the resource for the first repetition of the PUCCH.

In a possible design of this embodiment, the uplink channel resource indicating apparatus may check whether the selected resource satisfies a service requirement. For example, whether each resource can accommodate more bits than the pending HARQ-ACK feedback bits, and whether a last resource satisfies a latency requirement. Satisfying the latency requirement means that latency between a last repetition of the uplink channel and a PDSCH resource is less than a preset latency threshold.

In a possible design of this embodiment, the determining module 2601 is configured for the uplink channel resource indicating apparatus to determine a PUSCH resource according to first data information, where the PUSCH resource is configured to transmit uplink data. The first data information includes: uplink channel quality, transmission data size, load of the uplink channel resource indicating apparatus, and other information.

In a possible design of this embodiment, the generating module 2605 is configured to generate first DCI, where the first DCI includes at least one of: time-domain resource information; frequency-domain resource information; time-domain offset information; number of repetitions information; or a PRI.

In a possible design of this embodiment, the generating module 2605 is configured to: generate the time-domain resource information according to a time-domain resource of the PUSCH; generate the frequency-domain resource information according to a frequency-domain resource of the PUSCH; generate the time-domain offset information according to a time-domain offset from the PDSCH to HARQ-ACK; generate the number of repetitions information according to a number of repetitions of the uplink channel; and generate the PRI according to a resource position of a first repetition of the uplink channel.

In a possible design of this embodiment, a value of the PRI is used to indicate which resource in a pre-configured PUCCH resource set is occupied for a first repetition of the uplink channel.

Exemplarily, the value of the PRI is represented by a preset number of bits. For example, the value of the PRI is represented by three bits. A first bit is used to indicate whether a first repetition of the uplink channel is located in a first type of time-domain resource or a second type of time-domain resource, and a second bit and a third bit are used to indicate a sequence number of an uplink channel resource occupied for the first repetition of the uplink channel.

Exemplarily, when the PRI value is 010, "0" is used to indicate that a first repetition of the uplink channel is located in a first type of time-domain resource, for example, in SBFD symbols; "10" is used to indicate that the first repetition of the uplink channel occupies a third uplink channel resource; and "010" is used to indicate that the first repetition of the uplink channel occupies a third uplink channel resource in SBFD symbols.

In a possible design of this embodiment, the sending module 2610 is further configured to send the first DCI.

In a possible design of this embodiment, the first DCI is used to indicate a resource for a first repetition of the uplink channel used by the terminal device. Taking the uplink channel being a PUCCH as an example, the first DCI is used to indicate a resource for a first repetition of the PUCCH used by the terminal device.

In a possible design of this embodiment, the first DCI may carry an uplink channel resource ID, where the uplink channel resource ID is used to indicate a resource for a first repetition of the uplink channel used by the terminal device.

For example, the uplink channel resource ID is represented by a PRI. Exemplarily, when the PRI value is 010, "0" is used to indicate that a first repetition of the uplink channel is located in a first type of time-domain resource, for example, in SBFD symbols; "10" is used to indicate that the first repetition of the uplink channel occupies a third uplink channel resource; and "010" is used to indicate that the first repetition of the uplink channel occupies a third uplink channel resource in SBFD symbols.

In a possible design of this embodiment, the first DCI may carry time-domain offset information, where the time-domain offset information is used to indicate a time-domain offset from PDSCH to HARQ-ACK.

FIG. 20 illustrates a schematic diagram of determining PUCCH resources according to an exemplary embodiment of the present disclosure. In a possible design of this embodiment, taking an uplink channel being a PUCCH as an example, since the PUCCH resource determination manner is to first determine a slot where a HARQ-ACK is located according to a PDSCH-to-HARQ-ACK time-domain offset configuration indicated in DCI, and then indicate a PUCCH resource in the slot through a PRI in the DCI, as shown in FIG. 20, if the terminal device receives DCI 1 (first DCI) from the uplink channel resource indicating apparatus, the DCI 1 schedules transmission of PDSCH 1. Based on the PDSCH-to-HARQ-ACK time-domain offset, slot 1 is determined after PDSCH 1. Assuming that the PRI value in DCI 1 is 010, which is used to indicate the third PUCCH resource in SBFD symbols, the PUCCH resource is configured for the first repetition of the PUCCH.

In a possible design of this embodiment, the uplink channel resource ID is used to indicate a first target uplink channel resource among the uplink channel resources determined through the first parameter set.

In a possible design of this embodiment, the uplink channel resource ID is used to: indicate the first target uplink channel resource as a target uplink channel resource when the first target uplink channel resource satisfies a second condition; and/or, when the first target uplink channel resource does not satisfy the second condition, indicate a second target uplink channel resource among the uplink channel resources determined through the second parameter set as the target uplink channel resource.

In a possible design of this embodiment, the first type of time-domain resource includes SBFD symbols; the second type of time-domain resource includes non-SBFD symbols; and the second condition includes: the first target uplink channel resource entirely occupies SBFD symbols and a corresponding frequency-domain resource is completely within an uplink subband, or the first target uplink channel resource entirely occupies non-SBFD symbols.

Taking the uplink channel being a PUCCH as an example, the second condition includes: the first target PUCCH resource entirely occupies SBFD symbols and a corresponding frequency-domain resource is completely within an uplink subband, or the first target PUCCH resource entirely occupies non-SBFD symbols.

In a possible design of this embodiment, the uplink channel resource ID is used to: indicate the second target uplink channel resource as a target uplink channel resource when the second target uplink channel resource satisfies a third condition; and/or, when the second target uplink channel resource does not satisfy the third condition, indicate a first target uplink channel resource among the uplink channel resources determined through the first parameter set as the target uplink channel resource.

In a possible design of this embodiment, the first type of time-domain resource includes SBFD symbols; the second type of time-domain resource includes non-SBFD symbols; and the third condition includes: the second target uplink channel resource entirely occupies SBFD symbols and a corresponding frequency-domain resource is completely within an uplink subband, or the second target uplink channel resource entirely occupies non-SBFD symbols.

Taking the uplink channel being a PUCCH as an example, the third condition includes: the second target PUCCH resource entirely occupies SBFD symbols and a corresponding frequency-domain resource is completely within an uplink subband, or the second target PUCCH resource entirely occupies non-SBFD symbols.

In a possible design of this embodiment, the uplink channel resource ID is used to indicate a first target uplink channel resource among the uplink channel resources determined through the first parameter set, and the uplink channel resource ID is also used to indicate a second target uplink channel resource among the uplink channel resources determined through the second parameter set. The determining module 2601 is further configured to indicate the target uplink channel resource from the first target uplink channel resource and the second target uplink channel resource through a first indication manner.

In a possible design of this embodiment, the first indication manner includes at least one of: indicating an uplink channel resource having an earlier time-domain resource as the target uplink channel resource; indicating an uplink channel resource occupying a largest or smallest number of time-domain resources as the target uplink channel resource; or indicating an uplink channel resource overlapping with another uplink channel resource as the target uplink channel resource.

For example, the earlier time-domain resource includes at least one of: an earlier start time, or an earlier end time.

Exemplarily, taking the uplink channel being a PUCCH as an example, in FIG. 12, a value of the uplink channel resource ID is 2, the shaded block ② is the first target PUCCH resource, and the shaded block 2 is the second target PUCCH resource. Since the first target PUCCH resource has an earlier time-domain resource, the first target PUCCH resource is indicated as the target PUCCH resource.

Indicating an uplink channel resource having an earlier time-domain resource as the target uplink channel resource allows for selecting an uplink channel with lowest latency.

In FIG. 12, the value of the uplink channel resource ID is 2, the shaded block ② is the first target PUCCH resource, and the shaded block 2 is the second target PUCCH resource. The first target PUCCH resource occupies a larger number of time-domain resources than the second target PUCCH resource. Therefore, the first target PUCCH resource is indicated as the target PUCCH resource.

Indicating an uplink channel resource occupying a largest number of time-domain resources as the target uplink channel resource may increase a coverage range of data transmission and improve reliability of data transmission.

The overlapping includes partial overlapping and complete overlapping. Taking partial overlapping as an example, in FIG. 13, the shaded block ③ is the first target PUCCH resource, and the shaded block 3 is the second target PUCCH resource. The first target PUCCH resource partially overlaps another uplink channel resource (shaded block ⑧), while the second target PUCCH resource does not overlap with another uplink channel resource. Therefore, the first target PUCCH resource is indicated as the target PUCCH resource.

Indicating an uplink channel resource overlapping with another uplink channel resource as the target uplink channel resource enables resource multiplexing for transmission and reduces power consumption of the terminal device.

In a possible design of this embodiment, a plurality of first indication manners may be used in any combination. This is not limited in the embodiments of the present disclosure.

Exemplarily, a target uplink channel is first indicated according to a first first indication manner (i.e., indicating an uplink channel resource having an earlier time-domain resource as the target uplink channel resource). Taking the time-domain resource being a symbol as an example, as shown in FIG. 11, starting symbols of the shaded block ④ and the shaded block 4 are the same. When starting symbols of two uplink channel resources are the same, a target uplink channel is indicated according to a second first indication manner (i.e., indicating an uplink channel resource occupying a largest or smallest number of time-domain resources as the target uplink channel resource). As shown in FIG. 11, the shaded block ④ occupies two symbols, and the shaded block 4 occupies one symbol. The shaded block ④ occupies a larger number of symbols. Therefore, the shaded block ④ is indicated as the target uplink channel resource.

In a possible design of this embodiment, the sending module 2610 is further configured to send downlink data.

In this embodiment, the sending module 2610 may be split into at least one sending sub-module, each sending sub-module being configured to perform at least one above sending step, for example, a first sending sub-module, a second sending sub-module, and a third sending sub-module. The first sending sub-module is configured to send an uplink channel resource ID (send first DCI), the second sending sub-module is configured to configure the first parameter set and/or the second parameter set, and the third sending sub-module is configured to send downlink data; or the first sending sub-module is configured to configure the first parameter set and/or the second parameter set, the second sending sub-module is configured to send downlink data, and the third sending sub-module is configured to send an uplink channel resource ID (send first DCI); or the first sending sub-module is configured to send downlink data, the second sending sub-module is configured to send an uplink channel resource ID (send first DCI), and the third sending sub-module is configured to configure the first parameter set and/or the second parameter set. The embodiments of the present disclosure do not limit functions of different sending sub-modules.

This embodiment uses one sending module 2610 as an example for illustration, and does not limit the number of sending modules 2610. For a function description of the determining module 2601, reference may be made to the content of step 1820 in the embodiment of FIG. 18. For a function description of the generating module 2605, reference may be made to the content of step 1820 in the embodiment of FIG. 18. For a function description of the sending module 2610, reference may be made to the content of step 1810, step 1830, and step 1840 in the embodiment of FIG. 18, and the content of step 2210 in the embodiment of FIG. 22.

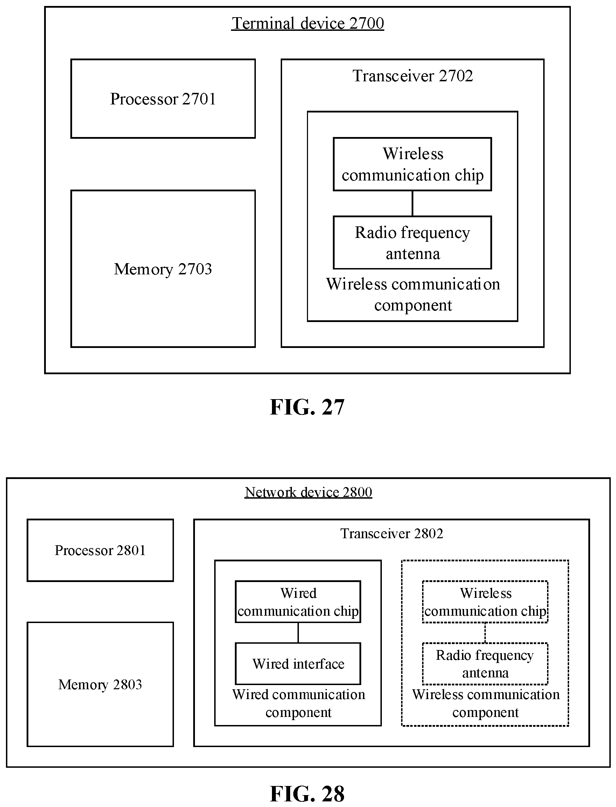

FIG. 27 is a structural schematic diagram of a terminal device according to an exemplary embodiment of the present disclosure. The terminal device 2700 may be configured to perform the method steps performed by a terminal device in the above embodiments. The terminal device 2700 may include: a processor 2701, a transceiver 2702, and a memory 2703. The processor 2701 may be configured to control sending and/or receiving, for example, to implement a function of the above determining module 2410. The transceiver 2702 may be configured to implement a sending and/or receiving function, for example, to implement at least one of functions of the above transmission module 2310 or receiving module 2401.

The processor 2701 includes one or more processing cores, and the processor 2701 may execute various functional applications and information processing by running software programs and modules.

The transceiver 2702 may include a receiver and a transmitter. For example, the receiver and the transmitter may be implemented as a same wireless communication component, where the wireless communication component may include a wireless communication chip and a radio frequency antenna.

The memory 2703 may be connected to the processor 2701 and the transceiver 2702.

The memory 2703 may be configured to store a computer program executed by the processor, and the processor 2701 is configured to execute the computer program to implement various steps in the method embodiments.

In addition, the memory 2703 may be implemented by any type of volatile or non-volatile storage device or a combination thereof. The volatile or non-volatile storage device includes but is not limited to: a disk or an optical disc, an electrically erasable programmable read-only memory, an erasable programmable read-only memory, a static random access memory, a read-only memory, a magnetic memory, a flash memory, and a programmable read-only memory.

In some embodiments, the transceiver 2702 is configured to transmit an uplink channel according to a target parameter set, wherein the uplink channel is a repeatedly transmitted uplink channel, the target parameter set is a first parameter set and/or a second parameter set, the first parameter set is associated with a first type of time-domain resource, and the second parameter set is associated with a second type of time-domain resource.

In some embodiments, the processor 2701 is configured to determine a target uplink channel resource among uplink channel resources determined through a first parameter set and/or a second parameter set, wherein the first parameter set corresponds to a first type of time-domain resource, and the second parameter set corresponds to a second type of time-domain resource.

For details not described in detail in this embodiment, reference may be made to the above embodiments, and details are not repeated herein.

FIG. 28 is a structural schematic diagram of a network device according to an exemplary embodiment of the present disclosure. The network device 2800 may be configured to perform the method steps performed by a network device in the above embodiments. The network device 2800 may include: a processor 2801, a transceiver 2802, and a memory 2803. The processor 2801 may be configured to control sending and/or receiving, for example, to implement at least one of functions of the above determining module 2601 and generating module 2605. The transceiver 2802 may be configured to implement a sending and/or receiving function, for example, to implement at least one of functions of the above receiving module 2510 and sending module 2610.

The processor 2801 includes one or more processing cores, and the processor 2801 may execute various functional applications and information processing by running software programs and modules.

The transceiver 2802 may include a receiver and a transmitter. For example, the transceiver 2802 may include a wired communication component, where the wired communication component may include a wired communication chip and a wired interface (for example, an optical fiber interface). Optionally, the transceiver 2802 may further include a wireless communication component, where the wireless communication component may include a wireless communication chip and a radio frequency antenna.

The memory 2803 may be connected to the processor 2801 and the transceiver 2802.

The memory 2803 may be configured to store a computer program executed by the processor, and the processor 2801 is configured to execute the computer program to implement various steps in the method embodiments.

In addition, the memory 2803 may be implemented by any type of volatile or non-volatile storage device or a combination thereof. The volatile or non-volatile storage device includes but is not limited to: a disk or an optical disc, an electrically erasable programmable read-only memory, an erasable programmable read-only memory, a static random access memory, a read-only memory, a magnetic memory, a flash memory, and a programmable read-only memory.

In some embodiments, the transceiver 2802 is configured to receive an uplink channel according to a target parameter set, wherein the uplink channel is an uplink channel repeatedly transmitted by a terminal device, the target parameter set is a first parameter set and/or a second parameter set, the first parameter set is associated with a first type of time-domain resource, and the second parameter set is associated with a second type of time-domain resource.

In some embodiments, the transceiver 2802 is configured to send an uplink channel resource ID, wherein the uplink channel resource ID is used to indicate a target uplink channel resource among uplink channel resources determined through a first parameter set and/or a second parameter set, wherein the first parameter set corresponds to a first type of time-domain resource, and the second parameter set corresponds to a second type of time-domain resource.

For details not described in detail in this embodiment, reference may be made to the above embodiments, and details are not repeated herein.

The embodiments of the present disclosure further provide a computer-readable storage medium. The computer-readable storage medium has stored at least one program, and the at least one program may be loaded and executed by a processor to implement the uplink channel transmission method or the uplink channel resource determining method on the terminal device side, or the uplink channel receiving method or the uplink channel resource indicating method on the network device side. In some embodiments, the computer-readable storage medium may include: a ROM (Read-Only Memory), a RAM (Random-Access Memory), an SSD (Solid State Drive), or an optical disc. The random access memory may include a ReRAM (Resistance Random Access Memory) and a DRAM (Dynamic Random Access Memory).

The embodiments of the present disclosure further provide a chip. The chip includes a programmable logic circuit and/or program instructions, and when run, the chip is configured to implement the uplink channel transmission method or the uplink channel resource determining method on the terminal device side, or the uplink channel receiving method or the uplink channel resource indicating method on the network device side.

The embodiments of the present disclosure further provide a computer program product. The computer program product includes a computer program, the computer program is stored in a computer-readable storage medium, a processor may read the computer program from the computer-readable storage medium, and execute the computer program to implement the uplink channel transmission method or the uplink channel resource determining method on the terminal device side, or the uplink channel receiving method or the uplink channel resource indicating method on the network device side.

It should be understood that in the embodiments of the present disclosure, "indicate" may be a direct indication, an indirect indication, or an indication of an association relationship. For example, A indicates B, which may mean that A directly indicates B, for example, B may be obtained through A; or may mean that A indirectly indicates B, for example, A indicates C, and B may be obtained through C; or may mean that an association relationship exists between A and B.

In the description of the embodiments of the present disclosure, the term "correspond" may indicate a direct correspondence or an indirect correspondence between two parties, or may indicate an association relationship between two parties, or may indicate an indicating/indicated relationship, a configuring/configured relationship, or other relationships.

In some embodiments of the present disclosure, "predefined" may be implemented by pre-saving corresponding codes, tables, or other manners usable for indicating relevant information in a device (for example, including a terminal device and a network device). The present disclosure does not limit a specific implementation thereof. For example, predefined may refer to a definition in a protocol.

In some embodiments of the present disclosure, "protocol" may refer to a standard protocol in the communications field, which for example, may include an LTE protocol, an NR protocol, and a related protocol applied in a future communication system. The present disclosure does not limit this.

"Multiple" as mentioned herein refers to two or more. "And/or" describes an association relationship of associated objects, indicating that three relationships may exist. For example, A and/or B may indicate: A exists alone, A and B exist simultaneously, and B exists alone. The character "/" generally indicates that the associated objects before and after are in an "or" relationship.

"Greater than or equal to" as described herein may indicate: greater than or equal to; or greater than. "Less than or equal to" may indicate: less than or equal to; or less than.

In addition, step numbers described herein merely exemplarily show a possible execution sequence. In some other embodiments, the above steps may also be performed not in the numbered order, for example, two steps with different numbers may be performed simultaneously, or two steps with different numbers may be performed in an order opposite to that shown in the figure. This is not limited in the embodiments of the present disclosure.

A person skilled in the art should be aware that in one or more of the above examples, the functions described in the embodiments of the present disclosure may be implemented by hardware, software, firmware, or any combination thereof. When implemented by software, these functions may be stored in a computer-readable medium or transmitted as one or more instructions or codes on the computer-readable medium. The computer-readable medium includes a computer storage medium and a communication medium, where the communication medium includes any medium facilitating transmission of a computer program from one place to another. The storage medium may be any available medium that can be accessed by a general or special-purpose computer.

The above are merely exemplary embodiments of the present disclosure, and are not intended to limit the present disclosure. Any modification, equivalent replacement, or improvement made within the spirit and principle of the present disclosure shall fall within the protection scope of the present disclosure.

## Claims

1. An uplink channel transmission method, performed by a terminal device, the method comprising:
transmitting an uplink channel according to a target parameter set,
wherein the uplink channel is a repeatedly transmitted uplink channel, the target parameter set is a first parameter set and/or a second parameter set, the first parameter set is associated with a first type of time-domain resource, and the second parameter set is associated with a second type of time-domain resource.

2. The method of claim 1, wherein the target parameter set is determined based on a first repetition of the uplink channel.

3. The method of claim 2, wherein the target parameter set is determined based on a type of a time-domain resource for the first repetition.

4. The method of claim 2, wherein the first repetition is: a configured or indicated first repetition of the uplink channel by a network device; or a first actual repetition of the uplink channel.

5. The method of claim 1, wherein the target parameter set is determined based on the first parameter set.

6. The method of claim 1, wherein the first type of time-domain resource is a SubBand Full Duplex (SBFD)-type time-domain resource, and the second type of time-domain resource is a non-SBFD-type time-domain resource.

7. The method of any one of claims 2 to 6, wherein the target parameter set is applied to each repetition of the uplink channel.

8. The method of any one of claims 1 to 7, wherein the target parameter set is determined according to one of at least two determination manners based on first information or a first condition; the at least two determination manners include a first determination manner and a second determination manner, the first determination manner is based on a first repetition of the uplink channel; and the second determination manner is based on the first parameter set.

9. The method of claim 8, wherein the first information is configured or indicated by a network device, or the first information is agreed in a communication protocol.

10. The method of claim 9, wherein the first information is configured or indicated by the network device based on a type of uplink control information (UCI) carried by the uplink channel; or the first information is agreed in the communication protocol based on the type of the UCI carried by the uplink channel.

11. The method of claim 10, wherein determining the target parameter set based on the first information according to one of the at least two determination manners comprises:
determining the target parameter set according to the first determination manner when the type of the UCI is Channel-State Information (CSI) or a Scheduling Request (SR); or
determining the target parameter set according to the second determination manner when the type of the UCI is a Hybrid Automatic Repeat reQuest ACKnowledgment (HARQ-ACK).

12. The method of claim 8, wherein the first condition relates to at least one of a first quantity and a second quantity; the first quantity is a number of time-domain units included in a first time-domain resource range, the second quantity is a number of time-domain units included in a second time-domain resource range, the first time-domain resource range is a time-domain resource range occupied for repetitions of the uplink channel determined using the first determination manner, the second time-domain resource range is a time-domain resource range occupied for repetitions of the uplink channel determined using the second determination manner, and the time-domain resource range is a range from a starting time-domain resource corresponding to the first repetition of the uplink channel to an ending time-domain resource corresponding to a last repetition of the uplink channel.

13. The method of claim 1, wherein the target parameter set is determined based on a type of a time-domain resource corresponding to each repetition of the uplink channel.

14. The method of claim 13, wherein when a type of a time-domain resource corresponding to an i-th repetition of the uplink channel is the first type of time-domain resource, the target parameter set is determined as the first parameter set; and/or, when the type of the time-domain resource corresponding to the i-th repetition of the uplink channel is the second type of time-domain resource, the target parameter set is determined as the second parameter set, wherein i is a positive integer.

15. The method of claim 13, wherein the terminal device expects at least one of:
a first uplink channel resource and a second uplink channel resource occupy an equal number of resource units; a number of repetitions corresponding to the first uplink channel resource and a number of repetitions corresponding to the second uplink channel resource are the same; part of parameters in the first parameter set and the second parameter set are the same; or the part of parameters in the first parameter set and the second parameter set come from a same uplink channel configuration,
wherein the first uplink channel resource is determined according to the first parameter set, and the second uplink channel resource is determined according to the second parameter set.

16. The method of claim 13, wherein the terminal device does not expect at least one of:
a first uplink channel resource and a second uplink channel resource occupy unan equal number of resource units; a number of repetitions corresponding to the first uplink channel resource and a number of repetitions corresponding to the second uplink channel resource are not the same; part of parameters in the first parameter set and the second parameter set are not the same; or the part of parameters in the first parameter set and the second parameter set come from different uplink channel configurations,
wherein the first uplink channel resource is determined according to the first parameter set, and the second uplink channel resource is determined according to the second parameter set.

17. The method of claim 15 or 16, wherein the part of parameters comprise at least one of: a number of time-domain resources; a number of Resource Blocks (RBs); a code rate; an uplink channel format; or a number of repetitions.

18. The method of any one of claims 1 to 17, wherein the target parameter set comprises at least one of following parameters: an uplink channel resource set; an uplink channel resource; an uplink channel format; a time-domain parameter set; a frequency-domain parameter set; a repetition parameter set; or a code rate parameter.

19. An uplink channel resource determining method, performed by a terminal device, the method comprising:
determining a target uplink channel resource among uplink channel resources determined through a first parameter set and/or a second parameter set,
wherein the first parameter set corresponds to a first type of time-domain resource, and the second parameter set corresponds to a second type of time-domain resource.

20. The method of claim 19, wherein determining the target uplink channel resource among uplink channel resources determined through the first parameter set comprises:
determining a first target uplink channel resource according to an uplink channel resource identification (ID) among the uplink channel resources determined through the first parameter set.

21. The method of claim 20, further comprising:
when the first target uplink channel resource does not satisfy a second condition, determining a second target uplink channel resource according to the uplink channel resource ID among the uplink channel resources determined through the second parameter set.

22. The method of claim 21, wherein the first type of time-domain resource comprises a SubBand Full Duplex (SBFD) symbols; the second type of time-domain resource comprises non-SBFD symbols; and the second condition comprises: the first target uplink channel resource entirely occupies the SBFD symbols and a corresponding frequency-domain resource is completely within an uplink subband, or the first target uplink channel resource entirely occupies the non-SBFD symbols.

23. The method of claim 19, wherein determining the target uplink channel resource among the uplink channel resources determined through the first parameter set and/or the second parameter set comprises:
determining a first target uplink channel resource according to an uplink channel resource ID among the uplink channel resources determined through the first parameter set;
determining a second target uplink channel resource according to the uplink channel resource ID among the uplink channel resources determined through the second parameter set; and
determining the target uplink channel resource from the first target uplink channel resource and the second target uplink channel resource according to a third determination manner.

24. The method of claim 23, wherein the third determination manner comprises at least one of: determining an uplink channel resource having an earlier time-domain resource as the target uplink channel resource; determining an uplink channel resource occupying a largest or smallest number of time-domain resources as the target uplink channel resource; or determining an uplink channel resource overlapping with another uplink channel resource as the target uplink channel resource.

25. The method of claim 24, wherein the earlier time-domain resource comprises at least one of: an earlier start time, or an earlier end time.

26. The method of claim 20 or 21 or 23, wherein the uplink channel resource ID is configured or indicated by a network device.

27. An uplink channel receiving method, performed by a network device, the method comprising:
receiving an uplink channel according to a target parameter set,
wherein the uplink channel is an uplink channel repeatedly transmitted by a terminal device, the target parameter set is a first parameter set and/or a second parameter set, the first parameter set is associated with a first type of time-domain resource, and the second parameter set is associated with a second type of time-domain resource.

28. The method of claim 27, wherein the target parameter set is determined based on a first repetition of the uplink channel.

29. The method of claim 28, wherein the target parameter set is determined based on a type of a time-domain resource for the first repetition.

30. The method of claim 28, wherein the first repetition is: a configured or indicated first repetition of the uplink channel by the network device; or a first actual repetition of the uplink channel.

31. The method of claim 27, wherein the target parameter set is determined based on the first parameter set.

32. The method of claim 27, wherein the first type of time-domain resource is a SubBand Full Duplex (SBFD)-type time-domain resource, and the second type of time-domain resource is a non-SBFD-type time-domain resource.

33. The method of any one of claims 28 to 32, wherein the target parameter set is applied to each repetition of the uplink channel.

34. The method of any one of claims 27 to 33, wherein the target parameter set is determined according to one of at least two determination manners based on first information or a first condition; the at least two determination manners include a first determination manner and a second determination manner, the first determination manner is based on a first repetition of the uplink channel; and the second determination manner is based on the first parameter set.

35. The method of claim 34, wherein the first information is configured or indicated by the network device, or the first information is agreed in a communication protocol.

36. The method of claim 35, wherein the first information is configured or indicated by the network device based on a type of uplink control information (UCI) carried by the uplink channel; or the first information is agreed in the communication protocol based on the type of the UCI carried by the uplink channel.

37. The method of claim 36, wherein determining the target parameter set based on the first information according to one of the at least two determination manners comprises:
determining the target parameter set according to the first determination manner when the type of the UCI is CSI or SR; or
determining the target parameter set according to the second determination manner when the type of the UCI is Hybrid Automatic Repeat reQuest ACKnowledgment (HARQ-ACK).

38. The method of claim 34, wherein the first quantity is a number of time-domain units included in a first time-domain resource range, the second quantity is a number of time-domain units included in a second time-domain resource range, the first time-domain resource range is a time-domain resource range occupied for repetitions of the uplink channel determined using the first determination manner, the second time-domain resource range is a time-domain resource range occupied for repetitions of the uplink channel determined using the second determination manner, and the time-domain resource range is a range from a starting time-domain resource corresponding to the first repetition of the uplink channel to an ending time-domain resource corresponding to a last repetition of the uplink channel.

39. The method of claim 27, wherein the target parameter set is determined based on a type of a time-domain resource corresponding to each repetition of the uplink channel.

40. The method of claim 39, wherein when a type of a time-domain resource corresponding to an i-th repetition of the uplink channel is the first type of time-domain resource, the target parameter set is determined as the first parameter set; and/or, when the type of the time-domain resource corresponding to the i-th repetition of the uplink channel is the second type of time-domain resource, the target parameter set is determined as the second parameter set, wherein i is a positive integer.

41. The method of any one of claims 27 to 40, wherein the target parameter set comprises at least one of following parameters: an uplink channel resource set; an uplink channel resource; an uplink channel format; a time-domain parameter set; a frequency-domain parameter set; a repetition parameter set; or a code rate parameter.

42. An uplink channel resource indicating method, performed by a network device, the method comprising:
sending an uplink channel resource identification (ID), wherein the uplink channel resource ID is used to indicate a target uplink channel resource among uplink channel resources determined through a first parameter set and/or a second parameter set,
wherein the first parameter set corresponds to a first type of time-domain resource, and the second parameter set corresponds to a second type of time-domain resource.

43. The method of claim 42, wherein the uplink channel resource ID is used to indicate a first target uplink channel resource among the uplink channel resources determined through the first parameter set.

44. The method of claim 43, wherein the uplink channel resource ID is used to: when the first target uplink channel resource does not satisfy a second condition, indicate a second target uplink channel resource among the uplink channel resources determined through the second parameter set.

45. The method of claim 44, wherein the first type of time-domain resource comprises SubBand Full Duplex (SBFD) symbols; the second type of time-domain resource comprises non-SBFD symbols; and the second condition comprises: the first target uplink channel resource entirely occupies the SBFD symbols and a corresponding frequency-domain resource is completely within an uplink subband, or the first target uplink channel resource entirely occupies the non-SBFD symbols.

46. The method of claim 42, wherein the uplink channel resource ID is used to indicate a first target uplink channel resource among the uplink channel resources determined through the first parameter set, and the uplink channel resource ID is further used to indicate a second target uplink channel resource among the uplink channel resources determined through the second parameter set;
the method further comprising: indicating the target uplink channel resource from the first target uplink channel resource and the second target uplink channel resource through a first indication manner.

47. The method of claim 46, wherein the first indication manner comprises at least one of:
indicating an uplink channel resource having an earlier time-domain resource as the target uplink channel resource; indicating an uplink channel resource occupying a largest or smallest number of time-domain resources as the target uplink channel resource; or indicating an uplink channel resource overlapping with another uplink channel resource as the target uplink channel resource.

48. The method of claim 47, wherein the earlier time-domain resource comprises at least one of: an earlier start time, or an earlier end time.

49. An uplink channel transmission apparatus, comprising:
a transmission module, configured to transmit the uplink channel according to a target parameter set, wherein the uplink channel is a repeatedly transmitted uplink channel, the target parameter set is a first parameter set and/or a second parameter set, the first parameter set is associated with a first type of time-domain resource, and the second parameter set is associated with a second type of time-domain resource.

50. An uplink channel resource determining apparatus, comprising:
a determining module, configured to determine a target uplink channel resource among uplink channel resources determined through a first parameter set and/or a second parameter set, wherein the first parameter set corresponds to a first type of time-domain resource, and the second parameter set corresponds to a second type of time-domain resource.

51. An uplink channel receiving apparatus, comprising:
a receiving module, configured to receive an uplink channel according to a target parameter set, wherein the uplink channel is an uplink channel repeatedly transmitted by a terminal device, the target parameter set is a first parameter set and/or a second parameter set, the first parameter set is associated with a first type of time-domain resource, and the second parameter set is associated with a second type of time-domain resource.

52. An uplink channel resource indicating apparatus, comprising:
a sending module, configured to send an uplink channel resource identification (ID), wherein the uplink channel resource ID is used to indicate a target uplink channel resource among uplink channel resources determined through a first parameter set and/or a second parameter set, wherein the first parameter set corresponds to a first type of time-domain resource, and the second parameter set corresponds to a second type of time-domain resource.

53. A terminal device, comprising: a processor; a transceiver connected to the processor; a memory storing executable instructions of the processor; wherein the processor is configured to load and execute the executable instructions to implement the uplink channel transmission method of any one of claims 1 to 18, or the uplink channel resource determining method of any one of claims 19 to 26.

54. A network device, comprising: a processor; a transceiver connected to the processor; a memory storing executable instructions of the processor; wherein the processor is configured to load and execute the executable instructions to implement the uplink channel receiving method of any one of claims 27 to 41, or the uplink channel resource indicating method of any one of claims 42 to 48.

55. A non-transitory computer-readable storage medium, having stored at least one program, the at least one program, when loaded and executed by a processor, causing the processor to implement the uplink channel transmission method of any one of claims 1 to 18, or the uplink channel resource determining method of any one of claims 19 to 26, or the uplink channel receiving method of any one of claims 27 to 41, or the uplink channel resource indicating method of any one of claims 42 to 48.

56. A chip, comprising a programmable logic circuit and/or program instructions, wherein when the chip runs on a terminal device or a network device, the chip is configured to implement the uplink channel transmission method of any one of claims 1 to 18, or the uplink channel resource determining method of any one of claims 19 to 26, or the uplink channel receiving method of any one of claims 27 to 41, or the uplink channel resource indicating method of any one of claims 42 to 48.

57. A computer program product, comprising computer instructions that are stored in a computer-readable storage medium from which a processor obtains the computer instructions and the processor executes the computer instructions to implement the uplink channel transmission method of any one of claims 1 to 18, or the uplink channel resource determining method of any one of claims 19 to 26, or the uplink channel receiving method of any one of claims 27 to 41, or the uplink channel resource indicating method of any one of claims 42 to 48.
